(19) **Europäisches Patentamt**
**European Patent Office**
**Office européen des brevets**

(11) **EP 1 454 163 B1**

(12) **EUROPÄISCHE PATENTSCHRIFT**

(45) Veröffentlichungstag und Bekanntmachung des Hinweises auf die Patenterteilung:
**09.05.2012   Patentblatt 2012/19**

(21) Anmeldenummer: **02804873.4**

(22) Anmeldetag: **04.12.2002**

(51) Int Cl.:
***G01S 13/84*** *(2006.01)*

(86) Internationale Anmeldenummer:
**PCT/EP2002/013751**

(87) Internationale Veröffentlichungsnummer:
**WO 2003/052455 (26.06.2003 Gazette 2003/26)**

(54) **KOMMUNIKATIONSSYSTEM MIT EINEM ERSTEN UND EINEM ZWEITEN SENDEEMPFÄNGER UND VERFAHREN ZU DESSEN  BETRIEB**

COMMUNICATION SYSTEM COMPRISING A FIRST AND SECOND TRANSCEIVER AND METHOD FOR THE OPERATION THEREOF

SYSTEME DE COMMUNICATION COMPORTANT UN PREMIER ET UN DEUXIEME RECEPTEUR D'EMISSION ET PROCEDE D'UTILISATION

(84) Benannte Vertragsstaaten:
**AT BE DE FR GB IT**

(30) Priorität: **14.12.2001   DE 10161507**

(43) Veröffentlichungstag der Anmeldung:
**08.09.2004   Patentblatt 2004/37**

(73) Patentinhaber:
• **austriamicrosystems AG**
**8141 Unterpremstätten (AT)**
• **Marquardt GmbH**
**78604 Rietheim-Weilheim (DE)**

(72) Erfinder:
• **SCHULTES, Gerhard**
**A-8141 Unterpremstätten (AT)**

• **WEISSER Dietmar**
**78532 Tuttlingen (DE)**

(74) Vertreter: **Epping - Hermann - Fischer**
**Patentanwaltsgesellschaft mbH**
**Postfach 20 07 34**
**80007 München (DE)**

(56) Entgegenhaltungen:
**EP-A- 1 107 162     EP-A2- 1 152 109**
**WO-A-01/10154     DE-A- 4 326 263**
**DE-C- 4 409 167     US-A- 5 220 332**
**US-A- 5 661 460**

**Beschreibung**

Die vorliegende Erfindung betrifft ein Kommunikationssystem mit einem ersten Sendeempfänger und mit einem zweiten Sendeempfänger, welche durch einen Übertragungskanal bi-direktional miteinander gekoppelt sind, sowie ein Verfahren zum Betrieb des Kommunikationssystems.

Kommunikationssysteme, beispielsweise kontaktlose Identifikationssysteme, weisen üblicherweise zwei Sendeempfänger auf. Der erste Sendeempfänger wird dabei als Basisstation, ein weiterer Sendeempfänger je nach Ausführung als Mobilstation, Transponder oder Tag bezeichnet. Derartige Systeme können zur Identifizierung, beispielsweise im Bereich der Logistik, zur Warenflußkontrolle, zur Zutrittskontrolle beispielsweise zu einem Geldautomatenbereich einer Bank, zum Betätigen der Zentralverriegelung eines Kraftfahrzeugs bei Annähern oder Entfernen einer Person zu bzw. vom Fahrzeug etc. eingesetzt werden.

Dabei ist es einerseits erwünscht, einen ausreichend großen Arbeitsbereich des Kommunikationssystems zu gewährleisten, um eine komfortable Benutzung zu ermöglichen. Anderseits jedoch ist es erforderlich, die Reichweite des Kommunikationssystems zu begrenzen, um eine ungewollte Identifizierung von Benutzern zu vermeiden, die zu weit entfernt sind. Weiterhin ist es bei derartigen Systemen wünschenswert, daß es keine gegenständlichen Mittel gibt, um eine derartige Begrenzung des Arbeitsbereiches zu überschreiten oder zu umgehen. Es gilt also, eine nicht autorisierte Identifizierung ohne Anwesenheit des berechtigten Benutzers zu vermeiden. Zusätzlich sollte das Kommunikationssystem nahe an der Grenze des Arbeitsbereiches bezüglich der Entfernung von Basis- und Mobilstation voneinander zuverlässig arbeiten.

Zur Begrenzung des Arbeitsbereiches, also der Reichweite von Kommunikationssystemen, ist es üblich, die Sendeleistung, insbesondere die Sendeleistung der Basisstation, zu begrenzen und weiterhin eine geeignete Hochfrequenz-Arbeitsbandbreite auszuwählen, um eine ausreichend definierte Ausbreitung der Funkwellen sicher zu stellen. Dennoch ist gemäß diesem Prinzip der Arbeitsbereich verhältnismäßig ungenau definiert bzw. begrenzt. Zudem ist die Reichweite auf Grund von Reflektionen, Abschattungen, undefinierten Antennencharakteristiken, Abschirmungen der Mobilstation, des Transponders oder des Tags etc. abhängig von der Zeit und vom Benutzer und leidet prinzipbedingt in der Nähe des Grenzbereiches der Reichweite unter einer schlechten Übertragungsqualität.

Weiterhin besteht bei den bekannten Kommunikationssystemen, insbesondere bei den bekannten kontaktlosen Identifikationssystemen, ein Sicherheitsproblem, welches darin liegt, daß durch eine künstliche oder zusätzliche Verlängerung des Übertragungskanals, beispielsweise mittels eines sogenannten Link Prolongation Transponders, LPT, eine unautorisierte Identifizierung erzielt werden könnte, mit allen denkbaren negativen Folgen.

Ein derartiger Angriff auf ein Identifizierungssystem gemäß LPT könnte beispielsweise so ausgeführt sein, daß bei einer Beabstandung von Basis- und Mobilstation derart, daß mit den vorhandenen Kommunikationseinrichtungen in Basisstation und Mobilstation keine Kommunikation bzw. Übertragung von Daten aufgrund der zu geringen Sendeleistung möglich ist, ein Link Prolongation Transponder eingeführt wird. Dieser umfaßt zwei Teile, einerseites einen Basisteil, der nahe bei der Basisstation die Sendesignale der Basisstation empfängt und in ein anderes Frequenzband umsetzt. Diese umgesetzten Signale werden jedoch mit einer bedeutend höheren Sendeleistung über eine große Distanz zu einem Mobilteil des LPT gesendet, der sich nahe beim Mobilteil des Identifizierungssystems befindet. Dieses Mobilteil des LPT wandelt das umgesetzte Signale zurück in das ursprüngliche Frequenzband und sendet dieses zur Mobilstation oder dem Transponder, welcher es auf einem ausreichend großen Leistungsniveau empfängt und daher keine Kenntnis davon erhält, daß er sich nicht nahe bei der Basisstation befindet. Entsprechendes geschieht in umgekehrter Übertragungsrichtung.

Durch einen derartigen Angriff mittels LPT kann die Basisstation gezwungen werden, die Mobilstation gültig zu identifizieren, selbst dann, wenn sie sich nicht nahe beieinander befinden. Hierdurch könnte eine Folgehandlung erzwungen werden, beispielsweise das Entriegeln einer Tür, welches normalerweise nur in der nahen Gegenwart von Transponder oder Mobilteil erfolgen sollte.

Das Dokument EP 1 152 109 A2 zeigt ein Zugangssystem für Kraftfahrzeuge, bei dem die Taktsignale von Zentraleinheit und Identifikationseinrichtung miteinander synchronisiert sind.

US 5,661,460 und US 5,220,332 betreffen ein Abstandsbestimmungs- bzw. Alarmsystem.

Es ist Aufgabe der vorliegenden Erfindung, ein eingangs beschriebenes Kommunikationssystem so weiterzubilden, daß bei guter Übertragungsqualität im Grenzbereich der Reichweite zusätzlich eine signalstärkeunabhängige Begrenzung der Reichweite ermöglicht ist, sowie ein Verfahren zu dessen Betrieb mit verbesserter Betriebssicherheit anzugeben.

Erfindungsgemäß wird die Aufgabe bezüglich des Kommunikationssystems gelöst durch eine Vorrichtung zur Messung der Signallaufzeit über den Übertragungskanal zur Begrenzung der Reichweite des Kommunikationssystems.

Sendeempfänger werden üblicherweise auch als Transceiver bezeichnet.

Dem beschriebenen Prinzip liegt die Erkenntnis zu Grunde, daß der beschriebene Angriff auf das Kommunikationssystem mittels LPT eine unvermeidliche, zusätzliche Verzögerung der Signalübertragung, also eine zusätzliche Signallaufzeit, zwischen den Sendeempfängern einführt, die abhängig ist zum einen von der geometrischen Länge der Verlängerung des Übertragungskanals und zum anderen von der Signalausbreitungsgeschwindigkeit, beispielsweise der Lichtgeschwindigkeit, sowie von der Verarbeitungszeit im Transponder.

Gegenstand der Erfindung ist es, die Signallaufzeit über den bidirektionalen Übertragungskanal zwischen erstem und zweitem. Sendeempfänger einschließlich LPT zu messen, um zuverlässig eine zusätzliche Verlängerung des Übertragungskanals, welche ungewollt ist, auszuschließen.

Die ebenfalls als meßbar denkbare Signalverzögerung im angreifenden Transponder selbst könnte theoretisch dadurch zu Null gemacht werden, daß der angreifende Transponder unendlich breitbandig ist.

Gemäß dem vorliegenden Prinzip wird also die Signallaufzeit zwischen dem ersten und dem zweiten Sendeempfänger gemessen. Dieses Meßergebnis kann zur exakten Berechnung des Abstandes zwischen erstem und zweitem Sendeempfänger herangezogen werden.

Als zweiter Sendeempfänger kann dabei beispielsweise eine Mobilstation, ein aktiver Transponder oder ein Tag vorgesehen sein.

Der so gewonnene, aktuelle Abstand zwischen erstem und zweitem Sendeempfänger kann dazu verwendet werden, eine vom Sendesignalpegel unabhängige Begrenzung der Reichweite des Übertragungssystems bezüglich der Übertragung von Nutzdaten zwischen erstem und zweitem Sendeempfänger vorzusehen.

Weiterhin kann mit dem vorgeschlagenen Prinzip sichergestellt werden, daß sich der zweite Sendeempfänger innerhalb einer vorbestimmten Distanz vom ersten Sendeempfänger während einer Übertragung von Daten zwischen erstem und zweitem Sendeempfänger befindet, um eine unerwünschte Kommunikation zwischen erstem und zweitem Sendeempfänger, beispielsweise durch künstliche Verlängerung des Übertragungskanals, zu vermeiden. Hierdurch wird eine eingangs beschriebene, sogenannte Transponderattacke oder Link Prolongation Transponder Attack, LPTA, vermieden.

Nachfolgend beschriebene Weiterbildungen des erfindungsgemäßen Prinzips zeigen zusätzliche Sicherheitsmerkmale auf, um kombinierte Angriffe auf das Kommunikationssystem abzuwehren, die sowohl eine kurze als auch eine lange Schleife bei der Signalübertragung benutzen, und als sogenannte Long- and Short-Loop Link Prolongation Transponder Attacks bezeichnet werden.

Das vorgeschlagene Prinzip findet beispielsweise in kontaktlosen Zutrittskontrollsystemen Anwendung, beispielsweise, aber nicht beschränkt auf Kraftfahrzeuge, Sicherheitsbereiche in Gebäuden etc., wo sichergestellt werden muß, daß sich der Besitzer oder Träger des zweiten Sendeempfängers innerhalb eines bestimmten Abstandes zu dem Eingangsbereich, den er benutzen bzw. überwinden will, befindet.

Weiterhin kann das beschriebene Prinzip Anwendung finden in kontaktlosen Identifikationssystemen, beispielsweise, aber nicht beschränkt auf Geldautomaten wie Bargeldautomaten, wo sichergestellt werden muß, daß sich der Besitzer oder Träger des zweiten Sendeempfängers innerhalb eines vorbestimmten Abstandsbereiches zu dem Objekt befindet, welches ihn zu identifizieren hat.

Ein weiterer Anwendungsbereich des beschriebenen Prinzips liegt in schnurlosen Sicherheitssystemen mit mittlerer Reichweite im sozialen Bereich, wie sie beispielsweise in Krankenhäusern oder beim Strafvollzug zur Anwendung kommen können. Dort ist sicherzustellen, daß sich der Träger eines Transponders innerhalb eines vorbestimmten Abstandes von einer Kontrollstelle befindet.

Weiterhin ist das vorliegende Prinzip bei Kommunikationssystemen anwendbar, wo ein Übertragungsbereich oder Arbeitsbereich erwünscht ist mit definierter Beschränkung bezüglich des Abstandes des ersten vom zweiten Sendeempfängers, beispielsweise, aber nicht beschränkt auf LAN (Local Area Network-Systeme), Fernbedienungssysteme etc.

Auch die Abstandsmessung selbst ist ein möglicher Anwendungsbereich des Kommunikationssystems gemäß dem vorgeschlagenen Prinzip, bei dem die elektrische Länge eines Übertragungsmediums oder Übertragungskanals bestimmt werden soll, beispielsweise im freien Raum, bei Kabeln, bei Koaxialkabeln, und bei optischen Faserübertragungsstrecken mit aus betrieblichen Gründen verhältnismäßig geringer Bandbreite und einer bandbegrenzten Meßmethode.

Der Übertragungskanal zwischen erstem und zweitem Sendeempfänger kann ein Hochfrequenz-Funkkanal sein, ebenso auch eine optische Strecke wie beispielsweise eine Laser-Richt-übertragung oder andere Übertragungskanäle mit einer meßbaren Signallaufzeit.

Das vorgestellte Prinzip ist unabhängig vom auf dem Übertragungskanal eingesetzten Modulationsverfahren. Grundsätzlich ist jedes zeitkontinuierliche Modulationsverfahren geeignet, insbesondere, jedoch nicht beschränkt auf solche, bei dienen eine 1010-Bitfolge oder ein rechteck- oder sinusförmiges Signal mit einer Modulationsfrequenz einsetzbar ist. Solche Verfahren sind beispielsweise Phasenumtastung (Frequency Shift Keying, FSK), auch gefiltert (FFSK), Frequenzmodulation (Frequency Modulation, FM), Zweiphasenumtastung (Bi-Phase Shift Keying, BPSK), Amplitudenumtastung (Amplitude Shift Keying, ASK) und Amplitudenmodulation (Amplitude Modulation, AM).

Gemäß einer vorteilhaften Weiterbildung der vorliegenden Erfindung weist das Kommunikationssystem ein Mittel zur Berechnung des Abstandes zwischen erstem und zweitem Sendeempfänger in Abhängigkeit von der Signallaufzeit auf, welches mit der Vorrichtung zur Messung der Signallaufzeit gekoppelt ist und welches das Kommunikationssystem in einen ersten Zustand versetzt, wenn der berechnete Abstand kleiner oder gleich einem vorgebbaren Abstand ist und das Kommunikationssystem in einen zweiten Zustand versetzt, wenn der berechnete Abstand größer als der vorgegebene Abstand ist.

Gemäß der beschriebenen Weiterbildung hängt die Betriebsart des Kommunikationssystem demnach davon ab, ob der durch Messung der Signallaufzeit ermittelte Abstand zwischen erstem und zweitem Sendeempfänger, d. h. die elektrische Länge des Übertragungskanals, kleiner, gleich oder größer als ein vorgegebener Abstand der Sendeempfänger voneinander ist.

Für das Ablegen der Abstandsgrenze kann ein Speicherbaustein vorgesehen sein, der mit dem Mittel zur Berechnung des Abstandes zwischen erstem und zweitem Sendeempfänger gekoppelt ist.

Gemäß einer weiteren, vorteilhaften Ausführungsform der vorliegenden Erfindung erfolgt eine Übertragung von Nutzdaten über den Übertragungskanal oder über einen separaten Nutzdatenkanal, der ersten und zweiten Sendeempfänger zur Übertragung von Nutzdaten koppelt, in Abhängigkeit davon, ob das Kommunikationssystem in den ersten oder in den zweiten Zustand versetzt ist.

Abhängig von der oben beschriebenen Betriebsart des Kommunikationssystems, welche wiederum davon abhängt, ob der Abstand des ersten und zweiten Sendeempfängers voneinander eine vorgegebene Grenze überschreitet, kann gemäß der beschriebenen Weiterbildung die Übertragung von Nutzdaten zwischen erstem und zweitem Sendeempfänger unterbrochen oder verändert werden. Hierdurch kann in einfacher Weise verhindert werden, daß bei Überschreitung einer Distanzgrenze und trotz ausreichender Übertragungsleistung eine durch die Anwesenheit des zweiten Sendeempfängers auszulösende Folgehandlung, beispielsweise das Entriegeln einer Tür, durchgeführt wird.

Gemäß einer weiteren, vorteilhaften Ausführungsform der vorliegenden Erfindung ist das Kommunikationssystem ein kontaktloses Identifizierungssystem und/oder ein kontaktloses Zutritt-Kontrollsystem, mit einer Vergleichseinrichtung, die mit dem ersten Sendeempfänger gekoppelt ist und die einen vom zweiten Sendeempfänger mittels einer Nutzdatenübertragung abgefragten Identifizierungscode mit einer Menge von vorbestimmten Identifizierungscodes vergleicht.

Die beschriebene Kombination der Vergleichseinrichtung zur Identifizierung mit der Distanzmessung ermöglicht beispielsweise bei Zutrittskontrollsystemen von Kraftfahrzeugen zum einen, daß nur berechtigte Benutzer Zutritt zum Kraftfahrzeug durch Entriegeln der Türen erhalten und zum anderen, daß dies nur innerhalb einer vorbestimmten oder vorbestimmbaren Distanz des Benutzers, der die zweite Sendeempfangseinrichtung trägt, vom ersten Sendeempfänger, der in diesem Fall im Kraftfahrzeug eingebaut ist, erfolgt.

Gemäß einer weiteren, bevorzugten Ausführungsform der vorliegenden Erfindung umfaßt das Kommunikationssystem eine Anzeigeeinheit zum Anzeigen des Wertes des berechneten Abstandes.

Die Anzeigeeinheit dient dabei bei der beschriebenen Wieterbildung des Kommunikationssystems zu einem Abstandsmeßsystem zum Anzeigen der gemäß vorliegenden Prinzip erfaßten elektrischen Länge des Übertragungskanals zwischen erstem und zweitem Sendeempfänger.

In einer weiteren, bevorzugten Ausführungsform der vorliegenden Erfindung ist der erste Sendeempfänger eine Feststation und der zweite Sendeempfänger ein Mobilteil. Als Mobilteil ist dabei sowohl beispielsweise ein Mobilteil eines schnurlosen Telefonapparates, eines Mobilfunktelefons oder einer Fernbedienung etc. verstanden, aber auch ein aktiver Transponder oder Tag, wie er beispielsweise zur Warenflußsteuerung, zur Warenflußkontrolle, zur Identifizierung oder Authentifizierung von Personen etc. verwendet wird, beispielsweise als Zutrittskontrollsystem für Kraftfahrzeuge, Blanken, Geldautomaten, Paketflußsteuerung in Postverteilzentren oder Gepäckverteilung in Flughäfen, Warenerfassung an Supermarktkassen etc.

Gemäß einer hierzu alternativen, weiteren vorteilhaften Ausführungsform der vorliegenden Erfindung sind erster und zweiter Sendeempfänger je ein Mobilteil. Als Mobilteile sind dabei wiederum die oben beschriebenen Mobilteile verstanden. Neben dem zweiten Sendeempfänger kann gemäß vorgeschlagener Ausführungsform auch der erste Sendeempfänger ein mobiler, das heißt ein beweglicher Sendeempfänger sein.

Gemäß einer weiteren, vorteilhaften Ausführungsform der vorliegenden Erfindung umfaßt das Kommunikationssystem ein Mittel zur Laufzeitmessung mittels aktivem Abstands-Radar.

Die Signallaufzeit wird demnach bevorzugt durch Erfassen einer Signal-Umlaufzeit vom ersten zum zweiten und wieder zurück zum ersten Sendeempfänger ermittelt.

Unter aktivem Abstands-Radar ist dabei eine Vorrichtung zur Messung der Distanz zwischen erstem und zweitem Sendeempfänger verstanden, wobei der zweite Sendeempfänger nicht nur das vom ersten Sendeempfänger ausgesendete Signal spiegelt, also passiv reflektiert, sondern aktiv verarbeitet und kurze Zeit später ein weiteres Signal zurück zum ersten Sendeempfänger übermittelt. Der Begriff Radar ist eine Abkürzung für RAdio Detection And Ranging. Radarsysteme bestimmen die Position von Objekten, im vorliegenden Fall den Abstand des zweiten vom ersten Sendeempfänger, die üblicherweise als Zielobjekte bezeichnet werden, mittels abgestrahlter hochfrequenter Energie, welche von den Zielobjekten teilweise reflektiert werden. Dabei werden die Begriffe Primärradar und Sekundärradar benutzt, wobei Primärradar lediglich eine passive Reflektion bedeutet, während Sekundärradar ein zweites, rückstrahlendes Signal als Ergebnis eines Anstoßens des zweiten Sendeempfängers oder Transponders durch die ursprünglich vom

EP 1 454 163 B1

ersten Sendeempfänger ausgesendete hochfrequente Energie bewirkt.

Zur Abstandsmessung mittels aktivem Radar sind verschiedene Meßprinzipien gemäß vorliegendem Prinzip einsetzbar:

1. Impuls-Umlaufzeit-Messung,
2. Chirp-Transformation mit kontinuierlicher Frequenz,
3. Chirp-Transformation mit diskreter Frequenz und
4. Aktiver, frequenzmodulierter Dauerstrichradar (FM-CW).

Gemäß dem Prinzip der Umlaufzeitmessung wird das Zeitintervall bzw. die Verzögerungszeit zwischen einer ansteigenden oder abfallenden Flanke eines Pulses gemessen, der vom ersten zum zweiten Sendeempfänger und vom zweiten Sendeempfänger zurück zum ersten Sendeempfänger gesendet wird. Für ausreichende Auflösung ist eine hohe Bandbreite erforderlich. Bei diesem Prinzip können hohe, hochfrequente Puls-Transienten auftreten. Weiterhin wird eine Signalverarbeitung mit hoher Geschwindigkeit benötigt. Dieses Prinzip hat eine verhältnismäßig hohe Stromaufnahme. Die Meßgenauigkeit hängt stark von Mehrwegeausbreitung und Schaltkreislaufzeiten ab.

Bei dem Prinzip der Chirp-Transformation mit kontinuierlicher Frequenz sendet der erste Sendeempfänger ein Chirp-Signal aus, welches im zweiten Sendeempfänger mittels eines sogenannten Convolvers zu einem Impuls komprimiert wird. Dieser Impuls löst die Rückübertragung eines Chirp-Signals ausgehend vom zweiten Sendeempfänger aus, welches im ersten Sendeempfange ebenfalls mittels eines Convolvers zu einem Puls-Signal komprimiert wird. Die Umlaufzeit einschließlich Verzögerungen bei der Signalverarbeitung wird gemessen als Zeitintervall zwischen dem Start-Impuls und dem vom ersten Sendeempfänger empfangenen Impuls. Es ist eine verhältnismäßig aufwendige, aber hochgenaue Art der Laufzeitmessung. Es werden zwei kostenintensive und bezüglich ihrer Ausdehnungen große Convolver sowie eine hohe Signalbandbreite benötigt.

Bei der Chirp-Transformation mit diskreter Frequenz wird die Frequenzantwort des Übertragungsmediums gemessen und mittels inverser Fouriertransformation in den Zeitbereich transformiert, um die Länge des Übertragungsmediums zu berechnen. Dabei wird eine präzise eingestellte, breitbandige Frequenzquelle benötigt, welche einige diskrete Meßfrequenzen erzeugt, sowie zudem eine verhältnismäßig große Rechenleistung zur Auswertung des Ergebnisses.

Beim aktiven FM-CW-Radar wird im Gegensatz zum passiven Radar ein aktiver Reflektor verwendet. Erster und zweiter Sendeempfänger bilden eine schnelle, geschlossene Signalschleife für ein frequenzmoduliertes Signal, welches zweimal den Hochfrequenzkanal durchschreitet. Dies funktioniert solange gut, als keine große Mehrwegeausbreitung auftritt und solange das Signals an jeder Stelle der geschlossenen Meßschleife stark genug ist. Andernfalls leidet das Prinzip an starker Frequenzmodulation des aktiv reflektierenden zweiten Sendeempfängers, wodurch Konflikte beispielsweise mit den Empfehlungen der ETSI, European Telecommunications Standards Institute, auftreten. Außerdem erfordert die Signaltrennung einen hohen Aufwand, welcher auf Grund der gleichzeitigen Übertragung in Sende- und Empfangsrichtung im gleichen Frequenzband auftritt.

In Anwendungen des aktiven Abstandsradars mit kleiner oder mittlerer Reichweite liegt die Ausbreitungszeit des Signals über den Hochfrequenz-Übertragungskanal in der Größenordnung von oder ist größer als die Laufzeit des Signals innerhalb der Schaltkreise von erstem und zweitem Sendeempfänger zur Signalerkennung. Mit Vorteil haben alle vorgeschlagenen Prinzipien zur Realisierung eines aktiven Abstandsradars eine Implementierung einer Messung von Schaltkreislaufzeiten, d. h. von Signallaufzeiten in den verwendeten Schaltkreisen, zum Kompensieren der gruppenlaufzeitbedingten Phasenverzögerungen der Sende- und Empfängerschaltkreise.

Gemäß einer weiteren, vorteilhaften Weiterbildung der Erfindung weist das Kommunikationssystem ein erstes Meßsystem zur Messung einer ersten Signallaufzeit vom ersten Sendeempfänger zum zweiten Sendempfänger, ein zweites Meßsystem zur Messung einer zweiten Signallaufzeit vom zweiten Sendeempfänger zum ersten Sendeempfänger und eine Auswerteeinheit auf, welche aus erster und zweiter Signallaufzeit die Signallaufzeit über den Übertragungskanal ermittelt.

Gemäß dem vorgeschlagenen Meßprinzip ist sowohl im ersten, als auch im zweiten Sendeempfänger bevorzugt ein modulierbarer Hochfrequenzsender vorgesehen, sowie je ein Hochfrequenz-empfänger mit einem Ausgang zum Ableiten eines Modulationssignals, ein Modulationsgenerator sowie eine Phasenvergleichseinheit. Der Übertragungskanal des Kommunikationssystems ist dabei als Halb-Duplex-Kanal ausgebildet. Derartige Halb-Duplex-Systeme werden auch als Pingpong-Systeme bezeichnet.

Die Funktionsfähigkeit des vorgeschlagenen Meßprinzips ist allgemein unabhängig von der Art des verwendeten Modulationsverfahrens. Außerdem sind auch die Realisierungen der verwendeten Sende- und Empfangszweige in den Sendeempfängern nicht entscheidend für die prinzipielle Funktionsfähigkeit des vorgeschlagenen Prinzips, solange keine zu großen Signallaufzeiten und Jitter aus der Quantisierung oder anderen Signalverarbeitungsschritten bei der Modulation eingeführt werden.

Gemäß einer weiteren, bevorzugten Ausführung des Kommunikationssystems wird die Signallaufzeit über den Übertragungskanal in der Auswerteeinheit ermittelt durch Bildung des arithmetisch Mittelwertes aus erster und zweiter Signallaufzeit, wie oben beschrieben. Weiterhin wird der Abstand der Sendeempfänger voneinander ermittelt aus der Signallaufzeit über den Übertragungskanal multipliziert mit der Lichtgeschwindigkeit. Die Signallaufzeit über den Übertragungskanal und damit dessen elektrische Länge wird demnach ermittelt durch Halbieren der Umlaufzeit, wobei, wie später näher erläutert, Schaltkreis-Laufzeiten vor dem Halbieren herauszurechnen sind.

Je nach Übertragungsmedium können auch andere Signalausbreitungsgeschwindigkeiten als die Lichtgeschwindigkeit anzunehmen sein, normalerweise jedoch kann als Ausbreitungsgeschwindigkeit für Funkwellen in erster Nährung die Lichtgeschwindigkeit als hinreichend korrekt angenommen werden.

Gemäß einer weiteren, bevorzugten Ausführungsform der vorliegenden Erfindung weisen sowohl der erste als auch der zweite Sendeempfänger folgende Merkmale auf:

- Einen Sendezweig ausgebildet zum Senden eines mit einem Modulationssignal modulierten Signals über den Übertragungskanal an die Gegenstelle,
- einen Empfangszweig zum Empfangen eines von der Gegenstelle ausgesendeten, mit einem weiteren Modulationssignal modulierten Signals und
- eine Phasenvergleichseinrichtung zum Ermitteln eines der Phasenabweichung zwischen dem ausgesendeten und dem empfangenden Modulationssignal entsprechenden Zeitintervalls.

Als Gegenstelle ist dabei jeweils derjenige Sendeempfänger verstanden, der nicht derjenige ist, von dem das ursprüngliche Signal ausgesendet ist.

Entsprechend dem vorgeschlagenen Prinzip wird zunächst ein mit einem Modulationssignal moduliertes Signal vom ersten zum zweiten Sendeempfänger über den Übertragungskanal gesendet. Nach Eintreffen des modulierten Signals und dessen Empfang beim zweiten Sendeempfänger und nach einer bekannten zusätzlichen Verzögerungszeit im zweiten Sendeempfänger wird ein weiteres Modulationssignal vom zweiten zum ersten Sendeempfänger zurückgesendet.

Mit Vorteil erlaubt das beschriebene, erfindungsgemäße Prinzip die Verwendung zweier unterschiedlicher Taktphasenlagen insbesondere der Modulationssignale in den beiden Sendeempfängern, welche nicht miteinander synchronisiert zu sein brauchen. Es ist jedoch erforderlich, daß sich beide Sendeempfänger auf eine gemeinsame Modulationsfrequenz einigen oder zumindest eine bekannte Frequenzabweichung zwischen beiden Modulationsfrequenzen existiert. Die Modulationssignale zwischen erstem und zweitem Sendeempfänger müssen bei dem vorgestellten Prinzip also nicht phasengleich sein.

Mit anderen Worten können erster und zweiter Sendeempfänger je eine Zeitbasis haben, welche unabhängig voneinander sind. Damit können auch die Modulationssignale, die auf diesen Taktsignalen beruhen, eine zufällige Phasenlage zueinander haben.

Gemäß einer weiteren, bevorzugten Ausführungsform der vorliegenden Erfindung bestimmt die Auswerteeinheit im Falle gleicher Modulationsfrequenzen die Signallaufzeit über den Übertragungskanal unter Anwendung der Beziehungen

$$t_R = 1/2(t_B - T_M + t_T), \text{ falls gilt } t_B \geq (T_M - t_T)$$

bzw.

$$t_R = 1/2(t_B + t_T), \text{ falls gilt } t_B < (T_M - t_T),$$

mit

$T_M$ = Periodendauer des Modulationssignals,

$t_B$ = Zeitintervall, das der Phasenabweichung zwischen ausgesendetem und empfangenem Modulationssignal im ersten Sendeempfänger entspricht,

$t_T$ = Zeitintervall, das der Phasenabweichung zwischen ausgesendetem und empfangenem Modulationssignal im zweiten Sendeempfänger entspricht, und

$t_R$ = Signallaufzeit über den Übertragungskanal.

Die Zeitintervalle $t_B$, $t_T$, welche den Phasenabweichungen zwischen ausgesendetem und empfangenem Modulationssignal entsprechen werden, dabei von den Phasenvergleichseinrichtungen im ersten bzw. zweiten Sendeempfänger ermittelt.

Wie anhand der mathematischen Beschreibung der Ermittlung der Signallaufzeit über den Übertragungskanal erkennbar ist, kann die Signallaufzeit bei gleicher Modulationsfrequenz lediglich anhand der Kenntnis der Zeitintervalle $t_B$, $t_T$ zwischen ausgesendetem und empfangenem Modulationssignal, der Periodendauer $T_M$ des Modulationssignals und bei einer. Verzögerung im 2. Sendeempfänger, die einem ganzzahligen Vielfachen der Periodendauer $T_M$ entspricht, sowohl in erstem als auch im zweiten Sendeempfänger ermittelt werden. Es ist nicht erforderlich, die Phasenlage der Modulationssignale, die von erstem und zweitem Sendeempfänger ausgesendet werden, relativ zueinander zu kennen. Hierdurch müssen über den Übertragungskanal keinerlei Phaseninformationen für die Signallaufzeitmessung übermittelt werden, wodurch zum einen eine hohe Genauigkeit der Messung und zum anderen eine große Sicherheit gegen Angriffe auf eine korrekte Abstandsermittlung sichergestellt ist.

Gemäß einer weiteren, bevorzugten Ausführungsform der vorliegenden Erfindung weisen erster und zweiter Sendeempfänger je einen Modulationsgenerator zum Erzeugen des Modulationssignals auf, der ausgangsseitig zum einen zu-/abschaltbar mit dem Sendezweig und zum anderen mit der Phasenvergleichseinrichtung gekoppelt ist.

Zur Ermittlung der Phasenabweichungen zwischen ausgesendetem und empfangenem Modulationssignal sowohl im ersten als auch im zweiten Sendeempfänger ist die Phasenvergleichseinrichtung demnach jeweils mit dem Modulationsgenerator gekoppelt, der die Phasenlage des ausgesendeten Modulationssignals bereitstellt und weiterhin mit dem Empfangszweig des jeweiligen Sendeempfängers gekoppelt, der aus einem über den Übertragungskanal übermittelten Signals das Modulationssignal regeneriert.

Gemäß einer weiteren, bevorzugten Ausführungsform der vorliegenden Erfindung sind der erste und der zweite Sendeempfänger ausgelegt zum Betrieb mit Frequenzen des Modulationssignals, deren Wellenlänge größer ist als der zu messende Abstand zwischen erstem und zweitem Sendeempfänger.

Wenn zum Messen der Laufzeit Modulationssignale eingesetzt wären, deren Frequenz dergestalt ausgewählt ist, daß das Meßergebnis kleiner ist als die halbe Periodendauer des Modulationssignals, so ergibt sich eine Mehrdeutigkeit des Meßergebnisses. Alternativ zur vorgeschlagenen Messung mit Wellenlängen größer als der zu messende Abstand zwischen erstem und zweitem Sendeempfänger können auch mehrere Messungen bei verschiedenen Frequenzen durchgeführt werden, die zum einen eine hohe Genauigkeit und zum anderen ein hohes Maß an Eindeutigkeit durch Auswerten beider Meßwerte sicherstellen.

Gemäß einer weiteren, bevorzugten Ausführungsform der vorliegenden Erfindung ist eine Kalibriereinrichtung vorgesehen zum Erfassen von Signallaufzeiten in den Sende- und Empfangszweigen der beiden Sendeempfänger.

Wenn die Signallaufzeiten der Signalverarbeitungseinrichtungen in erstem und zweitem Sendeempfänger nicht vernachlässigbar klein sind gegenüber den Laufzeiten im Übertragungskanal, so ist es besonders vorteilhaft, diese Signallaufzeiten, welche durch Bauteile und Leitungswege bedingt sind, zu erfassen und bei der Ermittlung der Signallaufzeit über den Kanal zu berücksichtigen. Je nachdem, ob ein Zeit- oder Frequenzduplexverfahren eingesetzt wird, kann die Kalibrierung des Kommunikationssystem zeitgleich mit Teilmessungen zur Laufzeitbestimmung über den Kanal oder vor oder nach den Laufzeitmessungen erfolgen.

Gemäß einer weiteren, bevorzugten Ausführungsform der vorliegenden Erfindung weist der Empfangszweig der Sendeempfänger je einen Abwärts-Frequenzmischer auf, der in einer Kalibrier-Betriebsart des Kommunikationssystems ein von der Gegenstelle erzeugtes und unmoduliert übertragenes Lokaloszillator-Signal mischt mit einem im Sendezweig erzeugten modulierten Signal, wobei die Phasenvergleichseinrichtung in der Kalibrierbetriebsart die Phasenlagen von dem im Sendezweig erzeugten modulierten Signal vergleicht mit der Phasenlage eines am Ausgang des Abwärtsmischers bereitgestellten Signals, welches durch Frequenzmischung abgeleitet ist von einem von der Gegenstelle erzeugten, unmodulierten Lokaloszillator-Signal und von dem im Sendezweig erzeugten modulierten Signal.

Gemäß dem beschriebenen Kalibrierprinzip wird demnach für den Abwärts-Frequenzmischer im Sendezweig des jeweiligen Sendeempfängers ein moduliertes Lokaloszillatorsignal erzeugt und dem Frequenzmischer zugeführt. Weiterhin wird dem Frequenzmischer ein unmoduliertes Trägersignal zugeführt, welches jedoch nicht lokal im jeweiligen Sendeempfänger erzeugt wird, sondern vielmehr von der Gegenstelle, das heißt dem jeweils anderen Sendeempfänger, der demnach als ferner Quasi-Lokaloszillator arbeitet. In einer derartigen Kalibrier-Betriebsart wird folglich über den Übertragungskanal ein unmoduliertes Trägersignal übertragen. Die Phasenvergleichseinrichtung ermittelt lediglich die Phasenabweichung des im Sendeempfänger selbst erzeugten Modulationssignals und dem ausgangsseitig am Abwärtsmischer bereitgestellten Modulationssignals, welche ein Maß ist für die Signallaufzeit im jeweiligen Sendeempfänger. Insbesondere durch die Übertragung eines unmodulierten Trägersignals über den Übertragungskanal ergibt sich der Vorteil, daß die Kalibrierung der Sendeempfänger praktisch unbeeinflußt von Dispersionseffekten im Hochfrequenzkanal ist. Zudem kann eine derartige Kalibrierung bei exakt dem gleichen Empfangs-Leistungspegel erfolgen wie die wirkliche Messung zur Distanzbestimmung. Deshalb können bei der Kalibrierung Leistungspegel abhängige Verzögerungseffekte oder Laufzeiteffekte mit erfaßt und später kompensiert werden.

Gemäß einer alternativen, bevorzugten Ausführungsform der vorliegenden Erfindung weisen die Sendeempfänger je ein Dämpfungsglied mit einstellbarer Dämpfung auf, das in einer Kalibrier-Betriebsart des Sendeempfängers den Sendezweig ausgangsseitig mit dem Empfangszweige eingangsseitig koppelt. Das Dämpfungsglied koppelt Sende- und Empfangszweig dabei nahe an der Antenne miteinander, so daß auch die verhältnismäßig kleinen Signallaufzeiten im Sende-Leistungsverstärker, im sendeseitigen Tiefpaßfilter zum Herausfiltern höherer Harmonischer, im empfangsseitigen Spiegelfrequenzunterdrückungsfilter und Signallaufzeiten des rauscharmen Vorverstärkers mit berücksichtigt werden können.

Je nach verwendetem Duplexverfahren sind Sende- und Empfangszweig an eine Antenne mit einem Hochfrequenzschalter oder einem Duplexfilter oder einer Kobmination derselben gekoppelt, welche mittels des Dämpfungsgliedes mit einstellbarer Dämpfung überbrückt werden können.

Gemäß einer weiteren, bevorzugten Ausführungsform der vorliegenden Erfindung ist im Empfangszweig ein Heterodynempfänger vorgesehen, umfassend einen Abwärtsmischer, der ein empfangenes Signal auf eine Zwischenfrequenzebene heruntermischt mit nachgeschaltetem begrenzendem Verstärker und Frequenzdiskriminator.

Da das vorgestellte Kommunikationssystem und das Laufzeitmeßverfahren prinzipiell unabhängig von der Ausbildung der verwendeten Sendeempfänger sind, kann anstelle der heterodynen auch eine homodyne Empfangsarchitektur vorgesehen sein. Gemäß einer bevorzugten Weiterbildung der vorliegenden Erfindung ist die Phasenvergleichseinrichtung ein Vier-Quadranten-Phasendetektor.

Das Vorsehen eines Vier-Quadranten-Phasendetektors zum Vergleich der Phasehlagen der Modulationssignale, welche jeweils als komplexwertige Signale mit zueinander orthogonalen Komponenten an den Eingängen eingespeist werden, hat unter anderem den Vorteil, daß die Phasenmessung nicht flankenempfindlich ist, sondern auf die Signalflächen reagiert, so daß die Phasenmessung unempfindlich gegen Signalspitzen (Spikes) ist, welche bei dem vorgesehenen Vier-Quadranten-Phasendetektor lediglich gewichtet mit ihrer Dauer zum Vergleichsergebnis beitragen. Zusätzlich weist die Verwendung des Vier-Quadranten-Phasendetektors den Vorteil auf, daß der Phasenvergleich unempfindlich ist gegenüber Drifteffekten des Tastverhältnisses der Eingangssignale, so lange die Tastverhältnisse der Eingangssignale in einem Bereich von 25% bis 75% bleiben. Derartige Drifteffekte beim Tastverhältnis können beispielsweise aus Offsets der Trägerfrequenz entstehen, wenn am Ausgang des Frequenzdiskriminators eine feste Entscheidungsschwelle vorgesehen ist.

Gemäß einer weiteren, bevorzugten Ausführungsform der vorliegenden Erfindung ist an den Ausgang des Vier-Quadranten-Phasendetektors eine Daten-Erfassungseinheit angeschlossen, die das Tastverhältnis des ausgangsseitig am Vier-Quadranten-Phasendetektor bereitgestellten Signals erfaßt.

Bevorzugt ordnet die Daten-Erfassungseinheit dem Tastverhältnis des ausgangsseitig am Vier-Quadranten-Phasendetektor bereitgestellten Signals eine digitale Zahl zu, welche proportional zum Tastverhältnis ist. Dies kann beispielsweise durch einen Pulszähler erzielt werden, der die Taktperioden eines Meßtaktes zählt, während das am Ausgang des Vier-Quadranten-Phasendetektors abgeleitete Signal einen High-Zustand hat. Weiterhin kann beispielsweise eine Mittelwertbildung des bildung des Tastverhältnisses über mehrere Perioden hinweg vorgesehen sein.

Gemäß einer weiteren, bevorzugten Ausführungsform der vorliegenden Erfindung umfaßt der erste Sendeempfänger eine Antenne mit einer gerichteten Antennencharakteristik, welche an den Sende- und Empfangszweig des ersten Sendeempfängers angekoppelt ist und der zweite Sendeempfänger eine Antenne mit einer ungerichteten Charakteristik, die an den Sende- und Empfangszweig des zweiten Sendeempfängers angekoppelt ist.

Beispielsweise bei Ausbildung des Kommunikationssystems als Identifizierungssystem kann ein Raumbereich bezüglich des ersten Sendeempfängers existieren, in welchem mit hoher Wahrscheinlichkeit ein zweiter Sendeempfänger, beispielsweise ein Transponder, zu erfassen ist. Der zweite Sendeempfänger hingegen ist üblicherweise als Transponder oder Mobilteil ausgebildet, bei dem die Lage zum Raum nicht vorgegeben sein braucht und daher normalerweise keine bevorzugte Raumrichtung oder ein Raumbereich existiert, in welchem der erste Sendeempfänger zu erwarten ist.

Gemäß einer weiteren, bevorzugten Ausführungsform der vorliegenden Erfindung weisen die Sendeempfänger je ein Duplexfilter zum Ankoppeln einer Antenne an Sende- und Empfangszweig auf.

Duplexfilter werden beispielsweise bei Einsatz von Frequenzduplexverfahren zum Etablieren einer bidirektionalen Datenübertragung eingesetzt und umfassen normalerweise zwei Bandpaßfilter, welche an die für sogenanntes Uplink- bzw. Downlink verwendeten Frequenzbänder angepaßte Durchlaßbereiche haben.

Gemäß einer hierzu alternativen, weiteren bevorzugten Ausführungsform der vorliegenden Erfindung weisen die Sendeempfänger je einen Hochfrequenzschalter zum Ankoppeln einer Antenne an Sende- und Empfangszweig auf.

Das Vorsehen eines Hochfrequenzschalters kann insbesondere in Kombination mit der Verwendung eines Zeitduplexverfahrens bei vorliegendem Kommunikationssystem vorteilhaft sein.

Gemäß einer weiteren bevorzugten Ausführungsform der vorliegenden Erfindung weisen die Sendeempfänger ein Verzögerungsglied mit einstellbarer Verzöerung, bevorzugt ausgebildet als übertaktet betriebenes Schieberegister, auf zum Erzeugen einer einstellbaren Phasenlage des Modulationssignals.

Wie bereits oben erläutert, ist es ein Vorteil des vorliegenden Prinzips, daß die Phasenlage des Modulationssignals bei erstem und zweitem Sendeempfänger nicht bekannt und auch nicht synchronisiert sein braucht. Zum Erschweren eines Angriffs auf das Kommunikationssystem kann es vorteilhaft sein, die Phasenlage des Modulationssignals zufällig zu verändern. Hierfür kann in einer besonders einfachen Realisierung beispielsweise das übertaktet betriebene Schieberegister vorgesehen sein, in welches das Modulationssignal eingangsseitig eingegeben wird und welches eine Vielzahl von Ausgängen aufweist, deren Auswahl zufällig erfolgt.

Gemäß einer weiteren, bevorzugten Ausführungsform der vorliegenden Erfindung ist der zweite Sendeempfänger ein Transponder.

Beispielsweise kann der zweite Sendeempfänger ein Transponder sein, welcher bevorzugt die zum Betrieb erforderliche Energie aus einem vom Transponder empfangenen, hochfrequenten Signal gewinnt. Alternativ kann der zweite Sendeempfänger auch ein mit einer Batterie betriebener Transponder sein. Der Transponder kann als elektronisches Etikett oder Tag ausgebildet sein.

Gemäß eines vorteilhaften Verfahrens zum Betrieb eines der vorgenannten Kommunikationssysteme ist eine Datenübertragung auf dem Übertragungskanal mittels eines Zeitduplexverfahrens vorgesehen.

Bei einem Zeitduplexverfahren erfolgen Senden und Empfangen auf dem Übertragungskanal nicht zeitgleich, sondern abwechselnd in sogenannten Sende- und Empfangszeitschlitzen (Bursts).

Gemäß einer vorteilhaften Weiterbildung des Verfahrens zum Betrieb eines Kommunikationssystems sind zur Laufzeitmessung über den Übertragungskanal die folgenden Verfahrensschritte vorgesehen:

a) Abstimmen eines Zeitpunktes zum Beginn einer Signal-Laufzeitmessung über den Übertragungskanal zwischen erstem und zweitem Sendeempfänger,
b) Kalibrieren des zweiten Sendeempfängers einschließlich Messen der Signallaufzeit durch die vom zweiten Sendeempfänger umfaßten Bauelemente,
c) Messen des Phasenunterschieds eines im zweiten Sendeempfänger erzeugten Modulationssignals bezüglich eines im ersten Sendeempfänger erzeugten und über den Übertragungskanal übermittelten Modulationssignals im zweiten Sendeempfänger,
d) Messen des Phasenunterschieds eines im ersten Sendeempfänger erzeugten Modulationssignals bezüglich eines im zweiten Sendeempfänger erzeugten und über den Übertragungskanal übermittelten Modulationssignals im ersten Sendeempfänger,
e) Kalibrieren des ersten Sendeempfängers einschließlich Messen der Signallaufzeit durch die vom ersten Sendeempfänger umfaßten Bauelemente,
f) Übertragung der in den Schritten b) und c) gewonnenen Meß- und Kalibrierdaten zum ersten Sendeempfänger, und
g) Berechnen der Signallaufzeit über den Übertragungskanal mittels der in den Schritten b) bis e) ermittelten Meßwerte.

Die Schritte b) bis e) können in beliebiger Reihenfolge ausgeführt werden. Zum Erzielen einer hohen Messgenauigkeit sollten die Kalibrier- und Meßschritte jedoch zeitlich so nahe beieinander liegen, daß für die gesamte Messung sichergestellt ist, daß die gleichen Kanalbedingungen gelten. Zudem sollten die beiden Teilmessungen c) und d) zeitlich möglichst nahe beieinander liegen.

Bei genügend stationärem Kanal ist nicht bei jeder Laufzeitmessung ein Kalibrieren der Sendeempfänger erforderlich. Beim beschriebenen Zeitduplexverfahren erfolgen die Schritte zur Kalibrierung und zur Messung aufeinander folgend. Erster und zweiter Sendeempfänger teilen sich das gleiche Frequenzband.

Der Schritt a), bei dem der Zeitpunkt zum Beginn einer Signallaufzeitmessung zwischen erstem und zweitem Sendeempfänger vereinbart wird, bewirkt zum einen eine ungefähre Einigung über den Startzeitpunkt der Messung und zum anderen eine Synchronisation der Frequenz der verwendeten Modulationssignale. Eine Synchronisation der Phasenlagen der Modulationssignale zwischen erstem und zweitem Sendeempfänger hingegen ist weder vorgesehen noch erforderlich.

Alternativ zur beschriebenen Laufzeitmessung einschließlich Kalibrieren der Sendeempfänger im Zeitduplex kann auch, bei ausreichend großer Kanalbandbreite, ein Frequenzduplexverfahren zur Laufzeitmessung bei einem der vorgenannten Kommunikationssysteme vorteilhaft zum Einsatz kommen.

Gemäß einem bevorzugten Frequenzduplexverfahren zur Laufzeitmessung sind folgende Schritte vorgesehen:

a) Abstimmen eines Zeitpunktes zum Beginn einer Signal-Laufzeitmessung über den Übertragungskanal zwischen erstem und zweitem Sendeempfänger,
b) Kalibrieren des ersten Sendeempfängers einschließlich Messen der Signallaufzeit durch die vom ersten Sendeempfänger umfaßten Bauelelemente und zugleich Messen des Phasenunterschieds eines im zweiten Sendeempfänger erzeugten Modulationssignals bezüglich eines im ersten Sendeempfänger erzeugten und über den Übertragungskanal übermittelten Modulationssignals im zweiten Sendeempfänger,
c) Kalibrieren des zweiten Sendeempfängers einschließlich Messen der Sighallaufzeit durch die vom zweiten Sendeempfänger umfaßten Bauelemente und zugleich Messen des Phasenunterschieds eines im ersten Sendeempfänger erzeugten Modulationssignals bezüglich eines im zweiten Sendeempfänger erzeugten und über den Übertragungskanal übermittelten Modulationssignals im ersten Sendeempfänger,

d) Übertragung der in den Schritten b) und c) gewonnenen Meß- und Kalibrierdaten zum ersten Sendeempfänger, und

e) Berechnen der Signallaufzeit über den Übertragungskanal mittels der in den Schritten b) und c) ermittelten Meßwerte.

Da bei Verwendung eines Frequenzduplexverfahrens vorteilhaft je ein Kalibrierschritt und je ein Meßschritt zugleich ausgeführt werden können, wird die insgesamt für eine Laufzeitmessung erforderliche Meßzeit deutlich verringert. Damit ist weiterhin der Vorteil verbunden, daß der Funkkanal, also der Übertragungskanal zwischen erstem und zweitem Sendeempfänger bezüglich seiner Übertragungseigenschaften statisch ist und die gesamte Kalibrierung und Messung bei gleichen Leistungspegel- und Phasenverzerrungsbedingungen abläuft.

Das Frequenzduplexverfahren ermöglicht aufgrund der teilweise zugleich erfolgenden Meß- und Kalibrierschritte ein besonders schnelles Ermitteln der Distanz zwischen erstem und zweitem Sendeempfänger.

Sowohl bei dem beschriebenen Zeitduplexverfahren als auch bei dem beschriebenen Frequenzduplexverfahren können die dort angegebenen Verfahrensschritte zum Kalibrieren jeweils folgende Teilschritte umfassen:

- Übertragen eines Signals mit einer unmodulierten Trägerfrequenz über den Übertragungskanal,
- Mischen des unmodulierten Signals mit einem modulierten, lokal erzeugten Signal auf eine Zwischenfrequenzebene, und
- Bestimmen einer Phasenabweichung zwischen dem lokal erzeugten Modulationssignal und dem Signal auf der Zwischenfrequenzebene.

Die Zwischenfrequenz kann dabei sehr klein sein, wie bei einer Low-IF-Architektur, oder sie kann Null sein, wie bei Homodynen Architekturen.

Der Vorteil des beschriebenen Kalibrierverfahrens liegt insbesondere darin, daß es bei exakt dem gleichen Empfangs-Leistungspegel durchgeführt wird wie die Messung der Umlaufzeit selbst. Folglich werden Leistungspegelabhängige Laufzeiteffekte berücksichtigt.

Ein weiterer Vorteil des beschriebenen Kalibrierverfahrens liegt in der Übertragung eines unmodulierten Trägersignals über den Übertragungskanal, welches in dem jeweiligen Empfänger als Quasi-Lokaloszillatorsignal verarbeitet wird. Hierdurch ist das Kalibrierverfahren praktisch unbeeinflußt von Dispersionseffekten des Funkkanals.

Der sowohl bei Zeit- als auch bei Frequenzduplex-Meßverfahren beschriebene Verfahrensschritt zum Abstimmen eines Zeitpunktes zum Beginn einer Signal-Laufzeitmessung umfaßt bevorzugt folgende Verfahrensschritte:

- Übertragen einer Start-Botschaft vom ersten zum zweiten Sendeempfänger einschließlich einer Frequenzinformation zum vom ersten Sendeempfänger verwendeten oder zum vom zweiten Sendeempfänger zu verwendenden Modulationssignal für die Signal-Laufzeitmessung.

Wie bereits erläutert muß lediglich die verwendete Modulationsfrequenz zwischen erstem und zweitem Sendeempfänger abgestimmt werden, ohne jedoch eine Phasensynchronisation durchführen zu müssen. Dabei müssen erster und zweiter Sendeempfänger, wie später detaillierter erläutert, nicht notwendigerweise die gleiche Modulationsfrequenz einsetzen, es muß lediglich ein zumindest einem Sendeempfänger bekanntes Verhältnis zwischen erster und zweiter Modulationsfrequenz vorliegen.

Gemäß eines weiteren, bevorzugten Betriebsverfahrens für das Kommunikationssystem können mit den im folgenden genannten Verfahrensschritten Frequenzoffsets zwischen dem vom ersten und zweiten Sendeempfänger verwendeten Modulationsfrequenzen kompensiert werden:

- Durchführen einer ersten Messung der Signallaufzeit über den Übertragungskanal und Ermitteln eines ersten Messwerts tm1, wobei der Startzeitpunkt im ersten Sendeempfänger festgelegt wird,
- Durchführen einer zweiten Messung der Signallaufzeit über den Übertragungskanal einschließlich Ermitteln eines zweiten Messwerts tm2, wobei der Startzeitpunkt im zweiten Sendeempfänger festgelegt wird, und
- Berechnen des korrigierten Messergebnisses durch Bilden des arithmetischen Mittelwerts von erstem und zweitem Messwert.

Sollte zwischen erstem und zweitem Sendeempfänger ein Modulationsfrequenz-Offset verbleiben, so kann dieser in einfacher Weise dadurch kompensiert werden, daß aufeinanderfolgend insgesamt zwei Umlaufmessungen durchgeführt werden, bei denen die erste wie beschrieben abläuft und für die zweite Umlaufzeitmessung der erste und der zweite Sendeempfänger ihre Rollen vertauschen, so daß die zweite Umlaufzeitmessung nicht beim ersten, sondern vom zweiten Sendeempfänger ausgehend startet. Hierdurch hebt sich ein Frequenzoffset zwischen den verwendeten Modulationsfrequenzen in erstem und zweitem Sendeempfänger gerade gegenseitig weg.

Gemäß einem weiteren, vorteilhaften Betriebsverfahren für das Kommunikationssystem sind in einer Weiterbildung folgende Verfahrensschritte vorgesehen:

- Verändern der Phasenlage des im ersten Sendeempfänger erzeugten Modulationssignals um einen zufälligen Betrag zu zufällig ausgewählten Zeitpunkten,
- Verändern der Phasenlage des im zweiten Sendeempfänger erzeugten Modulationssignals um einen zufälligen Betrag zu zufällig ausgewählten Zeitpunkten.

Da, wie bereits erläutert, zum Durchführen der beschriebenen Distanzmessung mittels Umlaufzeitmessung keine Phasensynchronisation zwischen erstem und zweitem Sendeempfänger erforderlich ist, und auch keine Kenntnis der Phasenlage der jeweiligen Gegenstelle erforderlich ist, kann zum Erhöhen der Sicherheit des Kommunikationssystems gegen unerwünschte Angriffe von außen ein zusätzliches Scrambling für die Bezugsphase, von der die Modulationsphase abhängt, durchgeführt werden. Diese kann bevorzugt in erstem und zweitem Sendeempfänger unabhängig voneinander erfolgen. Alternativ kann auch das Phasenscrambling des Modulationssignals in einem der beiden Sendeempfänger vom jeweils anderen Sendeempfänger angestoßen oder gesteuert sein.

Gemäß einem weiteren, bevorzugten Verfahren zum Betrieb des Kommunikationssystems wird der Zeitpunkt zum Beginn einer Signal-Laufzeitmessung innerhalb einer Sequenz von Nutzdaten versteckt, die vom ersten an den zweiten Sendeempfänger gesendet werden.

Hierdurch wird es für einen Angreifenden unmöglich, den Beginn einer Umlaufzeitmessung vorherzusagen und sich darauf stützende Maßnahmen zu ergreifen, beispielsweise das Umschalten zwischen einer langen und einer kurzen Schleife bei einem Angriff mittels eingangs erläutertem LPT.

Gemäß einem weiteren, bevorzugten Betriebsverfahren des Kommunikationssystems werden die zum Messen des Phasenunterschieds erforderlichen Daten in eine Vielzahl von Teilsequenzen aufgeteilt und die Teilsequenzen über den Übertragungskanal abwechselnd mit Nutzdaten oder zufällig erzeugten Daten übertragen.

Auch dieses Merkmal dient zur Erhöhung der Betriebssicherheit und somit zum Schutz des Kommunikationssystems vor Angreifern.

Gemäß einem weiteren, bevorzugten Verfahren wird die Frequenz der Modulationssignale in erstem und zweitem Empfänger jeweils bevorzugt zugleich verändert.

Das Verändern der Modulationsfrequenz, die zur Messung der Umlaufzeit herangezogen wird, dient zur noch weiteren Erhöhung der Sicherheit des Kommunikationssystems vor unerwünschten Angriffen.

In einer weiteren, vorteilhaften Ausführungsform der vorliegenden Erfindung sind folgende Verfahrensschritte vorgesehen:

- Einfügen einer geringen Frequenzabweichung der Frequenz des erzeugten Modulationssignals,
- Berechnen der Signallaufzeit über den Übertragungskanal unter Berücksichtigung der eingefügten Frequenzabweichung,
- Wiederholtes Verändern der Frequenzabweichung in regelmäßigen oder unregelmäßigen Zeitabständen.

Zur weiteren Erhöhung der Sicherheit vor Angreifern wird gemäß der beschriebenen Weiterbildung der Erfindung ein sehr geringer Frequenzfehler zwischen den Modulationsfrequenzen von erstem und zweitem Sendeempfänger absichtlich eingeführt. Die Abweichung der Modulationsfrequenz gegenüber der Nennfrequenz kann, um das Ergebnis der Umlaufzeit nicht zu verfälschen, bei einer Nachberechnung wieder herausgerechnet werden, da die Frequenzabweichung von der Modulationsfrequenz bekannt ist. Angreifende Systeme hingegen sind lediglich in der Lage, die Modulationsfrequenz selbst zu erfassen, welche jedoch zu einem bedeutenden Meßfehler führen würde. Durch ein zufälliges Verändern der Abweichung von der Nenn-Modulationsfrequenz ist auch ein Vorhersagen der bei einer nächsten Messung verwendeten Modulationsfrequenz unmöglich.

Um ein zweideutiges Messergebnis zu vermeiden, welches sich für verhältnismäßig hohe Modulationsfrequenzen bezüglich des erwarteten Abstandes ergäbe, der zu messen ist, können nacheinander mehrere Umlaufzeitmessungen bei verschiedenen Modulationsfrequenzen durchgeführt und anschließend die Ergebnisse in einer Weiterbildung der Erfindung verknüpft werden. Dabei können die Vorteile der Messungen bei verschiedenen Frequenzen, wie hohe Genauigkeit und geringe Eindeutigkeit einerseits und geringe Genauigkeit und hohe Eindeutigkeit andererseits jeweils mit ihren Vorteilen verknüpft werden.

Anstelle einer 010101... - Bitfolge als rechteckförmiges oder harmonisches Modulationssignal können auch andere Signale verwendet werden, die eine Grundschwingung haben, die gleich der Modulationsfrequenz ist.

Weitere Einzelheiten und vorteilhafte Weiterbildungen der Erfindung sind Gegenstand der Unteransprüche.

Die Erfindung wird nachfolgend an mehreren Ausführungsbeispielen anhand der Zeichnungen näher erläutert.

Es zeigen:

Figur 1a    an einem ersten Ausführungsbeispiel die prinzipielle Anordnung von erstem und zweitem Sendeempfänger in einem Kommunikationssystem ausgebildet zur Messung der Umlaufzeit,

Figur 1b anhand eines vereinfachten Blockschaltbildes beispielhaft eine Signalverarbeitung zur Gewinnung des Abstandes zwischen erstem und zweitem Sendeempfänger bei einem Kommunikationssystem gemäß Figur 1a,

Figur 2 das Meßprinzip eines Kommunikationssystems gemäß Figur 1a zur Messung der Umlaufzeit,

Figur 3 die Signalverläufe ausgewählter Signale zur Veranschaulichung der Herleitung der Umlaufzeitberechnung bei einem Kommunikationssystem gemäß Figur 1 in einem ersten Fall,

Figur 4 die Signale gemäß Figur 3, jedoch in einem zweiten Fall,

Figur 5 ein Schaubild zur Verdeutlichung des Zusammenhangs zwischen Umlaufzeit und Periodendauer des Modulationssignals bei geringer Modulationsfrequenz,

Figur 6 eine Weiterbildung der Umlaufzeitmessung bei Verwendung von zwei verschiedenen Modulationsfrequenzen zur Vermeidung einer Mehrdeutigkeit des Ergebnisses,

Figur 7 anhand eines vereinfachten Blockschaltbildes ein Ausführungsbeispiel des Kommunikationssystems ausgebildet für Frequenzmodulation auf dem Übertragungskanal mit Kalibrierung auf Meßleistungspegel,

Figur 8 eine alternative Ausführungsform des Kommunikationssystems gemäß Figur 7, mit zusätzlicher Kalibriermöglichkeit weiterer Signallaufzeiten,

Figur 9 die Datenerfassungseinheit und den Vier-Quadranten-Phasendetektor des ersten Sendeempfängers,

Figur 10 die Datenerfassungseinheit und den Vier-Quadranten-Phasendetektor des zweiten Sendeempfängers,

Figur 11 das Verfahren der Umlaufzeitmessung einschließlich Kalibrierung bei einem Kommunikationssystem gemäß Figur 1 mit Zeitduplex,

Figur 12 die Signalverläufe gemäß Figur 11, jedoch bei Frequenzduplex und

Figur 13 eine Weiterbildung des Kommunikationssystems von Figur 1a.

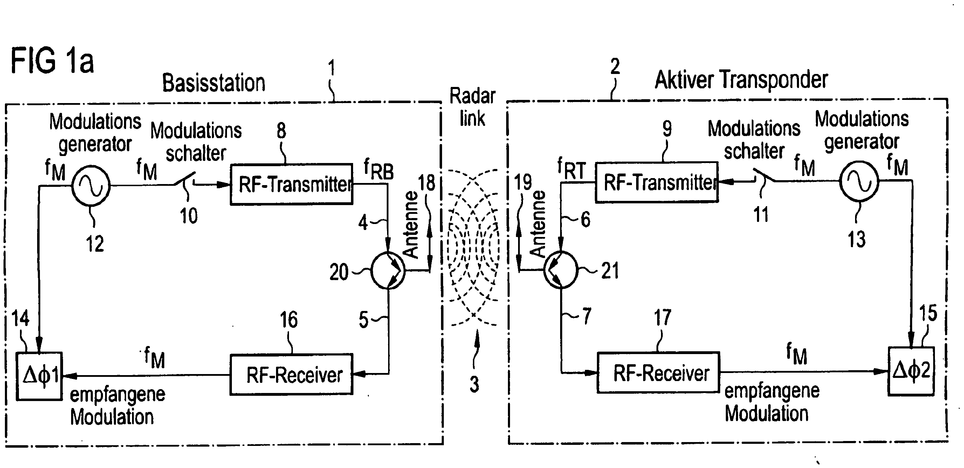

Figur 1a zeigt anhand eines stark vereinfachten, beispielhaften Blockschaltbildes den prinzipiellen Aufbau eines Kommunikationssystems gemäß dem vorliegenden Prinzip. Dort sind ein erster Sendeempfänger 1 und ein zweiter Sendeempfänger 2 vorgesehen, welche bi-direktional miteinander durch einen Übertragungskanal, im vorliegenden Fall einen hochfrequenten Funkkanal 3, gekoppelt sind. Erster und zweiter Sendeempfänger 1, 2 umfassen jeweils einen Sendezweig 4, 6 und einen Empfangszweig 5, 7. In den Sendezweigen 4, 6 ist jeweils ein Hochfrequenz-Sender 8, 9, ausgelegt zur Frequenzmodulation vorgesehen, an den über je einen Schalter 10, 11 eingangsseitig je ein Modulationsgenerator 12, 13 angeschlossen ist. Die Modulationsgeneratoren 12, 13 sind außerdem an je einen ersten Eingang je einer Phasenvergleichseinrichtung 14, 15 angeschlossen. Die Empfangszweige 5, 7 umfassen je einen Hochfrequenzempfänger 16, 17 mit je einem Ausgang, an dem aus einem hochfrequenten Eingangssignal ein Empfangssignal mit der Frequenz des vom Modulationsgenerator erzeugten Modulationssignals rückgewonnen wird. Je ein Ausgang je eines Hochfrequenzempfängers 16, 17 ist an je einen zweiten Eingang der Phasenvergleichseinrichtungen 14, 15 angeschlossen. Sende- und Empfangszweig 4, 5; 6, 7 sind an je eine gemeinsame Antenne 18, 19 über je ein Koppelglied 20, 21 angekoppelt.

Die Vorrichtung gemäß Figur 1a dient zur Ermittlung der Signallaufzeit über den Übertragungskanal 3 zwischen erstem und zweitem Sendeempfänger 1, 2. Hierfür vergleicht die erste Phasenvergleichseinrichtung 14 die Phasenlage eines vom Modulationsgenerator 12 erzeugten Modulationssignals, welches über den Sender 8 und über den Übertragungskanal 3 an den zweiten Sendeempfänger 2 gesendet wird, mit der Phasenlage eines vom Empfänger 16 bereitgestellten Modulationssignals, welches abgeleitet ist von einem vom zweiten Sendeempfänger 2 gesendeten und über den Kanal 3 übertragenen hochfrequenten Signals. In analoger Weise arbeitet der zweite Sendeempfänger 2 mit der zweiten Phasenvergleichseinrichtung 15, die die Phasenlage des vom angeschlossenen Modulationsgenerator 13 erzeugten Modulationssignals vergleicht mit der Phasenlage eines empfangenen Modulationssignals, welches der Empfänger 17 aus einem von der Gegenstelle 1 ausgesendeten Signal ableitet. Das Kommunikationssystem mit den Sendeempfängern 1, 2 wird als Halb-Duplex-System (Ping-Pong-System) betrieben.

Vorteilhafterweise ist das Kommunikationssystem gemäß Figur 1a zur Bestimmung der Umlaufzeit über den Übertragungskanal 3 unabhängig von der Art der verwendeten Modulation. Weiterhin ist die Funktionsfähigkeit des Prinzips unabhängig von der Implementierung oder Ausführung der verwendeten Sender 8, 9 und Empfänger 16, 17, so lange kein Laufzeit-Jitter auftritt, welcher beispielsweise durch Quantisierung oder andere Signalverarbeitung des Modulationssignals bedingt ist.

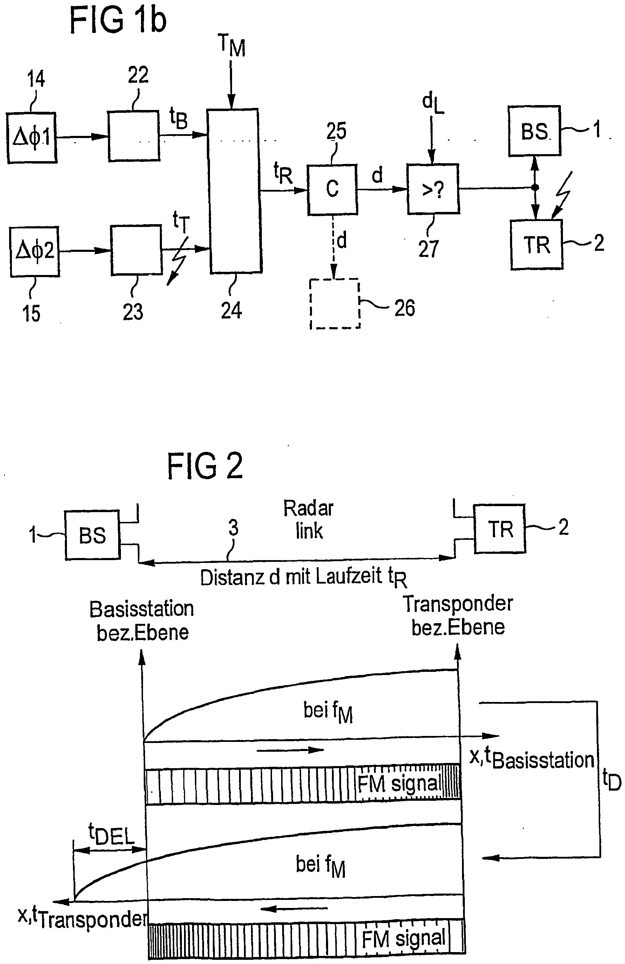

Figur 1b zeigt beispielhaft die Signalverarbeitungskette, die aus den mit den Phasenvergleichseinrichtungen 14, 15 gewonnenen Phasenunterschieden die Berechnung der Umlaufzeit vom ersten zum zweiten und vom zweiten wieder zurück zum ersten Sendeempfänger und daraus wiederum die Berechnung des aktuellen Abstands zwischen erstem und zweitem Sendeempfänger 1, 2 ermöglicht. An Ausgänge der Phasenvergleichseinrichtungen 14, 15 gemäß Figur 1a ist je eine Signalverarbeitungseinheit 22, 23 angeschlossen, welche aus den von den Phasenvergleichseinrichtungen 14, 15 wie beschrieben ermittelten Phasenunterschieden $\Delta\Phi1$, $\Delta\Phi2$ je ein zugehöriges Zeitintervall $t_B$, $t_T$ berechnen und ausgangsseitig bereitstellen. Eine an Ausgängen der Signalverarbeitungseinheiten 22, 23 angekoppelte Signalverarbeitungseinheit 24 berechnet unter Zuhilfenahme der Periodendauer $T_M$ des Modulationssignals sowie der definierten Verzögerungszeit im zweiten Sendeempfänger, die bevorzugt ein Vielfaches der Periodendauer $T_M$ ist, und unter Zuhilfenahme von in der weiteren Beschreibung beschriebenen Formeln die Signallaufzeit $t_R$ über den Übertragungskanal 3 bereitstellen. Diese Signallaufzeit $t_R$ über den Übertragungskanal 3 entspricht dabei dem arithmetischen Mittelwert aus der Summe einer ersten Signallaufzeit t1 vom ersten zum zweiten Sendeempfänger und einer zweiten Signallaufzeit t2 vom zweiten zurück zum ersten Sendeempfänger. Nachgeschaltet der weiteren Signalverarbeitungseinheit 24 ist eine noch weitere Signalverarbeitungseinheit 25, welche unter Zuhilfenahme der Lichtgeschwindigkeit c den aktuellen Abstand d des ersten vom zweiten Sendeempfänger 1, 2 ermittelt. An die noch weitere Signalverarbeitungseinheit 25 kann eine Anzeigeeinheit 26 zum Anzeigen des aktuellen, ermittelten Abstandes d angeschlossen sein. Nachgeschaltet der noch weiteren Signalverarbeitungseinheit 25 ist ein Entscheider 27, der den Wert des aktuellen Abstands d mit einem ebenfalls ihm zugeführten Grenzabstand $d_L$ vergleicht und in Abhängigkeit vom Ergebnis des Vergleichs den ersten und über den Kanal 3 den zweiten Sendeempfänger 1, 2 ansteuert.

Mit dem Kommunikationssystem gemäß Figuren 1a und 1b kann zur Bildung eines kontaktlosen Identifizierungssystems beispielsweise eine Übertragung von Nutzdaten über den Übertragungskanal 3 oder einen anderen Übertragungsweg zwischen erstem und zweitem Sendeempfänger 1, 2 in Abhängigkeit davon erfolgen, ob der Abstand d der Sendeempfänger 1, 2 voneinander kleiner oder größer als eine vorgebbare Schwelle $d_L$ ist. Hierdurch kann vermieden werden, daß Folgehandlungen ausgelöst werden, beispielsweise das Entriegeln einer Tür, wenn der erste Sendeempfänger 1 den zweiten Sendeempfänger 2 als gültig identifiziert, der Abstand zwischen beiden jedoch größer als die vorgegebene Schranke $d_L$ wäre. Dies wäre beispielsweise bei einem Angriff auf das Kommunikationssystem wie eingangs erläutert mittels LPT der Fall.

Das Rechenergebnis der Signalverarbeitungseinheit 24 ist unabhängig von den Phasenlagen der von den Modulationsgeneratoren 12, 13 erzeugten Modulationssignale zueinander, so daß über den Übertragungskanal 3 keine Phasensynchronisation zu erfolgen braucht.

Figur 2 beschreibt am Beispiel einer Frequenzmodulation das bei einem Gegenstand gemäß Figur 1a vorgesehene Meßprinzip zur Ermittlung der Signallaufzeit über den Übertragungskanal 3 in vereinfachter Form. Figur 2 zeigt einen ersten und einen zweiten Sendeempfänger 1, 2, welche mittels eines Übertragungskanals 3 miteinander verbunden sind. Der Abstand der Sendeempfänger 1, 2 voneinander betrage dabei d, die Signallaufzeit über den Übertragungskanal 3 betrage $t_R$ und entspricht damit dessen elektrischer Länge. Bei der folgenden Betrachtung werden zunächst zur einfacheren Erläuterung des Meßprinzips Signallaufzeiten in den Schaltkreisen der Sendeempfänger 1, 2 vernachlässigt. Wie im mittleren Bildteil der Figur 2 dargestellt, übermittelt zunächst der erste Sendeempfänger 1 ein Signal bei einer ersten Trägerfrequenz zum zweiten Sendeempfänger. Die Wellenlänge der Grundwelle der Modulationsfrequenz dieses Signals sollte länger sein als die zu messende Distanz d. Das Modulationssignal ist als Viertel-Sinusschwingung dargestellt. Der zweite Sendeempfänger 2 empfängt das vom ersten Sendeempfänger 1 ausgesendete Signal, im vorliegenden Fall ein frequenzmoduliertes FM-CW-Signal, verzögert um eine erste Signallaufzeit $t_1$. Anschließend wird die Übertragungsrichtung geändert. Nach einer Verzögerungszeit $t_D$, welche dem ersten Sendeempfänger 1 bekannt ist, sendet der zweite Sendeempfänger 2 bei gleicher Modulationsfrequenz $f_M$ ein Signal zum ersten Sendeempfänger 1 zurück. Dieses Signal ist im unteren Drittel der Figur 2 ebenfalls als Teil eines Sinus-Signals dargestellt. Der erste Sendeempfänger erhält dieses Signal verzögert um eine zweite Signallaufzeit $t_2$. Das Modulationssignal des empfangenen Signals, welches bei dem ersten Sendeempfänger 1 eingeht, hat bezüglich dem vom ersten Sendeempfänger 1 ausgesendeten Signal eine Zeitverzögerung, welche sich zusammensetzt aus der Summe der ersten Signallaufzeit $t_1$, der zweiten Signallaufzeit $t_2$ und der Verzögerungszeit $t_D$ im Empfänger. Diese Verzögerung ist als Phasenunterschied zwischen den beiden Signalen $t_{DEL}$ eingezeichnet.

Die Signallaufzeit $t_R$ des Übertragungskanals 3 und damit der Abstand d zwischen erstem und zweitem Sendeempfänger 1, 2 kann somit aus dem gemessenen Phasenunterschied zwischen dem gesendetem und dem empfangenen Signal und mit Kenntnis der Verzögerung $t_D$ im zweiten Sendeempfänger ermittelt werden.

Für eine praktische Implementierung des Verfahrens gemäß Figur 2 sollte bei einem Halb-Duplex-Übertragungsverfahren die Verzögerungszeit $t_D$ groß sein gegenüber einer Periodendauer des Modulationssignals $T_M$, wodurch sich eine zusätzliche Schwierigkeit bezüglich der Periodizität der Phasenmessung ergibt. Die Lösung dieses Problems wird nachfolgend anhand einer mathematischen Erläuterung des Meßverfahrens gegeben.

Alternativ zu der dargestellten harmonischen Schwingung können auch nicht harmonische Signale, wie Pseudo-Zufalls-Signale verwendet werden, deren Periodendauer der Grundwelle mit der kleinsten Frequenz gleich der Periodendauer $T_M$ ist.

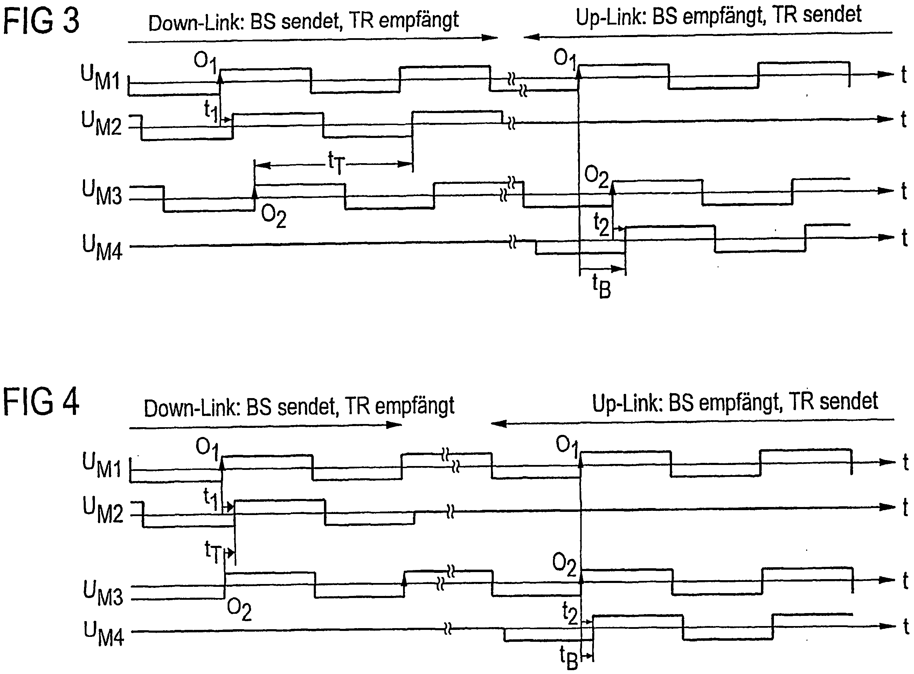

Figuren 3 und 4 zeigen anhand einer Fallunterscheidung zur mathematischen Behandlung des Meßverfahrens einen ersten und einen zweiten Fall der Ermittlung der Signallaufzeit $t_R$ über den Übertragungskanal 3. Dabei wird angenommen, daß erster und zweiter Sendeempfänger 1, 2 je eine voneinander unabhängige Zeitbasis haben, die jedoch jeweils eine Taktfrequenz im ersten und zweiten Sendeempfänger 1, 2 erzeugen, die gleich ist. Die erzeugten Bezugstakte jedoch können eine zufällige Phasendifferenz oder einen Phasenunterschied zueinander haben. Insbesondere die Erzeugung der Modulationssignale mittels Modulationsgeneratoren 12, 13 in erstem und zweitem Sendeempfänger 1, 2 beruhen auf diesen Taktraten und haben deshalb ebenfalls eine beliebige, zufällige Phasenlage zueinander. Weiterhin wird bei der mathematischen Erläuterung gemäß Figuren 3 und 4 angenommen, daß die Phasenmeßsysteme einen gedächtnislosen, linearen und nicht mehrdeutigen Meßbereich zwischen 0 und $2\pi$ haben, der sich periodisch alle $2\pi$ wiederholt. Weiterhin wird weiterhin angenommen, daß keine Schaltkreislaufzeiten oder Schaltkreisverzögerungen auftreten.

Figur 3 erläutert das Meßverfahren anhand von vier Modulationssignal-Verläufen $u_{M1}$, $u_{M2}$, $u_{M3}$, $u_{M4}$ über der Zeit t. Zur besseren Verständlichkeit sind Rechtecksignale angegeben anstelle der in einem realen System auftretenden, gefilterten Rechtecksignale, Sinus-Signale oder nicht-periodischen Signale, die auf der Grundfrequenz des Rechtecksignals basieren.

Im Einzelnen bezeichnet $u_{M1}$ den Signalverlauf des Modulationssignals im ersten Sendeempfänger, $u_{M2}$ den Signalverlauf verzögert um die erste Signallaufzeit $t_1$, wie er im zweiten Sendeempfänger 2 empfangen wird, $u_{M3}$ das vom zweiten Sendeempfänger 2 ausgesendete Modulationssignal und $u_{M4}$ das beim ersten Sendeempfänger 1 empfangene, zurückgesendete Modulationssignal, welches gegenüber dem vom zweiten Sendeempfänger 2 ausgesendeten um die zweite Signallaufzeit t2 verzögert ist.

Die im zweiten Sendeempfänger 2 mit der zweiten Phasenvergleichseinrichtung 15 gemessene Phasenabweichung erhält eine zugeordnete Zeitverzögerung $t_T$, welche das Meßergebnis des zweiten Sendeempfängers 2 ist und den Phasenunterschied zwischen den Modulationssignalen $u_{M2}$ und $u_{M3}$ repräsentiert. Auch im ersten Sendeempfänger 1 wird mit Phasenvergleichseinrichtung 14 der Phasenabweichung zwischen gesendetem und empfangenem Modulationssignal $u_{M1}$, $u_{M4}$ eine Zeitabweichung zugeordnet, welche mit $t_B$ bezeichnet ist.

Zur Ermittlung des Zeitintervalls $t_T$ vergleicht der zweite Sendeempfänger 2 die Phasenlage des empfangenen Signals $u_{M2}$ mit seinem vom Modulationsgenerator 13 erzeugten, eigenen Modulationssignal $u_{M3}$. Das Meßergebnis $t_T$ wird bestimmt durch Beziehen des gemessenen Phasenunterschiedes auf die Periodendauer $T_M$ des Modulationssignals. Nach Abschluß dieser ersten Messung wird im ersten Sendeempfänger 1 ein vom zweiten Sendeempfänger 2 ausgesendetes Modulationssignal empfangen und die Phasenlage des demodulierten Modulationssignals $u_{M4}$ in der ersten Phasenvergleichseinrichtung 14 verglichen mit dem vom Modulationsgenerator 12 erzeugten Modulationssignal $uM_1$. Die Phasenabweichung zwischen diesen beiden Modulationssignalen $u_{M1}$, $u_{M4}$ wird wiederum auf die Periodendauer des Modulationssignals bezogen, wodurch sich der zweite Meßwert $t_B$ ergibt.

Die Übertragung der Modulationssignale über den Übertragungskanal zum einem vom ersten zum zweiten und zum anderen vom zweiten zum ersten Sendeempfänger 1, 2 kann dabei auf geringfügig unterschiedlichen Trägerfrequenzen erfolgen. Erster und zweiter Sendeempfänger 1, 2 weisen jeweils lediglich einen Hochfrequenzoszillator auf, der abwechselnd als Trägergenerator für ein Sendesignal bzw. als Lokaloszillator zum Abwärtsmischen im Empfänger arbeitet.

Nach Abschluß der beiden Teilmessungen wird der Meßwert $t_T$ vom zweiten zum ersten Sendeempfänger 2, 1 übermittelt. Die Signallaufzeit $t_R$ des Übertragungskanals 3 ergibt sich aus dem arithmetischen Mittelwert der ersten und zweiten Signallaufzeit t1, t2. Diese einzelnen Signallaufzeiten t1, t2 brauchen bei dem beschriebenen Verfahren gemäß vorliegendem Prinzip jedoch nicht bekannt zu sein, vielmehr wird die Signallaufzeit über den Übertragungskanal $t_R$ berechnet aus

$$t_R = 1/2(t_B - T_M + t_T), \text{ falls gilt } t_B \geq (T_M - t_T)$$

bzw.

$$t_R = 1/2(t_B + t_T), \text{ falls gilt } t_B < (\ T_M - t_T).$$

Der Abstand d zwischen den beiden Sendeempfängern kann dann mit Kenntnis der Signallaufzeit $t_R$ und der Lichtgeschwindigkeit c aus deren Produkt ermittelt werden nach der Formel d = c $t_R$.

Anhand der beschriebenen Formeln ist der Vorteil des vorliegenden Verfahrens erkennbar, bei dem das Meßergebnis unabhängig von der relativen Phasenlage der Modulationssignale im ersten und zweiten Sendeempfänger 1, 2 zueinander ist.

Figur 4 zeigt die Signalverläufe für den beschriebenen zweiten Fall, bei dem $t_B$ kleiner ist als die Differenz aus $T_M$ und $t_T$.

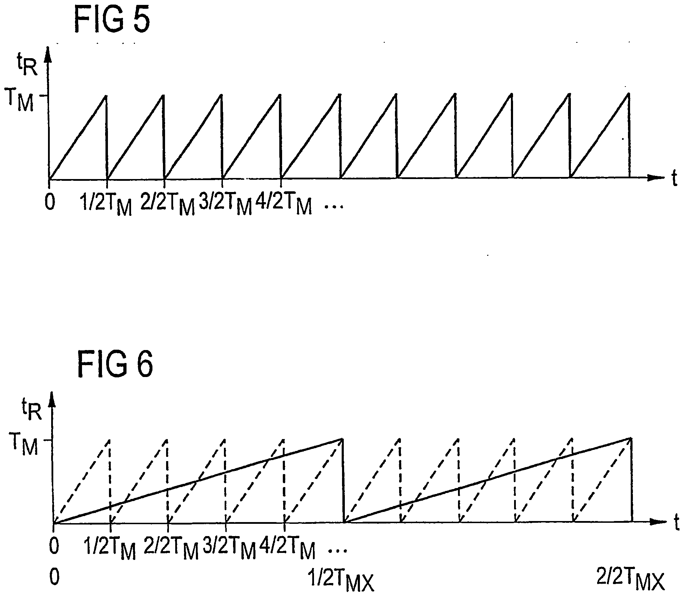

Figur 5 zeigt, daß bei Benutzung der Modulationssignale als Bezugssignale für die Messung die Synchronisations-Zeitpunkte $O_1$ und $O_2$ sich jeweils an den ansteigenden Flanken der Signale $u_{M1}$ und $u_{M3}$ periodisch mit der Periodendauer $T_M$ wiederholen. Deshalb hat dieses Verfahren eine Sägezahn-Meßcharakteristik mit einem Intervall gemäß der Periodendauer $T_M$, der sich jedes ganzzahlige Vielfache der Periodendauer in der Zeitachse wiederholt. Hierdurch ergeben sich mehrdeutige Meßergebnisse für Meßwerte, die kleiner sind als die halbe Periodendauer des Modulationssignals. Das Zeitintervall der Eindeutigkeit kann jedoch leicht dadurch zu einem ausreichend hohen Wert ausgedehnt werden, daß nach Durchführen einer Kanallaufzeitmessung bei einer ersten Modulationsfrequenz $f_M$ weitere Messungen durchgeführt werden mit deutlich geringerer Modulationsfrequenz $f_{MX}$ mit einer dieser entsprechenden, größeren Periodendauer $T_{MX}$. In diesem Fall ist die Messung mit der hohen Modulationsfrequenz $f_M$ mehrdeutig, stellt aber eine gute Meßauflösung bezüglich der Zeit sicher und demnach auch eine hochauflösende Abstandsmessung. Die Messung bei der geringeren Modulationsfrequenz $f_{MX}$ ist zwar weniger genau, stellt aber die Eindeutigkeit des Meßergebnisses bis zu einer einstellbar großen Distanz entsprechend der Periodendauer des weiteren Modulationssignals $T_{MX}$ sicher.

Figur 6 zeigt die kombinierte Charakteristik bei Verwendung zweier unterschiedlicher Modulationsfrequenzen $T_M$, $T_{MX}$.

Um den unzweideutigen Meßbereich mit dem beschriebenen Verfahren ausgehend von der Messung mit dem geringsten Modulationsfrequenz $f_M$ zu praktisch unendlichen Zeiten auszudehnen, sind keine aufwendigen Phasenmeßmethoden erforderlich. Für diesen Zweck reicht es vielmehr aus, eine einfache Laufzeitmessung mit einem vorbestimmten Bitmuster in einem Nutzdatenkanal durchzuführen, der in einer bevorzugten Weiterbildung des Kommunikationssystems parallel zum Übertragungskanal 3 ersten und zweiten Sendeempfänger 1, 2 miteinander koppelt.

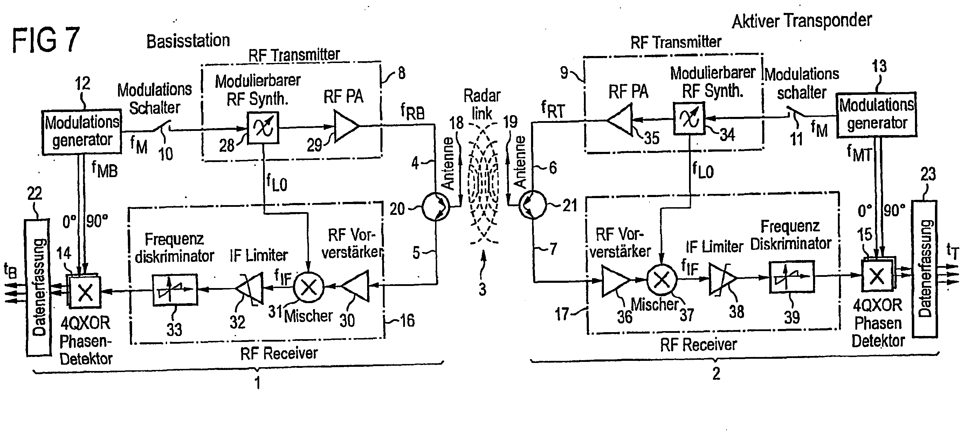

Figur 7 zeigt eine Weiterbildung des Blockschaltbildes gemäß Figur 1a und beschreibt eine Weiterbildung des Kommunikationssystems, bei dem zusätzlich eine Kalibrierung vorgesehen ist, mit dem Ziel, Signallaufzeiten in den im ersten und zweiten Sendeempfänger 1, 2 eingesetzten Bauteilen zu erfassen und aus den ermittelten Signallaufzeiten heraus zu rechnen. Zusätzliche Schaltungsblöcke zur Takterzeugung und zur Datenübertragung über einen Nutzdatenkanal, der ebenfalls ersten und zweiten Sendeempfänger koppelt, sind bei der vereinfachten Blockschaltbilddarstellung gemäß Figur 7 nicht eingezeichnet.

Figur 7 umfaßt alle bereits bei der Beschreibung der Figur 1a in Aufbau, Funktionsweise und vorteilhaftem Zusammenwirken beschriebenen Bauteile. Diese Beschreibung wird daher an dieser Stelle nicht noch einmal wiederholt. In Weiterbildung der Schaltung gemäß Figur 1a umfaßt der erste Sendeempfänger 1 den Hochfrequenz-Sender 8, der einen modulierbaren Hochfrequenz-Synthesizer 28 mit nachgeschaltetem Hochfrequenz-Leistungsverstärker 29 aufweist. Der Modulationseingang des Synthesizers 28 ist mit dem Schalter 10 gekoppelt, der Ausgang des Leistungsverstärkers 29 ist mit dem Koppelelement 20 verbunden. Der Hochfrequenz-Empfänger 16 im Empfangszweig 5 des ersten Sendeempfängers 1 umfaßt einen rauscharmen, hochfrequenztauglichen Vorverstärker 30 mit nachgeschaltetem Abwärts-Frequenzmischer 31, an dessen Ausgang auf einer Zwischenfrequenzebene ein begrenzender Verstärker 32 mit nachgeschaltetem Frequenzdiskriminator 33 angeschlossen sind. Ausgangsseitig an den Frequenzdiskriminator 33 ist der Phasendetektor 14 angeschlossen, der im vorliegenden Ausführungsbeispiel als Vierquadranten-Phasendetektor mit Verwendung von Exklusiv-ODER Gattern als Mischerzellen aufgebaut ist. An den Ausgang des Phasendetektors 14 ist die Datenerfassungseinheit 22 aus Figur 1b angeschlossen, die an ihrem Ausgang das Zeitintervall $t_B$ zur Ermittlung der Kanallaufzeit bereitstellt. In Analogie zum ersten Sendeempfänger 1 umfaßt auch der HF-Sender 9 des zweiten Sendeempfängers 2 einen modulierbaren Hochfrequenz-Synthesizer 34 und einen Leistungsverstärker 35 sowie der HF-Empfänger 17 einen rauscharmen Vorverstärker 36, einen Abwärts-Frequenzmischer 37, einen begrenzenden Verstärker 38 sowie einen Frequenzdiskriminator 39, welche wie für den ersten Sendeempfänger erläutert miteinander und den übrigen, entsprechenden Bauelementen des Sendeempfängers verschaltet sind. Sowohl bei erstem als auch bei zweitem Sendeempfänger 1, 2 ist je ein weiterer Eingang des Abwärts-Frequenzmischers 31, 37 mit einem Ausgang des jeweiligen Frequenz-Synthesizers 28, 34 zum Zuführen eines frequenzmodulierten oder unmodulierten Lokaloszillatorsignals verbunden.

Der modulierbare Hochfrequenz-Synthesizer 28 im ersten Sendeempfänger 1 arbeitet als Oszillator für den Sendebetrieb im Sendezweig 4 und im Empfangsbetrieb als Lokaloszillator für den Empfänger 16 im Empfangszweig 5. Der Modulationsgenerator 12 stellt ein quarzstabilisiertes, komplexwertiges Modulationssignal mit orthogonalen Signalkomponenten bei der Modulationsfrequenz $f_M$ bereit. Um, wie bereits erläutert, ein unzweideutigen Meßergebnis über einen weiten Abstandsbereich zu erzielen, sind beim Modulationsgenerator 12 eine Vielzahl fester Modulationsfrequenzen $f_M$, $f_{MX}$ einstellbar. Der Schalter 10 dient dazu, die Modulation im ersten Sendeempfänger 1 ein- und auszuschalten abhängig davon, ob der erste Sendeempfänger in einer Kalibrier- oder Meßbetriebsart arbeitet bzw. ob er im Sende- oder Empfangsbetrieb arbeitet. Der modulierbare Synthesizer 28 erzeugt eine Trägerfrequenz für den Sendebetrieb und eine Lokaloszillatorfrequenz für den Empfangsbetrieb. Mittels des Modulationssignals der Frequenz $f_M$ ist der Synthesizer 28 frequenzmodulierbar. Der Leistungsverstärker 29 verstärkt das Sendesignal auf den erforderlichen Leistungspegel und ist für den Empfangsfall abschaltbar. Der rauscharme Vorverstärker 30 verstärkt ein einkoppelndes Hochfrequenzsignal, welches mit der Antenne 18 erfaßt wird, mit geringer Rauschzahl und leitet das verstärkte Signal einem Eingang des Abwärtsmischers 31 zu. Der Abwärtsmischer 31 setzt das hochfrequente Empfangssignal, welches vom Verstärker 30 bereitgestellt wird, mittels der vom Synthesizer 28 bereitgestellten Lokaloszillatorfrequenz auf eine Zwischenfrequenzebene um. Die Antenne 18 des ersten Sendeempfängers 1 ist eine verstärkende Antenne mit einer gerichteten Antennencharakteristik, welche in einen Raumbereich gerichtet ist, in dem das Auftreten eines zweiten Sendeempfängers 2 zu erwarten ist. Dies wirkt sich insbesondere auf die Zuverlässigkeit der Abstandsmessung und einer Übertragung von Nutzdaten zwischen erstem und zweitem Sendeempfänger 1, 2 aus. Der begrenzende Verstärker 32 auf der Zwischenfrequenzebene verstärkt das Zwischenfrequenzsignal, welches am Ausgang des Mischers 31 abgeleitet wird, auf einen Pegel, der für den FrequenzDiskriminator 33 ausreichend ist. Weiterhin stellt der begrenzende Verstärker 32 ein RSSI-Signal bereit, welches ein Maß für die Empfangsfeldstärke ist. Der FrequenzDiskriminator 33, der im vorliegenden Fall als Phasenregelschleife ausgebildet ist, bewirkt die Frequenz-Demodulation des Zwischenfrequenzsignals, welches vom Abwärtsmischer 31 bereitgestellt und mittels begrenzendem Verstärker 32 verstärkt ist. Am Ausgang des Frequenz-Diskriminators 33 steht damit das rekonstruierte Modulationssignal bei der Modulationsfrequenz bereit, die von der Gegenstelle, hier dem zweiten Sendeempfänger 2, verwendet wurde. Der Vier-Quadranten-Phasendetektor 14 setzt zunächst das zu messende Modulationssignal mittels zweier um 90 Grad zueinander phasenverschobener Bezugslgnale des Modulationsgenerators 12 bei der Modulationsfrequenz des Modulationsgenerators 12 um in ein Paar von Tastverhältnis-modulierten Signalen. Ihre Tastverhältnisse sind dabei den Phasenlagen zwischen dem zu messenden Signal und den Referenzsignalen proportional. Dieses Paar von Tastverhältnis-modulierten Signalen weist den vollständigen Informationsgehalt auf, der erforderlich ist zum Berechnen des Phasenunterschiedes im Intervall von 0 bis $2\pi$ in unzweideutiger Weise. Der Vier-Quadranten-Phasendetektor 14 weist insbesondere zwei Vorteile auf: Einerseits ist die Phasenmessung nicht flankenempfindlich, sondern empfindlich für die Signalfläche, wodurch sich eine Unempfindlichkeit gegenüber Signalspitzen oder Spikes ergibt, die bei dem vorliegend verwendeten Phasendetektor 14 nur gewichtet mit ihrer Dauer zum Ausgangssignal beitragen. Weiterhin ist die verwendete Phasenmeßmethode unempfindlich gegen Drifts des Tastverhältnisses der Eingangssignale, so lange sich diese innerhalb eines Intervalls von 25% bis 75% bewegen. Derartige Drifts des Tastverhältnisses sind üblicherweise bedingt durch Offsets der Trägerfrequenz und können insbesondere dann auftreten, wenn eine feste Entscheidungsschwelle am Ausgang des Frequenzdiskriminators 33 benutzt wird.

Die Funktionsweise der Bauteile des zweiten Sendeempfängers 2 und deren vorteilhafte Wirkungsweise entspricht weitgehend denen des ersten Sendeempfängers 1 und wird hier nicht noch einmal wiederholt. Lediglich bezüglich der Antennencharakteristik der Antenne 19 und bezüglich der verwendeten Frequenzen können Unterschiede auftreten, die nachfolgend erläutert werden. Im Unterschied zu Antenne 18 weist Antenne 19 eine ungerichtete Antennencharakteristik auf, das heißt, es gibt keine Vorzugsrichtung bei der Abstrahlung. Dies ist dahingehend vorteilhaft, daß die räumliche Orientierung des zweiten Sendeempfängers 2 bezüglich des ersten üblicherweise nicht vorhersagbar und unbekannt ist. Die Zwischenfrequenzebene im zweiten kann sich von der im ersten Sendeempfänger unterscheiden. Die Modulationsfrequenz, welche vom Modulationsgenerator 12 bzw. 13 erzeugt wird, kann geringfügig verschieden sein, wie später näher erläutert. Die von den Hochfrequenzsendern 8, 9 bereitgestellte Trägerfrequenz kann ebenfalls, insbesondere je nach eingesetztem Duplexverfahren, verschieden sein.

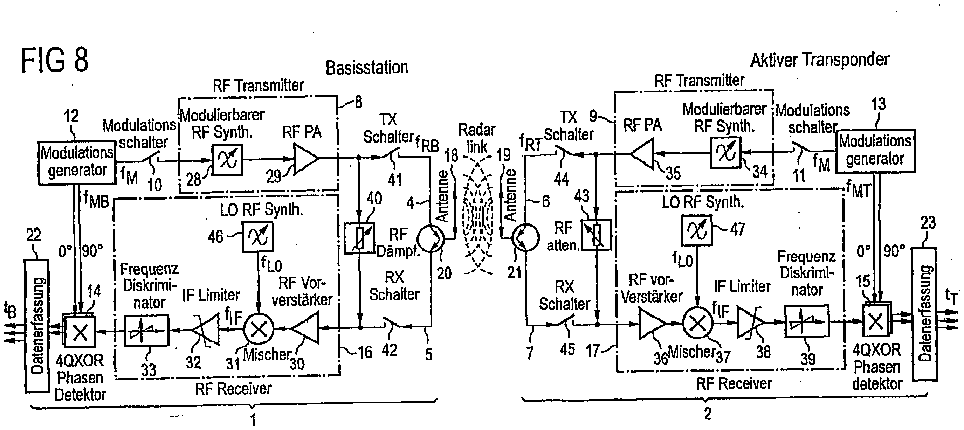

Figur 8 zeigt eine alternative Ausführung des Kommunikationssystems mit Distanzmessung bezüglich Figur 7. Dabei ist bei dem weitergebildeten Kommunikationssystem gemäß Figur 8 zwischen dem Ausgang des Leistungsverstärkers 29 und dem Eingang des Vorverstärkers 30 ein abstimmbarer Hochfrequenz-Dämpfer 40 vorgesehen, der Sendezweig 4 und Empfangszweig 5 in einer Kalibrier-Betriebsart koppelt. Zusätzlich ist zwischen Ausgang des Leistungsverstärkers 29 und Koppelelement 20 und zwischen Koppelelement 20 und Eingang des Vorverstärkers 30 je ein Hochfrequenz-Schalter 41, 42 vorgesehen, die in einer Kalibrier-Betriebsart des ersten Sendeempfängers 1 in geöffnetem und in der Meßbetriebsart in geschlossenem Zustand sind zum Entkoppeln der Antenne 18 in der Kalibrier-Betriebsart. Auch im zweiten Sendeempfänger 2 sind in analoger Verschaltung zum ersten Sendeempfänger 1 ein Dämpfer 43 mit einstellbarer Dämpfung und zwei Hochfrequenz-Schalter 44, 45 zur Kopplung der Antenne 19 an Sende- und Empfangszweig 6, 7 vorgesehen.

In der Kalibrier-Betriebsart wird der Dämpfer 40, 43 des zu kalibrierenden Sendeempfängers 1, 2 auf ein endliches Dämpfungsniveau eingestellt. Das vom Sender 8, 9 erzeugte modulierte, hochfrequente Sendesignal wird nicht über die Antenne 18, 19 übertragen, sondern mittels des Dämpfers 40 in den Empfangszweig 5, 7 des jeweiligen Sendeempfängers eingespeist. Hierdurch können Signallaufzeiten in allen Bauteilen des Sendeempfängers 1, 2, auch in den Hochfrequenz-Blöcken wie beispielsweise Leistungsverstärker 29, 35 und rauscharmem Vorverstärker 30, 36 mit erfaßt werden, da sie sich in der Kalibrierschleife befinden. Bei diesem Kalibrierverfahren wird dem Abwärtsmischer 31, 37 ein unmoduliertes Lokaloszillatorsignal zum Umsetzen auf Zwischenfrequenzebene zugeführt. Hierfür ist beim Ausführungsbeispiel sowohl im ersten wie auch im zweiten Sendeempfänger 1, 2 je ein weiterer Frequenzsynthesizer 46, 47 vorgesehen, der an einen Eingang des Abwärtsmischers 31, 37 angeschlossen ist. Vorteilhafterweise führt das Einfügen des Dämpfers 40, 43 lediglich zu einer geringen zusätzlichen Signallaufzeit, die in der Meßbetriebsart nicht auftritt.

Die Tatsache, daß bei der Kalibrierung mit einer Anordnung gemäß Figur 8 ein Empfangs-Leistungspegel eingestellt ist, der ungleich dem bei der Distanzmessung verwendeten Leistungspegel sein kann, kann in einfacher Weise beispielsweise dadurch korrigiert werden, daß mehrere Kalibrierungen bei verschiedenen Empfangs-Leistungspegeln vorgenommen werden und der Kalibrierwert, das heißt die zu erwartende Signallaufzeit bei der Distanzmessung, durch Interpolation auf den aktuellen Empfangspegel ermittelt wird.

In einer weiteren, alternativen Vorgehensweise wird lediglich eine Kalibrierung bei einem festen Empfangsleistungspegel vorgenommen, zu diesem ermittelten Wert wird jedoch ein Korrekturwert addiert, der vom bei einer Distanzmessung aktuell verwendeten Empfangspegel abhängig ist. Der Korrekturwert kann beispielsweise in einer Korrekturtabelle abgelegt sein, die durch Messungen bei verschiedenen Leistungspegeln ermittelt wurde.

Gemäß einer noch weiteren, alternativen Vorgehensweise kann der Dämpfer gerade so eingestellt werden, daß der Kalibrier-Leistungspegel demjenigen bei der Messung entspricht. Schließlich ist auch eine Kombination verschiedener Kaliebrierverfahren vorteilhaft, welche deren Vorteile in sich vereint.

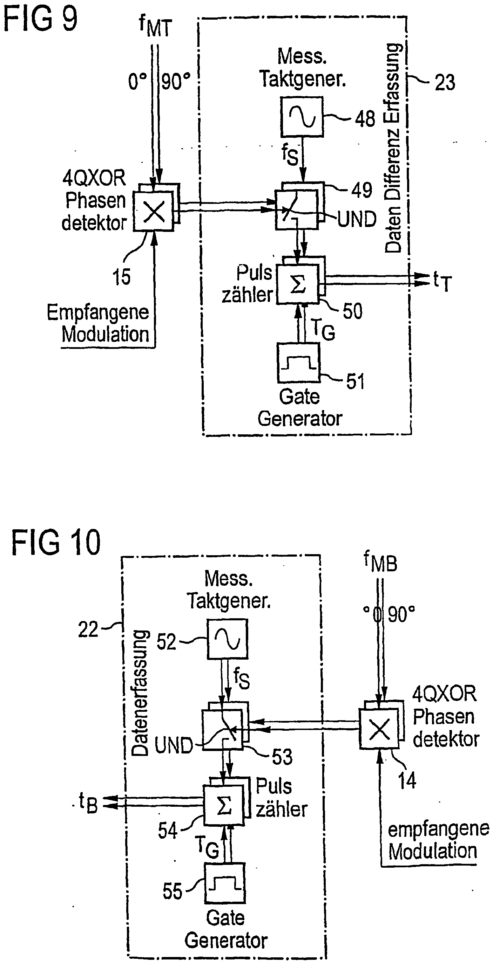

Figur 9 zeigt die Datenerfassungseinheit 23 gemäß Figuren 7 und 8 in detaillierter Weise, die eingangsseitig an den Ausgang des Vier-Quadranten-Phasendetektors 15 im zweiten Sendeempfänger angeschlossen ist. Die Datenerfassungseinheit 23 umfaßt einen Meßtaktgenerator 48, wobei der Ausgang des Taktgenerators 48 mit je einem Eingang eines Paars von zwei logischen UND-Schaltern 49 gekoppelt ist. Weiterhin ist ein Paar von Pulszählern 50 vorgesehen, deren Eingänge zum einen mit den UND-Schaltern 49 und zum anderen mit dem Ausgang eines Gate-Generators 51 verbunden sind. Steuerseitig ist das Schalterpaar 49 mit den beiden Ausgängen des Vier-Quadranten-Phasendetektors 15 verbunden. Am Ausgang der Pulszähler 50 steht ein Meßsignal bereit, von dem in einfacher Weise der Meßwert $t_T$ abgeleitet werden kann. Die Datenerfassungseinheit 23 erfaßt das Tastverhältnis des Ausgangssignals des Vier-Quadranten-Phasendetektors 15 und wandelt dieses in ein Paar von Digitalzahlen um, die proportional zum durchschnittlichen Tastverhältnis dieses Signals sind. Dies wird dadurch erzielt, daß die Perioden eines Meßtakts der Frequenz $f_S$ während der High-Pegeldauer des Signals mit moduliertem Tastverhältnis heraufgezählt werden. Zur Mittelung wird dies für eine Gate-Zeit $T_G$ durchgeführt, welche ein ganzzahliges Vielfaches der Periodendauer des Meßsignals mit der Modulationsfrequenz $f_M$ ist.

Figur 10 zeigt die Datenerfassungseinheit 22 gemäß Figur 7 und Figur 8, welche die gleichen Bauteile wie die Datenerfassungseinheit 23 aufweist, die ebenso wie dort beschrieben miteinander verschaltet sind und vorteilhaft zusammenwirken. In Figur 10 sind die Bauteile der Datenerfassungseinheit 22 mit den Bezugszeichen 52 für den Taktgenerator, 53 für das Paar von logischen UND-Schaltern, 54 für das Paar von Pulszählern und 55 für den Gate-Generator versehen. Die Steuereingänge der Schalter 53 sind mit dem Ausgang des zugeordneten Vier-Quadranten-Phasendetektors 14 im ersten Sendeempfänger 1 verbunden. Am Ausgang der Pulszähler 54 ist das Meßsignal $t_B$ ableitbar, aus dem zusammen mit dem vom Pulszähler 50 der Datenerfassungseinheit 23 bereitgestellten Zeitintervall $t_T$ und Kenntnis der Modulationsperiodendauer $T_M$ die gesuchte Signallaufzeit $t_R$ über den Übertragungskanal 3 berechnet werden kann.

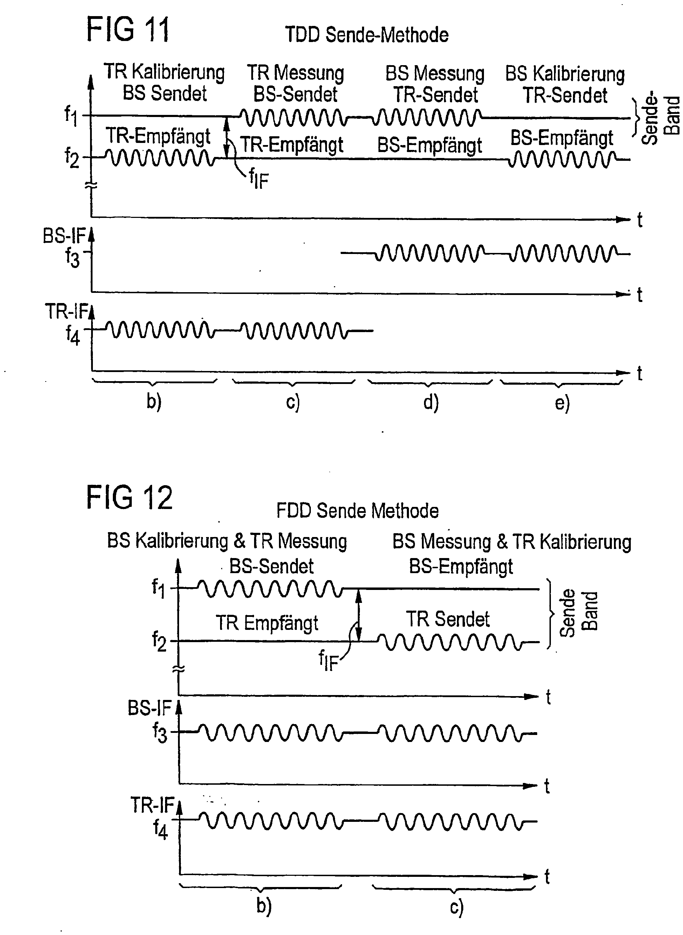

Figur 11 zeigt anhand eines Schaubildes mit beispielhaft sinusförmigen Signalverläufen über der Zeit ein Beispiel eines Betriebsverfahrens für ein Kommunikationssystem gemäß vorliegendem Prinzip, wie beispielsweise in Figur 1a oder 7 gezeigt, anhand eines Zeitduplexverfahrens. Der Vorteil der Verwendung eines Zeitduplexverfahrens liegt beispielsweise in der Möglichkeit, Messungen auch dann durchzuführen, wenn die verfügbare Hochfrequenzbandbreite verhältnismäßig klein ist. Zudem sind keine speziellen Duplexfilter zur Kopplung des Sendeempfängers an die Antenne erforderlich, welche üblicherweise als aufwendige Oberflächenwellenfilter implementiert werden müssen. Alternativ zur nachfolgend detailliert erläuterten Zeitduplex-Meßmethode kann auch ein Frequenzduplexverfahren oder Kombinationen von Zeit- und Frequenzduplex zum Einsatz kommen.

Eine vollständige Laufzeitmessung bei Zeitduplexverfahren gliedert sich in sieben Meßschritte:

a) Abstimmen eines Zeitpunktes zum Beginn einer Signal-Laufzeitmessung über den Übertragungskanal 3 zwischen erstem und zweitem Sendeempfänger 1, 2,
b) Kalibrieren des zweiten Sendeempfängers 2 einschließlich Messen der Signallaufzeit $t_{GT}$ durch die vom zweiten Sendeempfänger 2 umfaßten Bauelemente,
c) Messen des Phasenunterschieds eines im zweiten Sendeempfänger 2 erzeugten Modulationssignals bezüglich eines im ersten Sendeempfänger 1 erzeugten und über den Übertragungskanal 3 übermittelten Modulationssignals im zweiten Sendeempfänger 2,

d) Messen des Phasenunterschieds eines im ersten Sendeempfänger 1 erzeugten Modulationssignals bezüglich eines im zweiten Sendeempfänger 2 erzeugten und über den Übertragungskanal 3 übermittelten Modulationssignals im ersten Sende empfänger 1,

e) Kalibrieren des ersten Sendeempfängers 1 einschließlich Messen der Signallaufzeit $t_{GB}$ durch die vom ersten Sendeempfänger 1 umfaßten Bauelemente,

f) Übertragung der in den Schritten b) und c) gewonnenen Meß- und Kalibrierdaten zum ersten Sendeempfänger 1, und

g) Berechnen der Signallaufzeit $t_R$ über den Übertragungskanal 3 mittels der in den Schritten b) bis e) ermittelten Meßwerte.

Die Schritte b) bis e) können in beliebiger Reihenfolge durchgeführt werden. Es ist jedoch zu beachten, daß die beiden Teilmessungen gemäß Schritt c) und d) zeitlich möglichst nahe beieinander ausgeführt werden, damit die Phasen der Takte nicht auseinanderdriften. Weiterhin sollten für einen Sendeempfänger Kalibrier- und Meßschritt zeitlich so nah benachbart sein sollten, daß sich die Übertragungskanalbedingungen während dieser Zeit nicht ändern.

Die Kalibrierschritte b) und e) müssen nicht bei jeder Umlaufzeitmessung bzw. Messung der Laufzeit $t_R$ über den Übertragungskanal 3 durchgeführt werden.

Der erste Sendeempfänger 1 initiiert eine Laufzeitmessung dadurch, daß er eine Nachricht über den Übertragungskanal 3 an den zweiten Sendeempfänger 2 schickt, welche den Beginn einer Laufzeitmessung ankündigt und neben Informationen bezüglich des Startzeitpunktes zusätzlich Informationen bezüglich der zu verwendenden Modulationsfrequenz $f_M$ umfaßt. Zusätzlich können Daten bezüglich weiterer Sicherheitsmerkmale, wie später erläutert, umfaßt sein. Nach dem Empfang dieser Startbotschaft sollten erster und zweiter Sendeempfänger 1, 2 insoweit synchronisiert sein, daß die ausgesendeten Signale in die bei der jeweiligen Gegenstelle vorgesehene Meßzeit fallen. Eine Phasen-Synchronisation der Modulationssignale im ersten und zweiten Sendeempfänger 1, 2 bezüglich der Modulationsgeneratoren 12, 13 ist nicht erforderlich und auch nicht vorgesehen.

Der Schritt b), nämlich das Kalibrieren des zweiten Sendeempfängers 2, ist in Figur 11 anhand der Spalte b) im linken Bildviertel gezeigt. Demnach sendet der erste Sendeempfänger 1 ein unmoduliertes Trägersignal zum zweiten Sendeempfänger 2, der dieses Signal empfängt. Als Lokaloszillatorsignal erzeugt der zweite Sendeempfänger 2 ein Hochfrequenzsignal, welches mit der Modulationsfrequenz $f_M$ moduliert ist. Das unmodulierte Trägersignal ist mit f1, das modulierte Lokaloszillatorsignal mit f2 bezeichnet. Das frequenzmodulierte Signal f2 wird beispielsweise im zweiten Sendeempfänger 2 dadurch erzeugt, daß dem modulierbaren Synthesizer 34 im Sendeempfänger 2 ein Modulationssignal zur Frequenzmodulation zugeführt wird. Das Modulationssignal selbst wird vom Modulationsgenerator 13 im zweiten Sendeempfänger 2 erzeugt.

Der Empfänger 17 im zweiten Sendeempfänger mischt das vom modulierbaren Synthesizer 34 bereitgestellte, modulierte Signal f2 mittels des von der Gegenstelle übertragenen unmodulierten Trägers f1 auf eine Zwischenfrequenzebene zu einem Signal f4 herunter. Demnach arbeitet in diesem Fall der erste Sendeempfänger 1 für den zweiten Sendeempfänger 2 als Quasi-Lokaloszillator. Das modulierte Zwischenfrequenzsignal f4 wird mit dem Frequenzdiskriminator 34 demoduliert, der an seinem Ausgang ein Modulationssignal mit der gleichen Frequenz bereitstellt wie das vom Modulationsgenerator 13 erzeugte Signal, jedoch mit einer verschiedenen Phasenlage.

Die Gruppenlaufzeit oder Signallaufzeit $t_{GT}$ innerhalb des zweiten Sendeempfängers 2, kann nun in einfacher Weise durch Phasenvergleich dieser beiden Modulationssignale mittels des Vier-Quadranten-Phasendetektors 15 und der nachgeschalteten Datenerfassungseinheit 23 erfaßt werden.

Wenn man Gruppenlaufzeiten in den Hochfrequenzteilen des zweiten Sendeempfängers 2 vernachlässigt, insbesondere im Leistungsverstärker 35 und im rauscharmen Verstärkern 36, entspricht die ermittelte Gruppenlaufzeit im zweiten Sendeempfänger 2 der Summe aus den Laufzeiten der Bauteile Modulationsgenerator 13, Schalter 11, Synthesizer 34, begrenzendem Verstärker 37 und Frequenzdiskriminator 39. Vorteilhafterweise wird insbesondere bezüglich des begrenzenden Verstärkers 38 die Signallaufzeit der Bauelemente gerade bei demjenigen Leistungspegel ermittelt, welcher auch bei der anschließend durchgeführten Laufzeitmessung über den Kanal 3 auftritt.

Vorteilhaft bei dem beschriebenen Kalibrierschritt ist insbesondere, daß die Gegenstelle, im vorliegenden Fall der erste Sendeempfänger 1, als Quasi-Lokaloszillator arbeitet und deshalb über den Übertragungskanal 3 lediglich ein unmodulierter Träger übertragen werden muß. Hierdurch ist die Kalibrierung des zweiten Sendeempfängers 2 unbeeinflußt von Dispersionseffekten im Übertragungskanal 3. Dabei ist weiterhin zu beachten, daß vorteilhafterweise während der Kalibrierschritte lediglich ein Trägersignal über den Funkkanal übertragen wird und deshalb das Modulationsverfahren ohnehin nicht analysierbar ist.

Im nachfolgenden Schritt c), nämlich der Teilmessung im zweiten Sendeempfänger, werden, wie aus Figur 11 anhand der zweiten Spalte deutlich, die nachfolgend beschriebenen Teilschritte durchgeführt. Der zweite Sendeempfänger 2 erzeugt ein unmoduliertes Lokaloszillatorsignal f2. Der erste Sendeempfänger 1 sendet ein hochfrequentes, frequenzmoduliertes Signal bei der Trägerfrequenz f1, welches die Modulationsfrequenz $f_M$ hat. Dieses frequenzmodulierte Signal f1 wird im vorliegenden Fall im Synthesizer 28 erzeugt, dem ein Modulationssignal zugeführt wird, welches vom Modulationsgenerator 12 erzeugt wird.

Im zweiten Sendeempfänger 2 wird mittels des Hochfrequenzempfängers 17 das an der Antenne 21 einkoppelnde Signal bei der Trägerfrequenz f1 mittels der übertragenen Lokaloszillatorfrequenz f2 auf eine Zwischenfrequenzebene bei der Zwischenfrequenz f4 heruntergemischt. Am Ausgang des Abwärtsmischers 37 steht demnach ein moduliertes Zwischenfrequenzsignal bereit. Dieses wird mittels des Frequenzdiskriminators 39 demoduliert, der an seinem Ausgang ein Modulationssignal mit der Modulationsfrequenz $f_M$, wie vom Modulationsgenerator 12 in der Gegenstelle erzeugt, bereit.

Am Eingang des Phasendetektors 15 ist das Modulationssignal bezüglich des ursprünglich im Modulationsgenerator 12 der Gegenstelle erzeugten Modulationssignals um eine Signallaufzeit verzögert, welche sich zusammensetzt aus der Summe der Signallaufzeiten im Modulationsgenerator 12, dem Schalter 10, dem Synthesizer 28, der ersten Signallaufzeit $t_1$ über den Übertragungskanal, den Signallaufzeiten im begrenzenden Verstärker 38 und dem Frequenzdiskriminator 39. Dabei sind die üblicherweise geringen Signallaufzeiten in den Hochfrequenz-Bauelementen, beispielsweise leistungs- und rauscharme Verstärker, vernachlässigt.

Diese Verzögerung des Modulationssignals wird jedoch vom Phasendetektor 15 nicht erfaßt. Vielmehr erfaßt Phasendetektor 15 die Phasenverzögerung zwischen dem am Ausgang des Frequenzdiskriminators 39 bereitgestellten Modulationssignal und der Phasenlage des vom Modulationsgenerator 13 bereitgestellten Signal. Das Meßergebnis am Phasendetektor 15 setzt sich damit zusammen aus der Summe des Zeitintervalls, welches zur Phasenverschiebung zwischen den vom Modulationsgenerator 12 in der Gegenstelle erzeugten Modulationssignals und dem am Ausgang des Frequenzdiskriminators 39 bereitgestellten Modulationssignals proportional ist und einem unbekannten Zeitintervall $t_x$, welches der Gangunterschied der Modulationsgeneratoren 12 und 13 ist.

In der dritten Spalte c) der Darstellung gemäß Figur 11 ist die Messung der Signallaufzeit im ersten Sendeempfänger 1 beschrieben. Diese ergibt sich in Analogie zur in Schritt c) beschriebenen Messung, bei dem hier vorliegenden Meßschritt d) sind jedoch die Rollen von erstem und zweitem Sendeempfänger 1, 2 gerade vertauscht. Dem entsprechend sind auch die Gruppenlaufzeiten und Signallaufzeiten jeweils bezüglich des gleichen Bauelementes in der Gegenstelle zu betrachten.

Somit ergibt sich im ersten Sendeempfänger 1 am Phasendetektor 14 ein Meßergebnis, welches proportional ist zum Phasenversatz zwischen dem am Ausgang des Frequenzdiskriminators 33 bereitgestellten Modulationssignal und dem vom Modulationsgenerator 12 bereitgestellten Modulationssignal. Dieses Zeitintervall $t_B$ entspricht der Differenz aus dem Zeitintervall, welches der Phasenabweichung zwischen dem am Ausgang des Diskriminators 33 bereitgestellten Modulationssignal und dem von der Gegenstelle erzeugten Modulationssignal im Modulationsgenerator 33 entspricht und aus dem bereits erwähnten, unbekannten Zeitintervall $t_x$, welches den Gangunterschied zwischen Modulationsgeneratoren 12 und 13 repräsentiert.

Im anschließend durchgeführten Kalibrierschritt e), siehe letzte Spalte der Figur 11, wird eine Kalibrierung des ersten Sendeempfängers 1 durchgeführt, bei der durch ein Vorgehen mit vertauschten Rollen der Sendeempfänger 1, 2 bezüglich der Kalibrierung des zweiten Sendeempfängers 2 die Gruppenlaufzeit oder Signallaufzeit $t_{GB}$ durch die abzugleichenden Bauteile des ersten Sendeempfängers 1 ermittelt wird. Auch hier wird über den Übertragungskanal 3 lediglich ein unmoduliertes Trägersignal übertragen. Unter Vernachlässigung der Laufzeiten der Verstärker 29, 30 ergibt sich als Meßergebnis des Kalibrierschrittes e) eine Phasenverzögerung, welche sich aus der Summe der Signallaufzeiten durch Modulationsgenerator 12, Schalter 10, modulierbarem Synthesizer 28, begrenzendem Verstärker 31 und Diskriminator 33 ergibt. Diese bei der Kalibrierung des ersten Sendeempfängers ermittelte Laufzeit ist mit $t_{GB}$ bezeichnet.

Nach den Teilmessungen c) und d) und den Kalibrierschritten b) und e) wird in einem letzten Schritt f) sowohl der bei der Kalibrierung des zweiten Sendeempfängers b) ermittelte Kalibrierwert $t_{GT}$ als auch der bei der Teilmessung im zweiten Sendeempfänger c) ermittelte Wert $t_T$ über den Übertragungskanal 3 oder einen separaten Nutzdatenkanal vom zweiten zum ersten Sendeempfänger 2, 1 übermittelt. Dort können weitere Rechenoperationen, beispielsweise zur Berechnung der Signallaufzeit $t_R$ über den Übertragungskanal 3 und der Ermittlung des Abstands d zwischen erstem und zweitem Sendeempfänger 1, 2 durchgeführt werden.

Mittels der vier in den Schritten b) bis e) ermittelten Meß- und Kalibrierwerte kann die Umlaufzeit $t_R$ über den Übertragungskanal 3 ermittelt werden gemäß:

1. falls $t_B \geq (T_M - t_T)$, gilt:

$$t_R = 1/2(t_B - T_M + t_T - t_{GB} - t_{GT}),$$

oder

2. falls $t_B < (T_M - t_T)$, gilt:

$$t_R = 1/2(t_B + t_T - t_{GB} - t_{GT})$$

In Weiterbildungen des beschriebenen Meßverfahrens kann die Qualität des Ergebnisses dadurch noch weiter verbessert werden, daß über eine Vielzahl von Messungen, die nacheinander ausgeführt werden, gemittelt wird. Weiterhin kann, wie Simulationen zeigen, besonders in Funkkanälen mit hoher Dispersion und großem Fading die Meßqualität dadurch deutlich verbessert werden, daß aufwendigere Algorithmen für eine Nachverarbeitung (post-processing) der Meßwerte angewendet werden. Figur 12 zeigt ein alternatives Meßverfahren mittels Frequenzduplex. Frequenzduplexverfahren können insbesondere dann Anwendung finden, wenn die Bandbreite des Funkkanales, die für Messungen zur Verfügung steht, ausreichend groß ist. Bei einem Frequenzduplexverfahren können die zur Kalibrierung und Messung gemäß Zeitduplexverfahren beschriebenen Teilschritte c) und e) zugleich ausgeführt werden, ebenso wie die Teilschritte b) und d).

Zur Ermittlung der Signallaufzeit über den Übertragungskanal gemäß Frequenzduplexverfahren sind somit lediglich fünf Teilschritte erforderlich:

a) Abstimmen eines Zeitpunktes zum Beginn einer Signal-Laufzeitmessung über den Übertragungskanal 3 zwischen erstem und zweitem Sendeempfänger 1, 2,

b) Kalibrieren des ersten Sendeempfängers 1 einschließlich Messen der Signallaufzeit $t_{GB}$ durch die vom ersten Sendeempfänger 1 umfaßten Bauelelemente und zugleich Messen des Phasenunterschieds eines im zweiten Sendeempfänger 2 erzeugten Modulationssignals bezüglich eines im ersten Sendeempfänger 1 erzeugten und über den Übertragungskanal 3 übermittelten Modulationssignals im zweiten Sendeempfänger 2,

c) Kalibrieren des zweiten Sendeempfängers 2 einschließlich Messen der Signallaufzeit $t_{GT}$ durch die vom zweiten Sendeempfänger 2 umfaßten Bauelemente und zugleich Messen des Phasenunterschieds eines im ersten Sendeempfänger 1 erzeugten Modulationssignals bezüglich eines im zweiten Sendeempfänger 2 erzeugten und über den Übertragungskanal 3 übermittelten Modulationssignals im ersten Sendeempfänger 1,

d) Übertragung der in den Schritten b) und c) gewonnenen Meß- und Kalibrierdaten zum ersten Sendeempfänger 1, und

e) Berechnen der Signallaufzeit $t_R$ über den Übertragungskanal 3 mittels der in den Schritten b) und c) ermittelten Meß- und Kalibrierwerte.

Man erkennt, daß bei Anwendung eines Frequenzduplexverfahrens, wie beispielsweise in Figur 12 anhand der Frequenzverläufe f1 bis f4 bezüglich der Teilschritte b) und c) erläutert, eine deutlich kürzere Meßzeit erforderlich ist. Deshalb kann in besserer Nährung davon ausgegangen werden, daß sich der Funkkanal während der gesamten Meßdauer statisch verhält und die gesamte Kalibrierung und Messung bei gleichen Leistungspegelbedingungen und Phasenverzerrungsbedingungen erfolgen.

Da die Berechnungen der Meßergebnisse und das Kalibrierverfahren prinzipiell gleich wie beim Zeitduplexverfahren ausgeführt werden, soll dies hier nicht noch einmal wiederholt werden.

Anhand des Schaubildes gemäß Figur 12 ist erkennbar, daß beim Frequenzduplexverfahren während einer Teilmessung in einem der beiden Sendeempfänger zugleich der jeweils andere Sendeempfänger kalibriert wird.

In Weiterbildungen der Erfindung kann eine Erhöhung der Meßauflösung dadurch erzielt werden, daß bei der Messung und dem Mitteln über eine Gate-Zeit $T_G$ mittels den entsprechenden Generatoren 51, 55 der Datenerfassungseinheiten 22, 23 gemäß Figuren 7 bis 10 über eine Vielzahl von Taktperioden $T_M$ des Modulationssignals ein Meßtakt verwendet wird, der von einer Taktquelle bereitgestellt wird, welche bezüglich der Frequenz des Modulationssignals $f_M$ inkohärent ist.

Alternativ oder zusätzlich kann die Meßauflösung dadurch weiter erhöht werden, daß bezüglich der Flanken des zu messenden Signals vor der Mittelwertbildung ein Dithering erfolgt.

Hierdurch kann die Auflösung der Messung bei einer Meßtaktfrequenz $f_S$ von der Auflösung

$$\Delta t = 1 / (2\ f_S)$$

erhöht werden auf

$$\Delta t < 1/2 \ (M \ f_S{}^2)^{-1/2}$$

Dabei bezeichnet M die Anzahl der Taktperioden, über die gemittelt wurde.

Es ist anzumerken, daß dies bei praktischen Anwendungen in dispersiven Kanälen nicht gleichbedeutend damit ist, daß die Meßgenauigkeit bezüglich des geringwertigsten Bit (LSB, Least Significant Bit) gleich der Auflösung der Messung ist.

Anhand der obigen Formel ist erkennbar, daß mit dem beschriebenen Verfahren die Auflösung bezüglich Zeit oder Raum theoretisch unendlich groß gemacht werden kann, selbst bei der Benutzung von geringen Modulationsfrequenzen, nämlich durch Wahl einer hohen Meßfrequenz $f_x$ und/oder einer langen Gate-Zeit $T_G$. Dabei kann zugleich durch Verwendung der geringen Modulationsfrequenz Hochfrequenz-Bandbreite eingespart werden.

Für die obige, grobe und pessimistische Abschätzung wurde angenommen, daß der Root-Mean-Square (RMS)-Fehler bezüglich der Signalperiode einer Einzelmessung gleich der Taktperiode des Meßtaktes ist, nämlich $1/f_x$. Tatsächlich ist der RMS-Timing-Fehler jedoch kleiner als die Periodendauer des Meßtaktes. Daraus ergibt sich im Umkehrschluß, daß bei Durchführen einer Messung über eine Gate-Zeit $T_G = M \, T_M$ der erforderliche Meßtakt $f_x$ verringert werden könnte auf

$$f_S = 1/(2 \ \Delta t \ M^{-1/2}).$$

Ein weiterer Vorteil dieses Verfahrens liegt darin, daß das Abtast-Taktsignal eine Periodendauer haben kann, die bedeutend größer sein darf als die zu erzielende Auflösung.

In den vorangegangenen Betrachtungen wurde angenommen, daß erster und zweiter Sendeempfänger 1, 2 eine gleiche Zeitbasis dergestalt haben, daß die Frequenzen der Modulationssignale in erstem und zweitem Sendeempfänger 1, 2 gleich sind, und sich lediglich bezüglich der Phasenlage, welche jeweils zufällig sein kann, unterscheiden. Tritt während der Messung jedoch ein Frequenzoffset $\Delta f_{Mx}$ zwischen den Modulationsfrequenzen von erstem und zweitem Sendeempfänger 1, 2 auf, welcher konstant ist, so führt dies zu einem Meßfehler, der sich nach der Formel

$$\Delta t = 1/2 \ \Delta f_{Mx}/f_M \ (T_{MEAS} - T_G)$$

berechnen läßt. Dabei bezeichnet $T_{MEAS}$ die gesamte Zeitdauer für eine Laufzeitmessung einschließlich aller erforderlichen Teilmeß- und Kalibrierschritte. $T_G$ bezeichnet die Gate-Zeit für eine Teilmessung im ersten oder zweiten Sendeempfänger. Das Vorzeichen des Meßfehlers $\Delta t$ ist abhängig davon, ob die Taktfrequenz im ersten Sendeempfänger größer oder kleiner als die im zweiten Sendeempfänger ist.

Einem derartigen Meßfehler bedingt durch einen Frequenzoffset bezüglich der verwendeten Modulationsfrequenzen kann in einfacher Weise dadurch begegnet werden, daß zwei aufeinander folgende vollständige Laufzeitmessungen durchgeführt werden, einerseits ausgehend vom ersten Sendeempfänger 1 und im zweiten Schritt, mit vertauschten Rollen der Sendeempfänger ausgehend vom zweiten Sendeempfänger 2. Das korrigierte Meßergebnis berechnet sich dann aus dem arithmetischen Mittelwert der Ergebnisse von erster und zweiter Messung. Hierdurch heben sich die durch Frequenzoffset bedingten Meßfehler gerade gegenseitig weg.

Dieses Verfahren, welches für einen konstanten Frequenzoffset gültig ist, kann auch zur Korrektur von Frequenzdrifteffekten ausgedehnt werden, nämlich dadurch, daß mehrere aufeinanderfolgende Messungen durchgeführt werden und die Meßergebnisse bezüglich der Frequenzfehler ausgewertet werden.

Das Kommunikationssystem gemäß vorliegendem Prinzip kann den eingangs beschriebenen Angriff mittels den Übertragungskanal 3 verlängernden Transpondern erfolgreich begegnen, welche zusätzliche Signallaufzeiten zum einen auf Grund des verlängerten Funkkanals und zum anderen auf Grund zusätzlicher Schaltkreislaufzeiten einfügen. Um jedoch auch Angriffe mittels Transpondern zu begegnen, welche das Etablieren kurzer Schleifen mit geringer Signallaufzeit und langer Schleifen mit großer Signallaufzeit kombinieren und auf Grund vorangegangener Messungen mittels digitaler Signalprozessoren ein zukünftiges Meßergebnis voraus berechnen, können nachfolgend beschriebene zusätzliche Verfahrensmerkmale zum Betrieb des Kommunikationssystems vorteilhaft sein:

Durch Anwendung eines Frequenzsprungverfahrens, sogenanntes frequency hopping, und abwechselnde Benutzung verschiedener Modulationsverfahren kann in vorteilhafter Weise eine weitere Verbesserung der Abwehr von Angriffen auf die Übertragungsstrecke erzielt werden. Dies ist insbesondere dadurch problemlos möglich, daß das zugrunde liegende Meßprinzip unabhängig von den Trägerfrequenzen des Funkkanals und unabhängig von der verwendeten Modulationsart ist. Als einzige Bedingung für die Art der Funkübertragung gilt, daß die Kalibrierung von und die Messung mittels erstem und zweitem Sendeempfänger 1, 2 bei der gleichen Trägerfrequenz und mit der gleichen Modulationsmethode durchzuführen ist. Dabei ist weiterhin zu beachten, daß vorteilhafterweise während der Kalibrierschritte lediglich ein Trägersignal über den Funkkanal übertragen wird und deshalb das Modulationsverfahren ohnehin nicht analysierbar ist.

Eine weitere Verbesserung des Kommunikationssystems gegen unerwünschte Angriffe kann durch ein Phasenscrambling der eingesetzten Modulationssignale in erstem und zweitem Sendeempfänger 1, 2 erzielt werden. Dies ist insbesondere dadurch problemlos möglich, daß wie oben gezeigt, die relative Phasenlage der Modulationssignale zueinander ohne Belang für die Qualität des Meßergebnisses ist. Als Grenze hierbei gilt, daß während der Durchführung einer Laufzeitmessung die Phasenlage des Modulationssignals nicht signifikant verändert werden soll. Das Scrambeln der Phasenlage der Modulationssignale in erstem und zweitem Sendeempfänger 1, 2 kann vorteilhafterweise entweder zufällig in diskreten Schritten oder kontinuierlich jeweils vor Beginn einer Laufzeitmessung durchgeführt werden. Dies schützt das Kommunikationssystem vor einer intelligenten Vorausberechnung der Verhältnisse bei der nächsten zu erwartenden Messung und Ausnutzen der vorausberechneten Modulationssignalphasen dadurch, daß die angreifenden Transponder die Antwort des zweiten Sendeempfängers 2 so simulieren, daß eine gültige Messung innerhalb eines zulässigen Abstandes $d < d_L$ zustande kommt. Ein zufälliges Scrambeln der Phasenlage der Modulationssignale könnte beispielsweise dadurch erzielt werden, daß das Modulationssignal in ein hoch übertaktetes Schieberegister am seriellen Eingang eingegeben wird und zufällig einer der parallelen Abgriffe des Schieberegisters zum Abführen des Modulationssignals ausgewählt wird.

Vorteilhafterweise kann das Phasenscrambling in erstem und zweitem Sendeempfänger 1, 2 unabhängig von der jeweiligen Gegenstelle 2, 1 autonom erfolgen. Alternativ könnte auch das Phasenscrambling in einem der beiden Sendeempfänger 1, 2 vom jeweils anderen Sendeempfänger 2, 1 durch ein entsprechendes Datenwort gesteuert werden.

Zur weiteren Verbesserung der Sicherheit des Kommunikationssystems gegenüber unerwünschten Angriffen kann es weiterhin vorteilhaft sein, die jeweils zu Beginn eines Meßzyklus durchgeführte Abstimmung des Beginns der Messung zur Laufzeit $t_R$ nicht im Klartext über den Übertragungskanal 3 übertragen, sondern innerhalb einer Übertragung von Nutzdaten zwischen erstem und zweitem Sendeempfänger 1, 2 oder zufällig erzeugten Daten zu verstecken. Hierdurch ist es für einen angreifenden Transponder praktisch unmöglich, den Beginn einer Signallaufzeitmessung vorher zu sagen, um rechtzeitig zwischen langer und kurzer Übertragungsschleife umzuschalten.

Eine weitere Verbesserung der Eigenschaften des Kommunikationssystems bezüglich unerwünschter Angriffe auf die Abstandsmessung kann dadurch erreicht werden, daß die verwendeten Bitfolgen der Meßsignale, beispielsweise 010101..., welche von erstem bzw. zweitem Sendeempfänger 1, 2 ausgesendet werden, in Sequenzen von Nutzdaten versteckt werden, welche ebenfalls über den Übertragungskanal gesendet werden. Hierdurch sind für angreifende Transponder die Meßdaten nicht von Nutzdaten oder zufälligen Daten unterscheidbar.

Insbesondere bei Verwendung von hochauflösenden Messungen durch Mitteln über eine Vielzahl von Messungen oder durch lange Gate-Zeitdauern $T_G$ sind die zur Messung verwendeten Bitmuster der Meßsignale oder Modulationssignale, beispielsweise 010101... -Bitfolgen verhältnismäßig leicht für Angreifer identifizierbar. Hier kann es besonders vorteilhaft sein, die Gate-Zeit $T_G$ der beiden Teilmessungen in erstem und zweitem Sendeempfänger 1, 2 in eine Vielzahl kurzer Teil-Zeitintervalle aufzuteilen, diese Daten innerhalb von zu übertragenden Nutzdaten-Sequenzen zu verteilen bzw. zu streuen und anschließend durch entsprechende Maßnahmen in den Datenerfassungseinheiten 22, 23, durch aufeinanderfolgendes Öffnen und Schließen des Meß-Tores, bei derart verteilten Messungen wieder zusammenzusetzen. Bei Verwendung dieses Verfahrens ist jedoch darauf zu achten, daß die gesamte Meßdauer nicht zu groß wird, damit der Funkkanal nicht zu instationär wird.

Zwischen aufeinanderfolgenden Abstandsmessungen kann in einer weiteren, vorteilhaften Ausführungsform des Betriebsverfahrens für das Kommunikationssystem gemäß vorliegendem Prinzip die Modulationsfrequenz verändert werden. Das Verändern der Modulationsfrequenz in erstem und zweitem Sendeempfänger 1, 2 kann dabei beispielsweise vom ersten Sendeempfänger 1 bestimmt werden, der entsprechende Steuersignale an den zweiten Sendeempfänger 2 übermittelt. Hierdurch kann ein angreifender Transponder nicht einfach vorhersagen, welche Meßfrequenz oder Modulationsfrequenz benutzt werden wird und zu verfälschen ist.

Eine noch weitere Verbesserung des Betriebsverfahrens für das vorliegende Kommunikationssystem kann beispielsweise dadurch erzielt werden, daß die von erstem und zweitem Sendeempfänger 1, 2 verwendeten Modulationsfrequenzen um eine geringe, bekannte Frequenzabweichung von einer Soll-Modulationsfrequenz abweichen. Hierdurch ergibt sich zwangsläufig ein signifikanter Meßfehler, der jedoch in einer Nachverarbeitung des Meßwertes herausgerechnet werden kann, da der zusätzlich eingefügte Modulationsfrequenz-Offset erstem oder zweitem Sendeempfänger 1, 2 oder beiden bekannt ist. Einem angreifenden Transponder ist diese geringe Frequenzabweichung jedoch nicht bekannt. Der Frequenzfehler, der zusätzlich eingefügt wird, kann entweder zufällig und völlig unabhängig in erstem und zweitem Sendeempfänger 1, 2 eingeführt und rückgerechnet werden oder einer der beiden Sendeempfänger 1, 2 kann den anderen Sendeempfänger durch entsprechende Steuersignale ansteuern.

Ein weiteres vorteilhaftes Verfahren zur Erhöhung der Betriebssicherheit des vorliegenden Kommunikationssystems kann die Verwendung einer Fehler-Maske umfassen. Dabei wird eine bestimmte, vorbekannte Anzahl von durchzuführenden Abstandsmessungen absichtlich korrumpiert, derart, daß eigentlich ein Abstandsmeßergebnis gemessen werden müßte, welches außerhalb der Grenz-Reichweite $d_L$ des Meßsystems liegt. Wenn jedoch dem ersten Sendeempfänger 1 ständig vom Transponder rückkehrende Signale geschickt werden, welche zum Ergebnis führen, daß der Meßabstand d innerhalb des Grenzwertes $d_L$ liegt, so ist dies ein sicheres Indiz dafür, daß gerade ein Angriff auf das Kommunikationssystem durchgeführt wird.

Zum Betrieb des vorliegenden Kommunikationssystems kann es von besonderem Vorteil sein, eine sichere Nutzdatenübertragung zwischen erstem und zweitem Sendeempfänger 1, 2 zu etablieren, welche unempfindlich gegenüber Transponderangriffen ist. Eine derartige, sichere Datenübertragung ist in jedem Fall erforderlich für eine sichere Authentifizierung des zweiten Sendeempfängers 2 durch den ersten Sendeempfänger 1. Zum Zweck der dem vorliegenden Prinzip zugrundeliegenden Distanzmessung durch Signallaufzeiterfassung kann es vorteilhaft sein, folgende Daten oder Informationen zwischen erstem und zweitem Sendeempfänger 1, 2 auszutauschen:

- den geplanten Beginn einer Messung vom ersten zum zweiten Sendeempfänger 1, 2,
- die Initialisierungswerte für die Messung wie beispielsweise Modulationsfrequenz, Modulationsphasenlage, zusätzliche Abweichungen der Modulationsfrequenz etc. ebenfalls vom ersten zum zweiten Sendeempfänger 1, 2 und schließlich
- die Ergebnisse der Meß- und Kalibrierwerte einschließlich eventueller Korrekturwerte für zusätzlich eingefügte Frequenzabweichungen vom zweiten zurück zum ersten Sendeempfänger 2, 1.

Vorteilhafterweise wird eine derartige Datenübertragung zusätzlich zur bisher beschriebenen Meßdatenübertragung zwischen erstem und zweitem Sendeempfänger 1, 2 vorgesehen. Die für die Laufzeitmessung erforderlichen Blöcke in erstem und zweitem Sendeempfänger 1, 2 können dabei unverändert für die Nutzdatenübertragung mitverwendet werden.

Alternativ zu den gezeigten Ausführungsbeispielen können sowohl im ersten, als auch im zweiten Sendeempfänger 1, 2 anstelle der gemeinsamen Sende- und Empfangsantennen auch getrennte Antennen für Senden und Empfangen vorgesehen sein. Der Übertragungskanal 3 zwischen erstem und zweitem Sendeempfänger 1, 2 ist bevorzugt ein Funkkanal zur Hochfrequenzübertragung. Mit vorliegendem Prinzip können jedoch auch Laufzeitmessungen über andere Übertragungskanäle, beispielsweise optische Strecken wie Laser-Links durchgeführt werden.

Sowohl im ersten als auch im zweiten Sendeempfänger 1, 2 kann für Senden und Empfangen ein gemeinsames Hochfrequenzfilter vorgesehen sein, oder es können getrennte Hochfrequenzfilter für Sende- und Empfangszweige 4, 5, 6, 7 in den Sendeempfängern 1, 2 vorgesehen sein.

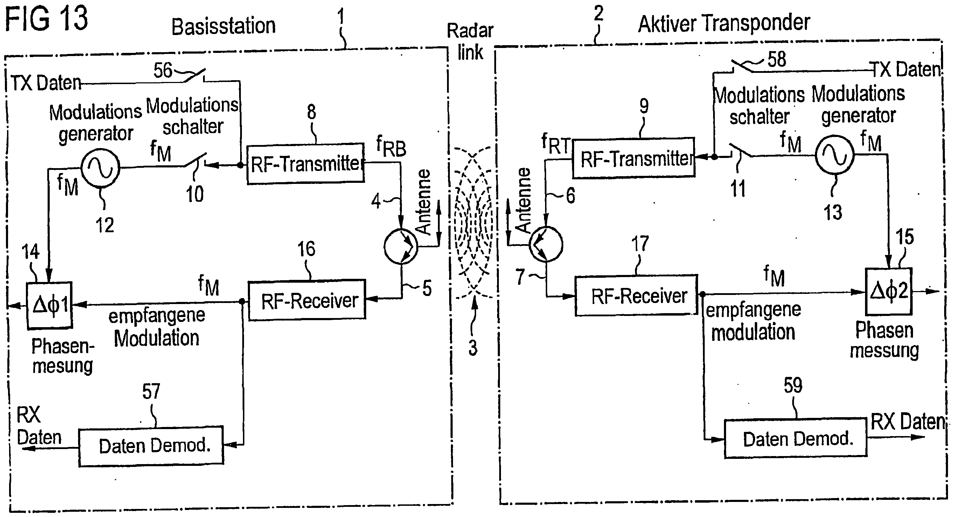

Figur 13 zeigt eine Weiterbildung des Kommunikationssystems von Figur 1a anhand eines beispielhaften, vereinfachten Blockschaltbildes. Dieses entspricht in Aufbau und Funktion weitgehend dem Gegenstand gemäß Figur 1a, insoweit soll dies hier nicht noch einmal wiederholt werden. Zusätzlich ist das Kommunikationssystem für Nutzdatenübertragung ausgelegt. Hierfür ist in erstem und zweitem Sendeempfänger 1, 2 je Sende-Dateneingang vorgesehen, der über je einen Schalter 56, 58 mit dem Eingang des Hochfrequenz-Senders 8, 9 verbunden ist. Empfangsseitig ist je ein Daten-Demodulator 57, 59 vorgesehen, der jeweils an seinem Eingang mit dem Hochfrequenzempfänger 16, 17 an dessen Ausgang verbunden ist und an seinem Ausgang jeweils Empfangsdaten bereitstellt.

Das derart weitergebildete Kommunikationssystem ermöglicht neben der Distanzmessung zusätzlich eine Übertragung von Nutzdaten, beispielsweise zur Identifizierung oder zur Authentifizierung. Zusätzlich können Kalibrier- und Meßdaten über den Nutzdatenkanal übertragen werden.

**Patentansprüche**

**1.** Kommunikationssystem mit einem ersten Sendeempfänger (1) und einem zweiten Sendeempfänger (2), welche durch einen Übertragungskanal (3) bi-direktional miteinander gekoppelt sind und eine Distanz d voneinander haben, wobei eine Vorrichtung (14, 15, 22, 34, 24) zur Messung der Signallaufzeit ($t_R$) über den Übertragungskanal (3) vorgesehen ist zur Begrenzung der Reichweite des Kommunikationssystems, und sowohl der erste als auch der zweite Sendeempfänger (1, 2) jeweils folgende Merkmale aufweisen:

- einen Sendezweig (4, 6) ausgebildet zum Senden eines mit einem Modulationssignal modulierten Signals über den Übertragungskanal (3) an die Gegenstelle (2, 1) und einen Empfangszweig (5, 7) zum Empfangen eines von der Gegenstelle (2, 1) ausgesendeten, mit dem jeweiligen Modulationssignal der Gegenstelle modulierten Signals und

- eine Phasenvergleichseinrichtung (14, 15) zum Ermitteln eines der Phasenabweichung zwischen dem ausgesendeten und dem empfangenen Modulationssignal entsprechenden Zeitintervalls ($t_B$, $t_T$), wobei der Messwert des Zeitintervalls ($t_T$) vom zweiten zum ersten Sendeempfänger übermittelt wird,

- die Gegenstelle der jeweils andere Sendeempfänger (2, 1) aus der Menge umfassend den ersten und zweiten Sendeempfänger (1, 2) ist,

- die Vorrichtung (14, 15, 22, 34, 24) zur Messung der Signallaufzeit ($t_R$) über den Übertragungskanal (3) die Phasenvergleichseinrichtungen (14, 15) des ersten und zweiten Sendeempfängers (1, 2) umfasst,

- die Modulationssignale der Sendeempfänger die gleiche Modulationsfrequenz aufweisen oder zumindest eine bekannte Frequenzabweichung zwischen beiden Modulationsfrequenzen existiert,

- und die Wellenlänge der Grundwelle der Modulationsfrequenz dieses Signalsgrößer als die zu messende Distanz d ist, **dadurch gekennzeichnet, daß** die Modulationssignale von erstem und zweitem Sendeempfänger eine zufällige Phasenlage zueinander haben.

2. Kommunikationssystem nach Anspruch 1,
   **dadurch gekennzeichnet, daß** das Kommunikationssystem ein Mittel (25) zur Berechnung des Abstandes (d) des ersten vom zweiten Sendeempfänger (1, 2) in Abhängigkeit von der Signallaufzeit ($t_R$) aufweist, welches mit der Vorrichtung zur Messung der Signallaufzeit gekoppelt ist und welches das Kommunikationssystem in einen ersten Zustand versetzt, wenn der berechnete Abstand (d) kleiner oder gleich einem vorgebbaren Abstand ($d_L$) ist und das Kommunikationssystem in einen zweiten Zustand versetzt, wenn der berechnete Abstand (d) größer als der vorgegebene Abstand ($d_L$) ist.

3. Kommunikationssystem nach Anspruch 2,
   **dadurch gekennzeichnet, daß** eine Übertragung von Nutzdaten über den Übertragungskanal (3) oder über einen separaten Nutzdatenkanal, der den ersten und den zweiten Sendeempfänger (1, 2) zur Übertragung von Nutzdaten koppelt, in Abhängigkeit davon erfolgt, ob das Kommunikationssystem in den ersten oder in den zweiten Zustand versetzt ist.

4. Kommunikationssystem nach einem der Ansprüche 1 bis 3,
   **dadurch gekennzeichnet, daß** das Kommunikationssystem ein kontaktloses Identifizierungssystem und/oder ein kontaktloses Zutritts-Kontrollsystem ist, mit einer Vergleichseinrichtung, die mit dem ersten Sendeempfänger (1) gekoppelt ist und die einen vom zweiten Sendeempfänger (2) mittels einer Nutzdatenübertragung abgefragten Identifizierungscode mit einer Menge von vorbestimmten Identifizierungscodes vergleicht.

5. Kommunikationssystem nach einem der Ansprüche 1 bis 4,
   **dadurch gekennzeichnet, daß** der erste Sendeempfänger (1) eine Feststation und der zweite Sendeempfänger (2) ein Mobilteil ist.

6. Kommunikationssystem nach einem der Ansprüche 1 bis 4,
   **dadurch gekennzeichnet, daß** der erste Sendeempfänger (1) und der zweite Sendeempfänger (2) je ein Mobilteil sind.

7. Kommunikationssystem nach einem der Ansprüche 1 bis 6,
   **dadurch gekennzeichnet, daß** das Kommunikationssystem ein Mittel zur Laufzeitmessung (14, 15, 22, 23) durch Erfassen der Umlaufzeit mittels aktivem Abstands-Radar umfaßt.

8. Kommunikationssystem nach einem der Ansprüche 1 bis 7,
   **dadurch gekennzeichnet, daß** das Kommunikationssystem ein erstes Meßsystem (14, 22) zur Messung einer ersten Signallaufzeit vom ersten Sendeempfänger (1) zum zweiten Sendeempfänger (2), ein zweites Meßsystem (15, 23) zur Messung einer zweiten Signallaufzeit vom zweiten Sendeempfänger (2) zum ersten Sendeempfänger (1) und eine Auswerteeinheit (24) umfaßt, welche aus erster und zweiter Signallaufzeit die Signallaufzeit ($t_R$) über den Übertragungskanal (3) ermittelt.

9. Kommunikationssystem nach Anspuch 8,
   **dadurch gekennzeichnet, daß** die Signallaufzeit ($t_R$) über den Übertragungskanal (3) in der Auswerteeinheit (24) ermittelt wird durch Bildung des arithmetischen Mittelwertes gemäß $t_R = 1/2 (t1 + t2)$, mit $t_R$ gleich Signallaufzeit ($t_R$) über den Übertragungskanal (3), t1 gleich erste Signallaufzeit und t2 gleich zweite Signallaufzeit, und daß der Abstand (d) zwischen erstem Sendeempfänger (1) und zweitem Sendeempfänger (2) ermittelt wird nach der Beziehung Abstand (d) gleich Produkt aus Signallaufzeit (tR) und Lichtgeschwindigkeit (c).

10. Kommunikationssystem nach einem der Ansprüche 8 oder 9,
**dadurch gekennzeichnet, daß** die Auswerteeinheit die Signallaufzeit $t_R$ bestimmt unter Anwendung der Beziehungen $t_R = 1/2(t_B - T_M + t_T)$, falls gilt $t_B \geq (T_M - t_T)$ und $t_R = 1/2(t_B + t_T)$, falls gilt $t_B < (T_M - t_T)$, wobei die Periodendauer $T_M$ gleich der Periodendauer des Modulationssignals und $t_B$, $t_T$ die den Phasenabweichungen zwischen dem ausgesendeten und dem empfangenen Modulationssignal entsprechenden Zeitintervalle sind, die von den Phasenvergleichseinrichtungen (14, 15) im ersten beziehungsweise zweiten Sendeempfänger (1, 2) ermittelt sind, wobei eine im zweiten Sendeempfänger (2) auftretende Signallaufzeit einem ganzzahligen Vielfachen der Periodendauer $T_M$ entspricht.

11. Kommunikationssystem nach einem der Ansprüche 1 bis 10,
**dadurch gekennzeichnet, daß** der erste und der zweite Sendeempfänger (1, 2) je einen Modulationsgenerator (12, 13) zum Erzeugen des Modulationssignals aufweisen, der ausgangsseitig zum einen zu- und abschaltbar mit dem Sendezweig (4, 6) und zum anderen mit der Phasenvergleichseinrichtung (14, 15) gekoppelt ist.

12. Kommunikationssystem nach einem der Ansprüche 1 bis 11,
**dadurch gekennzeichnet, daß** eine Kalibriereinrichtung vorgesehen ist zum Erfassen von Signallaufzeiten ($t_{GB}$, $t_{GT}$) in den Sende- und Empfangszweigen (4, 6; 5, 7) der Sendeempfänger (1, 2).

13. Kommunikationssystem nach Anspruch 12,
**dadurch gekennzeichnet, daß** der Empfangszweig (5, 7) der Sendeempfänger (1, 2) je einen Abwärts-Frequenzmischer (31, 37) aufweist, der in einer Kalibrier-Betriebsart des Kommunikationssystems ein von der Gegenstelle (2, 1) erzeugtes und unmoduliert übertragenes Lokaloszillator-Signal mischt mit einem im Sendezweig (4, 6) erzeugten modulierten Signal,
wobei die Phasenvergleichseinrichtung (14, 15) in der Kalibrier-Betriebsart die Phasenlagen von im Sendezweig erzeugtem modulierten Signal vergleicht mit der Phasenlage eines am Ausgang des Abwärtsmischers (31, 37) bereitgestellten Signal, welches abgeleitet ist vom von der Gegenstelle (2, 1) erzeugten Lokaloszillator-Signal und vom im Sendezweig (4, 6) erzeugten modulierten Signal.

14. Kommunikationssystem nach Anspruch 12,
**dadurch gekennzeichnet, daß** die Sendeempfänger (1, 2) je ein Dämpfungsglied (40, 43) mit einstellbarer Dämpfung aufweisen, das in einer Kalibrier-Betriebsart des Sendeempfängers (1, 2) den Sendezweig (4, 6) ausgangsseitig mit dem Empfangszweig (5, 7) eingangsseitig koppelt.

15. Kommunikationssystem nach einem der Ansprüche 1 bis 14,
**dadurch gekennzeichnet, daß** im Empfangszweig (5, 7) ein Heterodynempfänger (16, 17) vorgesehen ist, umfassend einen Abwärtsmischer (31, 37), der ein empfangenes Signal auf eine Zwischenfrequenzebene heruntermischt mit nachgeschaltetem begrenzenden Verstärker (32, 38) und Freqeuenz-Diskriminator (33, 39).

16. Kommunikationssystem nach einem der Ansprüche 1 bis 15,
**dadurch gekennzeichnet, daß** die Phasenvergleichseinrichtung (14, 15) ein 4-Quadranten-Phasendetektor ist.

17. Kommunikationssystem nach Anspruch 16,
**dadurch gekennzeichnet, daß** der 4-Quadranten-Phasendetektor (14, 15) zwei Multiplizierer umfaßt, derart, daß der 4-Quadranten-Phasendetektor zwei Eingänge jeweils ausgelegt zum Zuführen komplexwertiger Signale mit zueinander orthogonalen Signalkomponenten aufweist und die Multiplizierer jeweils mittels Exklusiv-ODER-Gattern aufgebaut sind.

18. Kommunikationssystem nach Anspruch 16 oder 17,
**dadurch gekennzeichnet, daß** an einen Ausgang des 4-Quadranten-Phasendetektors (14, 15) eine Daten-Erfassungseinheit (22, 23) angeschlossen ist, die das Tastverhältnis der ausgangsseitig am 4-Quadranten-Phasendetektor (14, 15) bereitgestellten Signale erfaßt.

19. Kommunikationssystem nach einem der Ansprüche 1 bis 18,
**dadurch gekennzeichnet, daß** der erste Sendeempfänger (1) eine Antenne (18) mit einer gerichteten Antennencharakteristik umfaßt, welche an deren Sende- und Empfangszweig (4, 5) angekoppelt ist, und daß der zweite Sendeempfänger (2) eine Antenne (19) mit einer ungerichteten Charakteristik umfaßt, die an deren Sende- und Empfangszweig (6, 7) angekoppelt ist.

**20.** Kommunikationssystem nach einem der Ansprüche 1 bis 19,
**dadurch gekennzeichnet, daß** die Sendeempfänger (1, 2) je ein Duplexfilter (20, 21) zum Ankoppeln einer Antenne (18, 19) an Sende- und Empfangszweig (4, 5, 6, 7) aufweisen.

**21.** Kommunikationssystem nach einem der Ansprüche 1 bis 19,
**dadurch gekennzeichnet, daß** die Sendeempfänger (1, 2) je einen Hochfrequenzschalter (21, 22) zum Ankoppeln einer Antenne (18, 19) an Sende- und Empfangszweig (4, 5, 6, 7) aufweisen.

**22.** Kommunikationssystem nach einem der Ansprüche 1 bis 21,
**dadurch gekennzeichnet, daß** die Sendeempfänger (1, 2) ein übertaktet betriebenes Schieberegister aufweisen, zum Erzeugen einer einstellbaren Phasenlage des Modulationssignals.

**23.** Kommunikationssystem nach einem der Ansprüche 1 bis 22,
**dadurch gekennzeichnet, daß** der zweite Sendeempfänger (2) ein tragbares elektronisches Etikett ist.

**24.** Kommunikationssystem nach Anspruch 2 oder 3,
**dadurch gekennzeichnet, daß** das Kommunikationssystem eine Anzeigeeinheit (26) umfaßt zum Anzeigen des Wertes des berechneten Abstands (d).

**25.** Verfahren zum Betrieb eines Kommunikationssystems mit einem ersten Sendeempfänger (1) und einem zweiten Sendeempfänger (2), welche durch einen Übertragungskanal (3) bi-direktional miteinander gekoppelt sind und eine Distanz d voneinander haben,
mit folgenden Verfahrensschritten:

- Messen der Signallaufzeit ($t_R$) über den Übertragungskanal (3) zur Begrenzung der Reichweite des Kommunikationssystems,
dabei Durchführen eines Phasenvergleichs im ersten Sendeempfänger (1) zum Ermitteln einer Phasenabweichung zwischen einem vom ersten Sendeempfänger (1) ausgesendeten und einem vom ersten Sendeempfänger (1) empfangenen Modulationssignal und Durchführen eines Phasenvergleichs im zweiten Sendeempfänger (2) zum Ermitteln einer Phasenabweichung zwischen einem vom zweiten Sendeempfänger (2) ausgesendeten und einem vom zweiten Sendeempfänger (2) empfangenen Modulationssignal, wobei ein von der ermittelten Phasenabweichung abhängiger Messwert ($t_T$) vom zweiten zum ersten Sendeempfänger übermittelt wird, bei dem das Übertragen von Daten auf dem Übertragungskanal (3) mittels eines Zeitduplexverfahrens oder mittels eines Frequenzduplexverfahrens erfolgt, wobei
- die Modulationssignale der Sendeempfänger die gleiche Modulationsfrequenz aufweisen oder zumindest eine bekannte Frequenzabweichung zwischen beiden Modulationsfrequenzen existiert,
- mit einer Wellenlänge der Grundwelle der Modulationsfrequenz dieses Signals, die länger als die zu messende Distanz d ist,

**dadurch gekennzeichnet, daß** die Modulationssignale von erstem und zweitem Sendeempfänger eine zufällige Phasenlage zueinander haben.

**26.** Verfahren nach Anspruch 25,
umfassend die folgenden Verfahrensschritte zur Laufzeitmessung über den Übertragungskanal (3):

a) Abstimmen eines Zeitpunktes zum Beginn einer Signal-Laufzeitmessung über den Übertragungskanal (3) zwischen erstem und zweitem Sendeempfänger (1, 2),
b) Kalibrieren des zweiten Sendeempfängers (2) einschließlich Messen der Signallaufzeit ($t_{GT}$) durch die vom zweiten Sendeempfänger umfaßten Bauelemente,
c) Messen des Phasenunterschieds eines im zweiten Sendeempfänger (2) erzeugten Modulationssignals bezüglich eines im ersten Sendeempfänger (1) erzeugten und über den Übertragungskanal (3) übermittelten Modulationssignals im zweiten Sendeempfänger (2),
d) Messen des Phasenunterschieds eines im ersten Sendeempfänger (1) erzeugten Modulationssignals bezüglich eines im zweiten Sendeempfänger (2) erzeugten und über den Übertragungskanal (3) übermittelten Modulationssignals im ersten Sendeempfänger (1),
e) Kalibrieren des ersten Sendeempfängers (1) einschließlich Messen der Signallaufzeit ($t_{GB}$) durch die vom ersten Sendeempfänger (1) umfaßten Bauelemente,
f) Übertragung der in den Schritten b) und c) gewonnenen Meß- und Kalibrierdaten zum ersten Sendeempfänger

(1), und

g) Berechnen der Signallaufzeit ($t_R$) über den Übertragungskanal (3) mittels der in den Schritten b) bis e) ermittelten Meßwerte.

**27.** Verfahren nach Anspruch 25,
umfassend die folgenden Verfahrensschritte zur Laufzeitmessung über den Übertragungskanal (3):

a) Abstimmen eines Zeitpunktes zum Beginn einer Signal-Laufzeitmessung über den Übertragungskanal (3) zwischen erstem und zweitem Sendeempfänger (1, 2),

b) Kalibrieren des ersten Sendeempfängers (1) einschließlich Messen der Signallaufzeit ($t_{GB}$) durch die vom ersten Sendeempfänger (1) umfaßten Bauelemente und zugleich Messen des Phasenunterschieds eines im zweiten Sendeempfänger (2) erzeugten Modulationssignals bezüglich eines im ersten Sendeempfänger (1) erzeugten und über den Übertragungskanal (3) übermittelten Modulationssignals im zweiten Sendeempfänger (2),

c) Kalibrieren des zweiten Sendeempfängers (2) einschließlich Messen der Signallaufzeit ($t_{GT}$) durch die vom zweiten Sendeempfänger (2) umfaßten Bauelemente und zugleich Messen des Phasenunterschieds eines im ersten Sendeempfänger (1) erzeugten Modulationssignals bezüglich eines im zweiten Sendeempfänger (2) erzeugten und über den Übertragungskanal (3) übermittelten Modulationssignals im ersten Sendeempfänger (1),

d) Übertragung der in den Schritten b) und c) gewonnenen Meß- und Kalibrierdaten zum ersten Sendeempfänger (1), und

e) Berechnen der Signallaufzeit ($t_R$) über den Übertragungskanal (3) mittels der in den Schritten b) und c) ermittelten Meßwerte.

**28.** Verfahren nach Anspruch 26 oder 27,
umfassend folgende Verfahrensschritte zum Kalibrieren:

- Übertragen eines Signals mit einer unmodulierten Trägerfrequenz über den Übertragungskanal (3),
- Mischen des unmodulierten Signals mit einem modulierten, lokal erzeugten Signal auf eine Zwischenfrequenzebene, und
- Bestimmen einer Phasenabweichung zwischen dem lokal erzeugten Modulationssignal und dem Modulationssignal auf der Zwischenfrequenzebene.

**29.** Verfahren nach einem der Ansprüche 26 bis 28,
umfassend folgende Verfahrensschritte zum Abstimmen eines Zeitpunktes zum Beginn einer Signal-Laufzeitmessung über den Übertragungskanal (3) zwischen erstem und zweitem Sendeempfänger (1, 2):

- Übertragen einer Start-Botschaft vom ersten zum zweiten Sendeempfänger (1, 2) einschließlich einer Frequenzinformation zum vom ersten Sendeempfänger (1) verwendeten oder zum vom zweiten Sendeempfänger (2) zu verwendenden Modulationssignal für die Signal-Laufzeitmessung.

**30.** Verfahren nach einem der Ansprüche 26 bis 28,
umfassend folgende Verfahrensschritte zum Kompensieren eines Frequenzoffsets zwischen der Frequenz des vom ersten Sendeempfänger (1) verwendeten Modulationssignals und der Frequenz des vom zweiten Sendeempfänger (2) verwendeten Modulationssignals:

- Durchführen einer ersten Messung der Signallaufzeit ($t_R$) über den Übertragungskanal (3) und Ermitteln eines ersten Messwerts ($t_{M1}$) mit einem Messbeginn im ersten Sendeempfänger (1),
- Durchführen einer zweiten Messung der Signallaufzeit (tR) über den Übertragungskanal (3) einschließlich Ermitteln eines zweiten Messwerts ($t_{M2}$) mit einem Messbeginn im zweiten Sendeempfänger (2) und
- Berechnen des korrigierten Messergebnisses durch Bilden des arithmetischen Mittelwerts von erstem und zweitem Messwert ($t_{M1}$, $t_{M2}$).

**31.** Verfahren nach einem der Ansprüche 26 bis 30,
umfassend zumindest einen der folgenden Verfahrensschritte:

- Verändern der Phasenlage des im ersten Sendeempfänger (1) erzeugten Modulationssignals um einen zufälligen Betrag zu zufällig ausgewählten Zeitpunkten,

- Verändern der Phasenlage des im zweiten Sendeempfänger (2) erzeugten Modulationssignals um einen zufälligen Betrag zu zufällig ausgewählten Zeitpunkten.

**32.** Verfahren nach einem der Ansprüche 26 bis 31,
umfassend folgende Verfahrensschritte:

- Übermitteln des Zeitpunktes zum Beginn einer Signal-Laufzeitmessung innerhalb von und verteilt über eine Sequenz von Nutzdaten, die vom ersten an den zweiten Sendeempfänger (1, 2) gesendet werden.

**33.** Verfahren nach einem der Ansprüche 26 bis 32,
umfassend folgende Verfahrensschritte:

- Aufteilen der zum Messen des Phasenunterschieds erforderlichen Daten in eine Vielzahl von Teilsequenzen und Übertragen der Teilsequenzen über den Übertragungskanal (3) abwechselnd mit Nutzdaten oder zufällig erzeugten Daten.

**34.** Verfahren nach einem der Ansprüche 26 bis 33,
umfassend folgende Verfahrensschritte:

- Verändern der Frequenz der Modulationssignale jeweils zugleich im ersten und im zweiten Sendeempfänger (1, 2) in festlegbaren Zeitabständen um einen jeweils festlegbaren Frequenzbetrag.

**35.** Verfahren nach einem der Ansprüche 26 bis 34,
umfassend folgende Verfahrensschritte:

- Einfügen einer geringen Frequenzabweichung der Frequenz des erzeugten Modulationssignals,
- Berechnen der Signallaufzeit ($t_R$) über den Übertragungskanal unter Berücksichtigung der eingefügten Frequenzabweichung,
- Wiederholtes Verändern der Frequenzabweichung in regelmäßigen oder unregelmäßigen Zeitabständen.

**36.** Verfahren nach einem der Ansprüche 26 bis 35,
umfassend folgende Verfahrensschritte:

- Durchführen einer ersten Laufzeitmessung über den Übertragungskanal (3) bei einer ersten Modulationsfrequenz ($f_M$),
- Durchführen einer zweiten Laufzeitmessung über den Übertragungskanal (3) bei einer zweiten, geringeren Modulationsfrequenz ($f_{MX}$),
- Verknüpfen der Ergebnisse von erster und zweiter Laufzeitmessung.

**37.** Verfahren nach einem der Ansprüche 25 bis 36, **gekennzeichnet durch** die Übertragung von Daten auf dem Übertragungskanal (3) mittels eines Frequenzsprungverfahrens.

**Claims**

**1.** A communication system comprising a first transceiver (1) and a second transceiver (2) coupled to each other in a bidirectional manner by means of a transmission channel (3) and being spaced apart by a distance d, wherein a device (14, 15, 22, 34, 24) is provided for measuring the signal propagation delay ($t_R$) via the transmission channel (3) for limiting the range of the communication system, the first and second transceivers (1, 2) each comprising the following features:

- a sending branch (4, 6) designed for sending a signal modulated with a modulation signal via the transmission channel (3) to the opposite terminal (2, 1) and a receiving branch (5, 7) for receiving a signal sent by the opposite terminal (2, 1) and modulated with the respective modulation signal of the opposite terminal and
- a phase comparator (14, 15) for determining a time interval ($t_B$, $t_T$) corresponding to the phase deviation between the sent modulation signal and the received modulation signal, the measured value of the time interval ($t_T$) being transferred from the second transceiver to the first transceiver,
- the opposite terminal being the respectively other transceiver (2, 1) from the group comprising the first and second transceivers (1, 2),

- the device (14, 15, 22, 34, 24) for measuring the signal propagation delay ($t_R$) via the transmission channel (3) comprising the phase comparators (14, 15) of the first and second transceivers (1, 2),

- the modulation signals of the transceivers having the same modulation frequency or at least a known frequency deviation existing between the two modulation frequencies,

- and the wavelength of the fundamental wave of the modulation frequency of said signal being larger than the distance d to be measured,

**characterized in that**

the modulation signals of the first and second transceivers have a random phasing with respect to each other.

2. The communication system according to claim 1,
   **characterized in that**
   the communication system comprises a means (25) for calculating the distance (d) from the first transceiver to the second transceiver (1, 2) depending on the signal propagation delay ($t_R$), which is coupled to the device for measuring the signal propagation delay and puts the communication system into a first state if the calculated distance (d) is smaller than or equal to a definable distance ($d_L$) and puts the communication system into a second state if the calculated distance (d) is larger than the predefined distance ($d_L$) .

3. The communication system according to claim 2,
   **characterized in that**
   any transmission of useful data via the transmission channel (3) or via a separate useful data channel coupling the first and second transceivers (1, 2) for the transmission of useful data is performed depending on whether the communication system has been put into the first or second state.

4. The communication system according to any of the claims 1 to 3,
   **characterized in that**
   the communication system is a contactless identification system and/or a contactless access control system, comprising a comparator coupled to the first transceiver (1) and comparing an identification code retrieved by the second transceiver (2) by means of a useful data transmission with a group of predetermined identification codes.

5. The communication system according to any of the claims 1 to 4,
   **characterized in that**
   the first transceiver (1) is a base station and the second transceiver (2) is a mobile part.

6. The communication system according to any of the claims 1 to 4,
   **characterized in that**
   the first transceiver (1) and the second transceiver (2) are a mobile part each.

7. The communication system according to any of the claims 1 to 6,
   **characterized in that**
   the communication system comprises a means (14, 15, 22, 23) for measuring the propagation time by detecting the roundtrip delay by means of an active distance radar unit.

8. The communication system according to any of the claims 1 to 7,
   **characterized in that**
   the communication system comprises a first measuring system (14, 22) for measuring a first signal propagation delay from the first transceiver (1) to the second transceiver (2), a second measuring system (15, 23) for measuring a second signal propagation delay from the second transceiver (2) to the first transceiver (1), and an evaluation unit (24) determining the signal propagation delay ($t_R$) via the transmission channel (3) from the first and second signal propagation delays.

9. The communication system according to claim 8,
   **characterized in that**
   the signal propagation delay ($t_R$) via the transmission channel (3) is determined in the evaluation unit (24) by establishing the arithmetic average value according to $t_R = 1/2 (t1 + t2)$, where $t_R$ is the signal propagation delay ($t_R$) via the transmission channel (3), t1 is the first signal propagation delay and t2 is the second signal propagation delay, and **in that** the distance (d) between the first transceiver (1) and the second transceiver (2) is determined according to the relation: the distance (d) is equal to the product of signal propagation delay (tR) and speed of light (c).

10. The communication system according to any of the claims 8 or 9,
**characterized in that**
the evaluation unit determines the signal propagation delay $t_R$ by using the relations $t_R = 1/2 (t_B - T_M + t_T)$ if $t_B \geq (T_M - t_T)$, and $t_R = 1/2 (t_B + t_T)$ if $t_B < (T_M - t_T)$, with the period length $T_M$ being equal to the period length of the modulation signal, and $t_B$, $t_T$ being equal to the time intervals corresponding to the phase deviations between the sent modulation signal and the received modulation signal, which are determined by the phase comparators (14, 15) in the first and second transceivers (1, 2), respectively, a signal propagation delay occurring in the second transceiver (2) corresponding to an integer multiple of the period length $T_M$.

11. The communication system according to any of the claims 1 to 10,
**characterized in that**
the first and second transceivers (1, 2) each comprise a modulation generator (12, 13) for generating the modulation signal, which has its output side coupled to the sending branch (4, 6) in a connectable and disconnectable manner, on the one hand, and coupled to the phase comparator (14, 15), on the other hand.

12. The communication system according to any of the claims 1 to 11,
**characterized in that**
a calibration means is provided for detecting signal propagation delays ($t_{GB}$, $t_{GT}$) in the sending and receiving branches (4, 6; 5, 7) of the transceivers (1, 2).

13. The communication system according to claim 12,
**characterized in that**
the receiving branch (5, 7) of the transceivers (1, 2) comprises a downward frequency mixer (31, 37) each which, in a calibration mode of the communication system, mixes a local oscillator signal which has been generated by the opposite terminal (2, 1) and transmitted by the latter in an unmodulated manner, with a modulated signal generated in the sending branch (4, 6),
the phase comparator (14, 15) in the calibration mode comparing the phasing of a modulated signal generated in the sending branch with the phasing of a signal provided at an output of the downward mixer (31, 37), which signal is derived from the local oscillator signal generated by the opposite terminal (2, 1) and from the modulated signal generated in the sending branch (4, 6).

14. The communication system according to claim 12,
**characterized in that**
the transceivers (1, 2) each comprise an attenuator (40, 43) with adjustable attenuation, which in a calibration mode of the transceivers (1, 2) couples the output side of the sending branch (4, 6) to the input side of the receiving branch (5, 7).

15. The communication system according to any of the claims 1 to 14,
**characterized in that**
a heterodyne receiver (16, 17) is provided in the receiving branch (5, 7) and comprises a downward mixer (31, 37) mixing a received signal down to an intermediate frequency level with downstream limiting amplifier (32, 38) and frequency discriminator (33, 39).

16. The communication system according to any of the claims 1 to 15,
**characterized in that**
the phase comparator (14, 15) is a 4-quadrant phase detector.

17. The communication system according to claim 16,
**characterized in that**
the 4-quadrant phase detector (14, 15) comprises two multipliers such that the 4-quadrant phase detector comprises two inputs each designed for supplying complex-valued signals with signal components that are orthogonal to each other, and the multipliers are each built up by means of EXCLUSIVE-OR gates.

18. The communication system according to claim 16 or 17,
**characterized in that**
a data collection unit (22, 23) is connected to an output of the 4-quadrant phase detector (14, 15) and detects the duty cycle of the signals provided at the output side of the 4-quadrant phase detector (14, 15).

19. The communication system according to any of the claims 1 to 18,
**characterized in that**
the first transceiver (1) comprises an antenna (18) with directional antenna characteristics which is coupled to the sending and receiving branches (4, 5) thereof, and **in that** the second transceiver (2) comprises an antenna (19) with non-directional characteristics which is coupled to the sending and receiving branches (6, 7) thereof.

20. The communication system according to any of the claims 1 to 19,
**characterized in that**
the transceivers (1, 2) each comprise a duplex filter (20, 21) for coupling the antenna (18, 19) to the sending and receiving branches (4, 5, 6, 7).

21. The communication system according to any of the claims 1 to 19,
**characterized in that**
the transceivers (1, 2) each comprise a high-frequency switch (21, 22) for coupling the antenna (18, 19) to the sending and receiving branches (4, 5, 6, 7).

22. The communication system according to any of the claims 1 to 21,
**characterized in that**
the transceivers (1, 2) comprise a shift register which is operated in an overclocked manner and serves for generating an adjustable phasing of the modulation signal.

23. The communication system according to any of the claims 1 to 22,
**characterized in that**
the second transceiver (2) is a portable electronic label.

24. The communication system according to claim 2 or 3,
**characterized in that**
the communication system comprises a display unit (26) for displaying the value of the calculated distance (d).

25. A method of operating a communication system comprising a first transceiver (1) and a second transceiver (2) which are coupled to each other in a bidirectional manner via a transmission channel (3) and are spaced apart by a distance d,
comprising the following steps:

- measuring the signal propagation delay ($t_R$) via the transmission channel (3) for limiting the range of the communication system,
at the same time carrying out a phase comparison in the first transceiver (1) for determining a phase deviation between a modulation signal sent by the first transceiver (1) and received by the first transceiver (1) and carrying out a phase comparison in the second transceiver (2) for determining a phase deviation between a modulation signal sent by the second transceiver (2) and received by the second transceiver (2), a measured value ($t_T$) depending on the determined phase deviation being transferred from the second transceiver to the first transceiver, in which the transmission of data is carried out on the transmission channel (3) by means of a time duplex method or a frequency duplex method, wherein
- the modulation signals of the transceivers have the same modulation frequency or at least a known frequency deviation exists between the two modulation frequencies,
- with a wavelength of the fundamental wave of the modulation frequency of said signal which is longer than the distance d to be measured,

**characterized in that**
the modulation signals of the first transceiver and the second transceivers have a random phasing with respect to each other.

26. The method according to claim 25,
comprising the following steps for measuring the propagation time via the transmission channel (3):

a) attuning a point in time at the beginning of a signal propagation delay measuring process via the transmission channel (3) between the first and second transceivers (1, 2),

b) calibrating the second transceiver (2) including measuring the signal propagation delay ($t_{GT}$) through the components comprised in the second transceiver,

c) measuring the phase difference of a modulation signal generated in the second transceiver (2) with respect to a modulation signal generated in the first transceiver (1) and transferred via the transmission channel (3) in the second transceiver (2),

d) measuring the phase difference of a modulation signal generated in the first transceiver (1) with respect to a modulation signal generated in the second transceiver (2) and transferred via the transmission channel (3) in the first transceiver (1),

e) calibrating the first transceiver (1) including measuring the signal propagation delay ($t_{GB}$) through the components comprised in the first transceiver (1),

f) transmitting the measured data and calibration data obtained in steps b) and c) to the first transceiver (1), and

g) calculating the signal propagation delay ($t_R$) via the transmission channel (3) by means of the measured values determined in steps b) to e).

27. The method according to claim 25,

comprising the following steps for measuring the propagation delay via the transmission channel (3):

a) attuning a point in time at the beginning of a signal propagation delay measuring process via the transmission channel (3) between the first and second transceivers (1, 2),

b) calibrating the first transceiver (1) including measuring the signal propagation delay ($t_{GB}$) through the components comprised in the first transceiver (1) and at the same time measuring the phase difference of a modulation signal generated in the second transceiver (2) with respect to a modulation signal generated in the first transceiver (1) and transferred via the transmission channel (3) in the second transceiver (2),

c) calibrating the second transceiver (2) including measuring the signal propagation delay ($t_{GT}$) through the components comprised in the second transceiver (2) and at the same time measuring the phase difference of a modulation signal generated in the first transceiver (1) with respect to a modulation signal generated in the second transceiver (2) and transferred via the transmission channel (3) in the first transceiver (1),

d) transmitting the measured data and calibration data obtained in steps b) and c) to the first transceiver (1), and

e) calculating the signal propagation delay ($t_R$) via the transmission channel (3) by means of the measured values determined in steps b) and c).

28. The method according to claim 26 or 27,

comprising the following steps for calibrating:

- transmitting a signal with an unmodulated carrier frequency via the transmission channel (3),

- mixing the unmodulated signal with a modulated, locally generated signal to an intermediate frequency level, and

- determining a phase deviation between the locally generated modulation signal and the modulation signal on the intermediate frequency level.

29. The method according to any of the claims 26 to 28, comprising the following steps for attuning a point in time at the beginning of a signal propagation delay measuring process via the transmission channel (3) between the first and second transceivers (1, 2):

- transmitting a start message from the first transceiver to the second transceiver (1, 2) including frequency information regarding the modulation signal used by the first transceiver (1) or to be used by the second transceiver (2) for the signal propagation delay measuring process.

30. The method according to any of the claims 26 to 28, comprising the following steps for compensating a frequency offset between the frequency of the modulation signal used by the first transceiver (1) and the frequency of the modulation signal used by the second transceiver (2):

- carrying out a first process of measuring the signal propagation delay ($t_R$) via the transmission channel (3) and determining a first measured value ($t_{M1}$) with a beginning of the measurement in the first transceiver (1),

- carrying out a second process of measuring the signal propagation delay (tR) via the transmission channel (3) including determining a second measured value ($t_{M2}$) with a beginning of the measurement in the second transceiver (2) and

- calculating the corrected measuring result by establishing the arithmetic average value from the first and second measured values ($t_{M1}$, $t_{M2}$).

**31.** The method according to any of the claims 26 to 30, comprising at least one of the following steps:

- changing the phasing of the modulation signal generated in the first transceiver (1) by a random amount and at randomly selected points in time,
- changing the phasing of the modulation signal generated in the second transceiver (2) by a random amount and at randomly selected points in time.

**32.** The method according to any of the claims 26 to 31, comprising the following steps:

- transferring the point in time at the beginning of a signal propagation delay measuring process within and distributed among a sequence of useful data sent from the first to the second transceiver (1, 2).

**33.** The method according to any of the claims 26 to 32, comprising the following steps:

- dividing the data required for measuring the phase difference into a plurality of partial sequences and transmitting the partial sequences via the transmission channel (3) alternately together with useful data or randomly generated data.

**34.** The method according to any of the claims 26 to 33, comprising the following steps:

- changing the frequency of the modulation signals simultaneously in the first and second transceivers (1, 2) in definable time intervals by a frequency amount which can be defined in each case.

**35.** The method according to any of the claims 26 to 34, comprising the following steps:

- inserting a small frequency deviation of the frequency of the generated modulation signal,
- calculating the signal propagation delay ($t_R$) via the transmission channel in consideration of the inserted frequency deviation,
- repeatedly changing the frequency deviation in regular or irregular time intervals.

**36.** The method according to any of the claims 26 to 35, comprising the following steps:

- carrying out a first process of measuring the propagation delay via the transmission channel (3) at a first modulation frequency ($f_M$),
- carrying out a second process of measuring the propagation delay via the transmission channel (3) at a second, lower modulation frequency ($f_{Mx}$),
- combining the results of the first and second processes of measuring the propagation delay.

**37.** The method according to any of the claims 25 to 36, **characterized by** the transmission of data on the transmission channel (3) by means of a frequency jump method.

**Revendications**

**1.** Système de communication comprenant un premier émetteur-récepteur (1) et un deuxième émetteur-récepteur (2), lesquels sont couplés l'un à l'autre de manière bidirectionnelle par un canal de transmission (3) et sont à une distance d l'un de l'autre, où
un dispositif (14, 15, 22, 34, 24) destiné à mesurer le temps de transit de signal ($t_R$) via le canal de transmission (3) est prévu pour limiter la portée du système de communication, et tant le premier que le deuxième émetteur-récepteur (1, 2) présentent chacun les caractéristiques suivantes :

- une branche d'émission (4, 6) conçue pour émettre un signal modulé avec un signal de modulation via le canal de transmission (3) au poste opposé (2, 1) et une branche de réception (5, 7) destinée à recevoir un signal émis par le poste opposé (2,1) et modulé avec le signal de modulation respectif du poste opposé, et
- un dispositif de comparaison de phase (14, 15) destiné à déterminer un intervalle de temps ($t_B$, $t_T$) correspondant à l'écart de phase entre le signal de modulation émis et le signal de modulation reçu, la valeur de mesure de l'intervalle de temps ($t_T$) étant transmise du deuxième au premier émetteur-récepteur,
- le poste opposé étant respectivement l'autre émetteur-récepteur (2, 1) de l'ensemble comportant le premier et le deuxième émetteur-récepteur (1, 2),
- le dispositif (14, 15, 22, 34, 24) destiné à mesurer le temps de transit de signal ($t_R$) via le canal de transmission (3) comporte les dispositifs de comparaison de phase (14, 15) du premier et du deuxième émetteur-récepteur (1, 2),
- les signaux de modulation des émetteurs-récepteurs présentent la même fréquence de modulation ou il existe au moins un écart de fréquence connu entre les deux fréquences de modulation,
- et la longueur d'onde de l'onde de base de la fréquence de modulation de ce signal est plus grande que la distance d à mesurer,

**caractérisé en ce que**

les signaux de modulation du premier et du deuxième émetteur-récepteur ont une position de phase aléatoire l'un par rapport à l'autre.

2. Système de communication selon la revendication 1,
**caractérisé en ce que**
le système de communication présente un moyen (25) destiné à calculer la distance (d) du premier par rapport au deuxième émetteur-récepteur (1, 2) en fonction du temps de transit de signal ($t_R$), qui est couplé au dispositif destiné à mesurer le temps de transit de signal et qui met le système de commutation dans un premier état lorsque la distance calculée (d) est inférieure ou égale à une distance spécifiable ($d_L$) et met le système de communication dans un deuxième état lorsque la distance calculée (d) est supérieure à la distance spécifiée ($d_L$) .

3. Système de communication selon la revendication 2,
**caractérisé en ce que**
une transmission de données utiles via le canal de transmission (3) ou via un canal de données utiles distinct qui couple le premier et le deuxième émetteur-récepteur (1, 2) pour la transmission de données utiles, s'effectue en fonction du fait que le système de communication soit mis dans le premier ou dans le deuxième état.

4. Système de communication selon l'une des revendications 1 à 3,
**caractérisé en ce que**
le système de communication est un système d'identification sans contact et/ou un système de contrôle d'accès sans contact, comprenant un dispositif de comparaison qui est couplé avec le premier émetteur-récepteur (1) et qui compare à un ensemble de codes d'identification prédéterminés un code d'identification demandé par le deuxième émetteur-récepteur (2) moyennant une transmission de données utiles.

5. Système de communication selon l'une des revendications 1 à 4,
**caractérisé en ce que**
le premier émetteur-récepteur (1) est une station fixe et le deuxième émetteur-récepteur (2) est un élément mobile.

6. Système de communication selon l'une des revendications 1 à 4,
**caractérisé en ce que**
le premier émetteur-récepteur (1) et le deuxième émetteur-récepteur (2) sont chacun un élément mobile.

7. Système de communication selon l'une des revendications 1 à 6,
**caractérisé en ce que**
le système de communication comprend un moyen destiné à mesurer le temps de transit (14, 15, 22, 23) par saisie du temps de circulation par radar de distance actif.

8. Système de communication selon l'une des revendications 1 à 7,
**caractérisé en ce que**
le système de communication comprend un premier système de mesure (14, 22) destiné à mesurer un premier temps de transit de signal du premier émetteur-récepteur (1) au deuxième émetteur-récepteur (2), un deuxième système de mesure (15, 23) destiné à mesurer un deuxième temps de transit de signal du deuxième émetteur-récepteur (2) au premier émetteur-récepteur (1) et une unité d'évaluation (24) qui détermine, à partir du premier et du deuxième temps de transit de signal, le temps de transit de signal ($t_R$) via le canal de transmission (3).

9. Système de communication selon la revendication 8,

**caractérisé en ce que**

le temps de transit de signal ($t_R$) via le canal de transmission (3) est déterminé dans l'unité d'évaluation (24) par formation de la moyenne arithmétique suivant $t_R$ = 1/2 (t1 + t2), avec $t_R$ égale temps de transit de signal ($t_R$) via le canal de transmission (3), t1 égale premier temps de transit de signal et t2 égale deuxième temps de transit de signal, et **en ce que** la distance (d) entre le premier émetteur-récepteur (1) et le deuxième émetteur-récepteur (2) est déterminée selon le rapport distance (d) égale produit du temps de transit de signal ($t_R$) et de la vitesse de la lumière (c).

**10.** Système de communication selon l'une des revendications 8 ou 9,

**caractérisé en ce que**

l'unité d'évaluation détermine le temps de transit de signal $t_R$ en utilisant les rapports $t_R$ = 1/2 ($t_B$ - $T_M$ + $t_T$), si $t_B \geq$ ($T_M$ - $t_T$) et $t_R$ = 1/2 ($t_B$ + $t_T$) sont vérifiés, si $t_B$ < ($T_M$ - $t_T$) est vérifié, où la durée de période $T_M$ est égale à la durée de période du signal de modulation et $t_B$, $t_T$ sont les intervalles de temps correspondants aux écarts de phase entre le signal de modulation émis et le signal de modulation reçu, lesquels sont déterminés par les dispositifs de comparaison de phase (14, 15) dans le premier ou dans le deuxième émetteur-récepteur (1, 2), sachant qu'un temps de transit de signal intervenant dans le deuxième émetteur-récepteur (2) équivaut à un multiple entier de la durée de période $T_M$.

**11.** Système de communication selon l'une des revendications 1 à 10,

**caractérisé en ce que**

le premier et le deuxième émetteur-récepteur (1, 2) présentent chacun un générateur de modulation (12, 13) destiné à générer le signal de modulation, qui est couplé en sortie d'une part avec la branche d'émission (4, 6) de façon connectable et déconnectable et d'autre part avec le dispositif de comparaison de phase (14, 15).

**12.** Système de communication selon l'une des revendications 1 à 11,

**caractérisé en ce que**

un dispositif de calibrage est prévu pour la saisie de temps de transit de signal ($t_{GB}$, $t_{GT}$) dans les branches d'émission et de réception (4, 6 ; 5, 7) des émetteurs-récepteurs (1, 2) .

**13.** Système de communication selon la revendication 12,

**caractérisé en ce que**

la branche de réception (5, 7) des émetteurs-récepteurs (1, 2) présente respectivement un mélangeur abaisseur de fréquence (31, 37) qui, dans un mode de fonctionnement de calibrage du système de communication, mélange un signal d'oscillateur local généré par le poste opposé (2, 1) et transmis de manière non modulée avec un signal modulé généré dans la branche d'émission (4, 6),

sachant que le dispositif de comparaison de phase (14, 15) compare, dans le mode de fonctionnement de calibrage, les positions de phase d'un signal modulé généré dans la branche d'émission à la position de phase d'un signal fourni à la sortie du mélangeur abaisseur (31, 37), lequel est dérivé du signal d'oscillateur local généré par le poste opposé (2, 1) et du signal modulé généré dans la branche d'émission (4, 6).

**14.** Système de communication selon la revendication 12,

**caractérisé en ce que**

les émetteurs-récepteurs (1, 2) présentent chacun un élément d'atténuation (40, 43) à atténuation réglable qui, dans un mode de fonctionnement de calibrage de l'émetteur-récepteur (1, 2), couple la branche d'émission (4, 6) côté sortie avec la branche de réception (5, 7) côté entrée.

**15.** Système de communication selon l'une des revendications 1 à 14,

**caractérisé en ce que**

un récepteur hétérodyne (16, 17) est prévu dans la branche de réception (5, 7), comportant un mélangeur abaisseur (31, 37) qui mélange un signal reçu en l'abaissant à un niveau de fréquence intermédiaire avec amplificateur limitatif placé en aval (32, 38) et discriminateur de fréquence (33, 39).

**16.** Système de communication selon l'une des revendications 1 à 15,

**caractérisé en ce que**

le dispositif de comparaison de phase (14, 15) est un détecteur de phase à quatre quadrants.

**17.** Système de communication selon la revendication 16,

**caractérisé en ce que**

le détecteur de phase à quatre quadrants (14, 15) comprend deux multiplicateurs de telle façon que le détecteur de phase à quatre quadrants présente deux entrées conçues chacune pour l'amenée de signaux à valeur complexe à composantes de signal orthogonales l'une par rapport à l'autre et les multiplicateurs sont réalisés chacun au moyen de portes OU exclusif.

18. Système de communication selon la revendication 16 ou 17,
   **caractérisé en ce que**
   une unité de saisie de données (22, 23) qui saisit le rapport de balayage des signaux fournis au niveau du détecteur de phase à quatre quadrants (14, 15) côté sortie est raccordée à une sortie du détecteur de phase à quatre quadrants (14, 15).

19. Système de communication selon l'une des revendications 1 à 18,
   **caractérisé en ce que**
   le premier émetteur-récepteur (1) comprend une antenne (18) ayant une caractéristique d'antenne dirigée, qui est raccordée à sa branche d'émission et de réception (4, 5), et **en ce que**
   le deuxième émetteur-récepteur (2) comprend une antenne (19) ayant une caractéristique non dirigée, qui est raccordée à sa branche d'émission et de réception (6, 7).

20. Système de communication selon l'une des revendications 1 à 19,
   **caractérisé en ce que**
   les émetteurs-récepteurs (1, 2) présentent chacun un filtre duplex (20, 21) destiné à coupler une antenne (18, 19) à une branche d'émission et de réception (4, 5, 6, 7).

21. Système de communication selon l'une des revendications 1 à 19,
   **caractérisé en ce que**
   les émetteurs-récepteurs (1, 2) présentent chacun un commutateur haute fréquence (21, 22) destiné à coupler une antenne (18, 19) à une branche d'émission et de réception (4, 5, 6, 7).

22. Système de communication selon l'une des revendications 1 à 21,
   **caractérisé en ce que**
   les émetteurs-récepteurs (1, 2) présentent un registre à décalage à fonctionnement surcadencé, afin de générer une position de phase réglable du signal de modulation.

23. Système de communication selon l'une des revendications 1 à 22,
   **caractérisé en ce que**
   le deuxième émetteur-récepteur (2) est une étiquette électronique portative.

24. Système de communication selon la revendication 2 ou 3,
   **caractérisé en ce que**
   le système de communication comprend une unité d'affichage (26) pour afficher la valeur de la distance calculée (d).

25. Procédé d'exploitation d'un système de communication comprenant un premier émetteur-récepteur (1) et un deuxième émetteur-récepteur (2), lesquels sont couplés l'un à l'autre de manière bidirectionnelle par un canal de transmission (3) et sont à une distance d l'un de l'autre, comportant les étapes de procédé suivantes :

   - mesure du temps de transit de signal ($t_R$) via le canal de transmission (3) afin de limiter la portée du système de communication,
   tout en effectuant une comparaison de phase dans le premier émetteur-récepteur (1) pour déterminer un écart de phase entre un signal de modulation émis par le premier émetteur-récepteur (1) et un signal de modulation reçu par le premier émetteur-récepteur (1) et en effectuant une comparaison de phase dans le deuxième émetteur-récepteur (2) pour déterminer un écart de phase entre un signal de modulation émis par le deuxième émetteur-récepteur (2) et un signal de modulation reçu par le deuxième émetteur-récepteur (2), une valeur de mesure ($t_T$) dépendant de l'écart de phase déterminé étant transmise du deuxième au premier émetteur-récepteur,
   dans lequel la transmission de données sur le canal de transmission (3) s'effectue moyennant un procédé duplex temporel ou moyennant un procédé duplex fréquentiel, sachant que
   - les signaux de modulation des émetteurs-récepteurs présentent la même fréquence de modulation ou il existe au moins un écart de fréquence connu entre les deux fréquences de modulation,

- avec une longueur d'onde de l'onde de base de la fréquence de modulation de ce signal qui est plus longue que la distance d à mesurer,

**caractérisé en ce que**

les signaux de modulation du premier et du deuxième émetteur-récepteur ont une position de phase aléatoire l'un par rapport à l'autre.

26. Procédé selon la revendication 25,
comportant les étapes de procédé suivantes pour la mesure de temps de transit via le canal de transmission (3) :

a) arrangement d'un moment pour le début d'une mesure de temps de transit de signal via le canal de transmission (3) entre le premier et le deuxième émetteur-récepteur (1, 2),

b) calibrage du deuxième émetteur-récepteur (2) y compris mesure du temps de transit de signal ($t_{GT}$) via les composants compris par le deuxième émetteur-récepteur,

c) mesure de la différence de phase d'un signal de modulation généré dans le deuxième émetteur-récepteur (2) eu égard à un signal de modulation généré dans le premier émetteur-récepteur (1) et transmis via le canal de transmission (3) dans le deuxième émetteur-récepteur (2),

d) mesure de la différence de phase d'un signal de modulation généré dans le premier émetteur-récepteur (1) eu égard à un signal de modulation généré dans le deuxième émetteur-récepteur (2) et transmis via le canal de transmission (3) dans le premier émetteur-récepteur (1),

e) calibrage du premier émetteur-récepteur (1) y compris mesure du temps de transit de signal ($t_{GT}$) via les composants compris par le premier émetteur-récepteur (1),

f) transmission des données de mesure et de calibrage acquises aux étapes b) et c) au premier émetteur-récepteur (1), et

g) calcul du temps de transit de signal ($t_R$) via le canal de transmission (3) moyennant les valeurs de mesure déterminées aux étapes b) à e) .

27. Procédé selon la revendication 25,
comprenant les étapes de procédé suivantes pour la mesure de temps de transit via le canal de transmission (3) :

a) arrangement d'un moment pour le début d'une mesure de temps de transit de signal via le canal de transmission (3) entre le premier et le deuxième émetteur-récepteur (1, 2),

b) calibrage du premier émetteur-récepteur (1) y compris mesure du temps de transit de signal ($t_{GT}$) via les composants compris par le premier émetteur-récepteur (1) et en même temps mesure de la différence de phase d'un signal de modulation généré dans le deuxième émetteur-récepteur (2) eu égard à un signal de modulation généré dans le premier émetteur-récepteur (1) et transmis via le canal de transmission (3), dans le deuxième émetteur-récepteur (2),

c) calibrage du deuxième émetteur-récepteur (2) y compris mesure du temps de transit de signal ($t_{GT}$) via les composants compris par le deuxième émetteur-récepteur (2) et en même temps mesure de la différence de phase d'un signal de modulation généré dans le premier émetteur-récepteur (1) eu égard à un signal de modulation généré dans le deuxième émetteur-récepteur (2) et transmis via le canal de transmission (3) dans le premier émetteur-récepteur (1),

d) transmission des données de mesure et de calibrage acquises aux étapes b) et c) au premier émetteur-récepteur (1), et

e) calcul du temps de transit de signal ($t_R$) via le canal de transmission (3) moyennant les valeurs de mesure déterminées aux étapes b) et c).

28. Procédé selon la revendication 26 ou 27,
comportant les étapes de procédé suivantes pour le calibrage :

- transmission d'un signal avec une fréquence porteuse non modulée via le canal de transmission (3),

- mélange du signal non modulé avec un signal modulé généré localement en l'amenant à un niveau de fréquence intermédiaire, et

- détermination d'un écart de phase entre le signal de modulation généré localement et le signal de modulation au niveau de fréquence intermédiaire.

29. Procédé selon l'une des revendications 26 à 28, comportant les étapes de procédé suivantes pour l'arrangement d'un moment pour le début d'une mesure de temps de transit de signal via le canal de transmission (3) entre le premier et le deuxième émetteur-récepteur (1, 2) :

- transmission d'un message de démarrage du premier au deuxième émetteur-récepteur (1, 2) y compris d'une information fréquentielle relative au signal de modulation employé par le premier émetteur-récepteur (1) ou relative au signal de modulation à employer par le deuxième émetteur-récepteur (2) pour la mesure de temps de transit de signal.

**30.** Procédé selon l'une des revendications 26 à 28, comportant les étapes de procédé suivantes pour la compensation d'un décalage de fréquence entre la fréquence du signal de modulation employé par le premier émetteur-récepteur (1) et la fréquence du signal de modulation employé par le deuxième émetteur-récepteur (2) :

- exécution d'une première mesure du temps de transit de signal ($t_R$) via le canal de transmission (3) et détermination d'une première valeur de mesure ($t_{M1}$) avec un début de mesure dans le premier émetteur-récepteur (1),
- exécution d'une deuxième mesure du temps de transit de signal ($t_R$) via le canal de transmission (3) y compris détermination d'une deuxième valeur de mesure ($t_{M2}$) avec un début de mesure dans le deuxième émetteur-récepteur (2) et
- calcul du résultat de mesure corrigé par formation de la moyenne arithmétique de la première et de la deuxième valeur de mesure ($t_{M1}$, $t_{M2}$).

**31.** Procédé selon l'une des revendications 26 à 30, comportant au moins l'une des étapes de procédé suivantes :

- modification de la position de phase du signal de modulation généré dans le premier émetteur-récepteur (1) selon un montant aléatoire à des moments choisis de manière aléatoire,
- modification de la position de phase du signal de modulation généré dans le deuxième émetteur-récepteur (2) selon un montant aléatoire à des moments choisis de manière aléatoire.

**32.** Procédé selon l'une des revendications 26 à 31, comportant les étapes de procédé suivantes :

- transmission du moment du début d'une mesure de temps de transit de signal au sein de et répartie sur une séquence de données utiles qui sont envoyées du premier au deuxième émetteur-récepteur (1, 2).

**33.** Procédé selon l'une des revendications 26 à 32, comportant les étapes de procédé suivantes :

- distribution des données nécessaires pour la mesure de la différence de phase en une multitude de séquences partielles et transmission des séquences partielles via le canal de transmission (3), en alternance avec des données utiles ou des données générées de manière aléatoire.

**34.** Procédé selon l'une des revendications 26 à 33, comportant les étapes de procédé suivantes :

- modification de la fréquence des signaux de modulation dans chaque cas à la fois dans le premier et dans le deuxième émetteur-récepteur (1, 2) à des écarts de temps définissables, selon un montant de fréquence définissable dans chaque cas.

**35.** Procédé selon l'une des revendications 26 à 34, comportant les étapes de procédé suivantes :

- insertion d'un faible écart de fréquence de la fréquence du signal de modulation généré,
- calcul du temps de transit de signal ($t_R$) via le canal de transmission compte tenu de l'écart de fréquence inséré,
- modification répétée de l'écart de fréquence à des écarts de temps réguliers ou irréguliers.

**36.** Procédé selon l'une des revendications 26 à 35, comportant les étapes de procédé suivantes :

- exécution d'une première mesure de temps de transit via le canal de transmission (3) à une première fréquence de modulation ($f_M$),
- exécution d'une deuxième mesure de temps de transit via le canal de transmission (3) à une deuxième fréquence de modulation plus faible ($f_{MX}$),
- association des résultats de la première et de la deuxième mesure de temps de transit.

**37.** Procédé selon l'une des revendications 25 à 36, **caractérisé par** la transmission de données sur le canal de transmission (3) moyennant un procédé de saut de fréquence.

## FIG 1a

Basisstation 1

Aktiver Transponder 2

Radar link

Modulations generator

Modulations schalter

8

$f_M$

$f_M$

RF-Transmitter

$f_{RB}$

12

10

Antenne

18

4

20

14

$f_M$

$\Delta\phi 1$

RF-Receiver

16

5

empfangene Modulation

3

9

Modulations schalter

Modulations generator

19

$f_{RT}$

Antenne

RF-Transmitter

$f_M$

$f_M$

6

11

13

21

7

17

15

RF-Receiver

$f_M$

$\Delta\phi 2$

empfangene Modulation

EP 1 454 163 B1

39

## FIG 1b

## FIG 2

BS — 1     Radar link     TR — 2

3

Distanz d mit Laufzeit $t_R$

Basisstation bez.Ebene     Transponder bez.Ebene

bei $f_M$

$x, t_{Basisstation}$

$t_D$

FM signal

$t_{DEL}$

bei $f_M$

$x, t_{Transponder}$

FM signal

FIG 3

Down-Link: BS sendet, TR empfängt    Up-Link: BS empfängt, TR sendet

$U_{M1}$    $O_1$    t

$U_{M2}$    $t_1$    t

$t_T$

$U_{M3}$    $O_2$    $O_2$    t

$t_2$

$U_{M4}$    t

$t_B$

FIG 4

Down-Link: BS sendet, TR empfängt    Up-Link: BS empfängt, TR sendet

$U_{M1}$    $O_1$    $O_1$    t

$U_{M2}$    $t_1$    t

$t_T$

$U_{M3}$    $O_2$    $O_2$    t

$U_{M4}$    $t_2$    t

$t_B$

EP 1 454 163 B1

## FIG 5

## FIG 6

FIG 7

Basisstation

Aktiver Transponder

Modulations generator 12 — $f_{MB}$ — 0°/90° — 14 — 4QXOR Phasen-Detektor

Modulations generator 13 — $f_{MT}$ — 0°/90° — 15 — 4QXOR Phasen Detektor

Modulations Schalter — $f_M$ — 10

Modulations schalter — $f_M$ — 11

RF Transmitter — Modulierbarer RF Synth. — 28 — RF PA — 29 — $f_{RB}$ — 8

RF Transmitter — Modulierbarer RF Synth. — 34 — RF PA — 35 — $f_{RT}$ — 9

$f_{LO}$

Antenne — 18 — $f_{RB}$ — 4 — 20

Antenne — 19 — 6 — 21 — 7

Radar link — 3

RF Receiver — RF Vor-verstärker — 30 — Mischer — 31 — $f_{IF}$ — IF Limiter — 32 — Frequenz diskriminator — 33 — 16 — 1 — 5

RF Receiver — RF Vor-verstärker — 36 — Mischer — 37 — $f_{IF}$ — IF Limiter — 38 — Frequenz Diskriminator — 39 — 17 — 2

$f_{LO}$

Datenerfassung — 22 — $t_B$

Datenerfassung — 23 — $t_T$

# FIG 8

**Basisstation**

RF Transmitter

Modulierbarer RF Synth.

RF PA

Modulations generator 12

Modulations schalter

$f_M$ 10

28 29

$f_{MB}$

TX Schalter $f_{RB}$ 41

40 4

RF Dämpf.

Radar link

18 19

Antenne Antenne

$f_{RT}$ 6

20 21

LO RF Synth. 46

$f_{LO}$

RF Vor-verstärker

RX Schalter

22

Datenerfassung

$t_B$

0° 90°

14

4QXOR Phasen Detektor

Frequenz Diskriminator

IF Limiter

$f_{IF}$

Mischer 30

33 32 31

16 42 5

RF Receiver

1

**Aktiver Transponder**

RF Transmitter

TX 9 Schalter

RF PA 35

Modulierbarer RF Synth. 34

Modulations schalter

Modulations generator 13

$f_M$ 11

44

43

RF atten.

LO RF Synth. 47

$f_{LO}$

RF vor-Verstärker

IF Limiter

$f_{IF}$

Frequenz Diskriminator

7 45 17

36 Mischer 37 38 39

RX Schalter

RF Receiver

2

$f_{MT}$

23

Datenerfassung

0° 90°

15

4QXOR Phasen detektor

$t_T$

EP 1 454 163 B1

**FIG 9**

$f_{MT}$

0° | 90°

4QXOR
Phasen
detektor

15

Empfangene
Modulation

Mess.
Taktgener.

48

$f_S$

49

UND

Puls
zähler Σ

50

$t_T$

$T_G$

51

Gate
Generator

Daten Differenz Erfassung    23

**FIG 10**

22

Datenerfassung

Mess.
Taktgener.

52

$f_S$

UND

53

Puls
zähler Σ

54

$t_B$

$T_G$

55

Gate
Generator

$f_{MB}$

° 0 | 90°

4QXOR
Phasen
detektor

14

empfangene
Modulation

## FIG 11    TDD Sende-Methode

TR Kalibrierung    TR Messung    BS Messung    BS Kalibrierung
BS Sendet    BS-Sendet    TR-Sendet    TR-Sendet

$f_1$

TR-Empfängt    TR-Empfängt    BS-Empfängt    BS-Empfängt

$f_2$

$f_{IF}$

Sende-Band

BS-IF $f_3$

TR-IF $f_4$

b)    c)    d)    e)

## FIG 12    FDD Sende Methode

BS Kalibrierung & TR Messung    BS Messung & TR Kalibrierung
BS-Sendet    BS-Empfängt

$f_1$

TR Empfängt    TR Sendet

$f_2$

$f_{IF}$

Sende Band

BS-IF $f_3$

TR-IF $f_4$

b)    c)

# FIG 13

Basisstation 1 — Radar link — 2 Aktiver Transponder

- TX Daten
- 56 Modulationsschalter
- Modulations generator / Modulations schalter
- 8 RF-Transmitter $f_{RB}$
- 10 $f_M$
- 12 $f_M$
- 14 $\Delta\phi1$ Phasen-mesung
- empfangene Modulation $f_M$
- 16 RF-Receiver
- 4 / 5 Antenne
- 3
- 57 Daten Demod.
- RX Daten

Aktiver Transponder:
- 58 TX Daten
- Modulations schalter / Modulations generator
- $f_{RT}$ 9 RF-Transmitter
- 11 $f_M$ / 13 $f_M$
- 7 / 6 Antenne
- 17 RF-Receiver
- empfangene modulation $f_M$
- 15 $\Delta\phi2$ Phasen messung
- 59 Daten Demod.
- RX Daten

EP 1 454 163 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1152109 A2
- US 5661460 A
- US 5220332 A